(19) Europäisches Patentamt
European Patent Office
Office européen des brevets

(11) **EP 4 274 341 A1**

(12) **EUROPEAN PATENT APPLICATION**
published in accordance with Art. 153(4) EPC

(43) Date of publication:
**08.11.2023 Bulletin 2023/45**

(21) Application number: **21918645.9**

(22) Date of filing: **15.01.2021**

(51) International Patent Classification (IPC):
**H04W 72/04** $^{(2023.01)}$      **H04W 28/16** $^{(2009.01)}$

(52) Cooperative Patent Classification (CPC):
**H04W 28/16; H04W 72/04**

(86) International application number:
**PCT/CN2021/072326**

(87) International publication number:
**WO 2022/151441 (21.07.2022 Gazette 2022/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **LI, Junyao**
**Shenzhen, Guangdong 518129 (CN)**

• **LI, Chao**
**Shenzhen, Guangdong 518129 (CN)**
• **ZHANG, Lili**
**Shenzhen, Guangdong 518129 (CN)**
• **YANG, Fan**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMMUNICATION METHOD AND APPARATUS**

(57)      Embodiments of this application provide a communication method and a communication apparatus, to implement communication in a plurality of bundled time units including an unavailable time unit, avoid communication interruption, and improve communication efficiency. In the method, a communication apparatus first determines first information indicating that N consecutive time units are configured for sending a first message in a joint transmission manner. To be specific, a receiving device that receives the first message performs joint channel estimation in the N bundled consecutive time units to obtain the first message; and when there are P unavailable time units in the N consecutive time units indicated by the first information, the communication apparatus sends the first message in the joint transmission manner in M consecutive time units different from the P unavailable time units.

FIG. 3

**Description**

**TECHNICAL FIELD**

This application relates to the communications field, and in particular, to a communication method and apparatus.

**BACKGROUND**

In a wireless communication process, due to impact of Doppler effect and multipath effect, a radio signal is prone to fading in a transmission process. As a result, a signal received by a receiving end may be greatly different from a signal transmitted by a transmitting end. Therefore, at the receiving end, the signal usually needs to be processed through channel estimation, to restore, as much as possible, the signal transmitted by the transmitting end.

Currently, joint channel estimation (joint channel estimation) is an implementation of the channel estimation. In an implementation process of the joint channel estimation, the transmitting end may transmit a signal in a plurality of bundled (bundled) time units, and the receiving end performs joint channel estimation in the plurality of bundled time units, to improve channel estimation precision without increasing reference signal overheads.

However, when there is an unavailable (unavailable) time unit due to occupation by another signal (for example, due to static or dynamic configuration) in the plurality of bundled time units, transmission performed by the transmitting end in the unavailable time unit is interrupted. Consequently, the receiving end cannot perform joint channel estimation in the plurality of bundled time units, communication interruption is caused, and communication efficiency is affected.

**SUMMARY**

Embodiments of this application provide a communication method and a communication apparatus, to improve communication efficiency in joint channel estimation.

A first aspect of embodiments of this application provides a communication method. The method is applied to a communication apparatus used as a transmitting end. Specifically, the method may be performed by a terminal device (or a network device), or may be performed by a component (for example, a processor, a chip, or a chip system) of the terminal device (or the network device). In the method, the communication apparatus first determines first information, where the first information indicates that N consecutive time units are configured for sending a first message in a joint transmission manner, and N is an integer greater than 1. Then, the communication apparatus sends the first message in the joint transmission manner in M consecutive time units, where there are P unavailable time units in the N consecutive time units, the M consecutive time units are a part of the N consecutive time units, the M consecutive time units do not include the P unavailable time units, M is an integer greater than 1, and P is an integer greater than 0.

Based on the foregoing technical solution, the communication apparatus first determines the first information indicating that the N consecutive time units are configured for sending the first message in the joint transmission manner. To be specific, a receiving device that receives the first message performs joint channel estimation in the N bundled consecutive time units to obtain the first message; and when there are P unavailable time units in the N consecutive time units indicated by the first information, the communication apparatus sends the first message in the joint transmission manner in the M consecutive time units different from the P unavailable time units. In this way, the first message can be transmitted in the M consecutive time units in the N consecutive time units, and the receiving device may perform joint channel estimation in the M consecutive time units, to implement communication in a plurality of bundled time units including an unavailable time unit, avoid communication interruption, and improve communication efficiency.

Optionally, the joint transmission manner may alternatively be represented in another form, for example, a bundling transmission manner, a cross-slot bundling transmission manner, or a multi-slot DMRS bundling sending manner.

Optionally, the first message may be a data channel/a control channel, data/information, a signal, or the like.

Specifically, the communication apparatus may determine the first information through configuration or preconfiguration.

For example, when the first information is determined through configuration, a signaling indication (for example, a joint channel estimation enabling indication/a joint sending enabling indication, or a directly indicated quantity N of time units for joint channel estimation/joint sending) may be received, to determine that the N consecutive time units are configured for sending the first message in the joint transmission manner. That is, it is determined that, when the receiving device needs to be supported in performing joint channel estimation, sending/transmission performed by the communication apparatus needs to meet at least one of the following: Precoding matrices are consistent, antenna ports are consistent, power control parameters are consistent, phases are consecutive, and both the 1st time unit and the last time unit include a demodulation reference signal DMRS.

For another example, when the communication apparatus performs transmission in the joint transmission manner on an allocated resource, a transmission rule defined on the resource is that when the N consecutive time units are configured for sending the first message in the joint transmission manner, the joint transmission manner meets at least one of the following conditions: Precoding matrices are consistent, antenna ports are consistent, power control parameters are consistent, phases are consecutive, and both the 1st time unit and the last time unit include a demodulation reference signal DMRS.

It should be noted that, in the N consecutive time units, if P is equal to 1, or P is greater than 1 and the P unavailable time units are consecutive in time domain, the M time units may include at least one segment in a time unit before the P unavailable time units and a time unit after the P unavailable time units. If P is greater than 1 and the P unavailable time units are non-consecutive time units, that is, the P unavailable time units include a plurality of segments of unavailable time units, there may be at least one available time unit (for example, M time units) in the plurality of segments of unavailable time units, and the M consecutive time units may include one or more segments other than the P unavailable time units.

In addition, the time unit mentioned in this embodiment of this application may be at different granularities. For example, the time unit may be implemented in a form of a symbol, a slot, a subframe, a frame, or the like. This is not specifically limited herein.

Optionally, the first information may be determined by configuring the first information for the communication apparatus by a network device (an access network device or a core network device), or may be determined by preconfiguring the first information in the communication apparatus. This is not limited herein.

In a possible implementation of the first aspect of embodiments of this application, the first information includes configuration information, and the configuration information includes at least one of the following (parameters):

a value of N;
at least one demodulation reference signal DMRS pattern corresponding to a value of N;
a value of M;
at least one demodulation reference signal DMRS pattern corresponding to a value of M; or
a first frequency hopping parameter for sending the first message.

Optionally, the communication apparatus determines the first information through configuration. That is, the first information includes the configuration information indicating to implement the joint transmission manner in the N consecutive time units.

Based on the foregoing technical solution, the communication apparatus may determine the first information through configuration, determine the at least one parameter based on the configuration information included in the first information, and subsequently send the first message in the M consecutive time units based on the at least one parameter.

In a possible implementation of the first aspect of embodiments of this application, in the M consecutive time units, the first frequency hopping parameter for sending the first message is associated with the value of N or the value of M.

In a possible implementation of the first aspect of embodiments of this application, the first frequency hopping parameter is for determining a frequency domain position at which the first message is sent in the joint transmission manner in the N consecutive time units; and/or the first frequency hopping parameter is for determining a frequency domain position at which the first message is sent in the joint transmission manner in the M consecutive time units.

Based on the foregoing technical solution, in the M consecutive time units, the first frequency hopping parameter for sending the first message may be associated with the value of N or the value of M, and may be for determining a corresponding frequency domain position, so that the communication apparatus can send the first message based on the frequency domain position. In this way, the communication apparatus optimizes an information transmission process based on an actual channel status, to further improve communication efficiency.

In a possible implementation of the first aspect of embodiments of this application, the sending the first message in the joint transmission manner in M consecutive time units includes: sending the first message in the joint transmission manner in the M consecutive time units based on a configured grant.

Based on the foregoing technical solution, if transmission is of the configured grant, namely, a configured grant type 1 (Configured Grant type 1, CG type 1), the communication apparatus can obtain the first information without indication of downlink control information DCI. Compared with a manner of determining, through the indication of the DCI, to send the first message in the joint transmission manner in the M consecutive time units, this can reduce signaling overheads, and improve spectral efficiency.

In a possible implementation of the first aspect of embodiments of this application, the sending the first message in the joint transmission manner in M consecutive time units includes: sending the first message in the joint transmission manner in the M consecutive time units based on a configured grant type 2 (CG type 2) or a dynamic grant (Dynamic Grant, DG).

Based on the foregoing technical solution, when it is determined, in a CG type 2 or DG manner, to send the first message in the joint transmission manner in the M consecutive time units, because in the CG type 2 or DG manner, the DCI may indicate that different time unit quantities correspond to one demodulation reference signal pattern (DMRS pattern), or may correspond to a plurality of DMRS patterns, and indicate a to-be-selected pattern in the DCI, a device that sends the DCI is used as the receiving device of the first message, so that the communication apparatus and the receiving device align a specific DMRS pattern for sending the first message, and a receive/transmit success rate of the first message is improved.

Optionally, the first information is carried in an RRC message.

Optionally, in a CG type 1 (without the DCI) transmission manner (that is, the indication of the DCI is not needed), the first information (RRC) indicates at least one of the following configurations:

If each time unit quantity (N or M) corresponds to one DMRS pattern, the first message is sent based on the corresponding DMRS pattern in N time units; or if there is an unavailable time unit, there are M consecutive available time units in N time units (M<N), and the first message is sent based on a quantity of time units included in the M consecutive available time units and a corresponding pattern indicated in the first information.

If each time unit quantity (N or M) corresponds to a plurality of DMRS patterns, one of the DMRS patterns may be defined as a default pattern (default pattern), and the first message is sent based on the corresponding default pattern in N time units; or if there is an unavailable time unit, there are M consecutive available time units in N time units (M<N), and the first message is sent based on a quantity of time units included in the M consecutive available time units and a corresponding default pattern indicated in the first information.

Optionally, in a CG type 2 transmission manner and a DG transmission manner (that is, through the indication of the DCI), the first information (RRC) indicates at least one of the several configurations.

If each time unit quantity (N or M) corresponds to one DMRS pattern, the first message is sent based on the corresponding DMRS pattern in N time units; or if there is an unavailable time unit, there are M consecutive available time units in N time units (M<N), and the first message is sent based on a quantity of time units included in the M consecutive available time units and a corresponding pattern indicated in the first information.

If each time unit quantity (N or M) corresponds to a plurality of DMRS patterns, and second information (the DCI) indicates one of the plurality of patterns, the first message is sent in N time units based on the corresponding pattern indicated by the DCI; or if there is an unavailable time unit, there are M consecutive available time units in N time units (M<N), and the first message is sent based on a quantity of time units included in the M consecutive available time units and a pattern that is indicated by the DCI in DMRS patterns that are indicated in the first information and that correspond to the quantity M of the consecutive time units.

In a possible implementation of the first aspect of embodiments of this application, the method may further include: receiving second information, where the second information indicates a first demodulation reference signal pattern, and the first demodulation reference signal pattern is one of the at least one demodulation reference signal pattern corresponding to the value of N or one of the at least one demodulation reference signal pattern corresponding to the value of M. Then, the sending the first message in the joint transmission manner in M consecutive time units includes: sending the first message in the joint transmission manner in the M consecutive time units based on the second information.

Based on the foregoing technical solution, in the M consecutive time units, the communication apparatus sends the first message based on the DMRS pattern indicated by the second information. That is, a device that schedules the second information is used as the receiving device of the first message, so that the communication apparatus and the receiving device align a specific DMRS pattern for sending the first message, and a receive/transmit success rate of the first message is improved.

In a possible implementation of the first aspect of embodiments of this application, the sending the first message in the joint transmission manner in M consecutive time units includes: sending the first message in the joint transmission manner in the M consecutive time units based on the first information.

Based on the foregoing technical solution, in the M consecutive time units, the communication apparatus sends the first message based on a related transmitting parameter indicated by the first information. That is, a device that schedules the first information is used as the receiving device of the first message, so that the communication apparatus and the receiving device align a specific transmitting parameter for sending the first message, and a receive/transmit success rate of the first message is improved.

In a possible implementation of the first aspect of embodiments of this application, the M consecutive time units are located after the P unavailable time units.

Optionally, the M consecutive time units may alternatively be located before the P unavailable time units.

Based on the foregoing technical solution, to avoid transmission interruption in the N consecutive time units caused by the P unavailable time units, the M consecutive time units for sending the first message may be located after the P unavailable time units in time domain.

Optionally, the communication apparatus may determine the P unavailable time units in a dynamic or static configured manner. For example, the P time units may become unavailable because other transmission preempts, due to preemption information (or a need to send or receive other information), a channel that is of the communication apparatus and on which the first message is located. In addition, the preemption information may be determined by the communication apparatus in the P time units in the N consecutive time units and a time unit that is in the N consecutive time units and that is before the P time units. In this way, a specific implementation of the M time units is provided, and the solution can be applicable to an application scenario of the P unavailable time units caused by preemption.

Optionally, the communication apparatus cancels sending of the first message in the M consecutive time units located before the P unavailable time units in time domain.

In a possible implementation of the first aspect of embodiments of this application, the method further includes: receiving or detecting third information in a time unit located before the M consecutive time units, where the third information is for determining that a transmitting parameter is a first sending parameter; and a process of the sending the first message in the joint transmission manner in M consecutive time units may specifically include: sending the first message based on the first sending parameter in the joint transmission manner in the M consecutive time units.

Optionally, a process of the receiving or detecting third information in a time unit located before the M consecutive time units specifically includes:

receiving or detecting the third information in a time unit that is in the N consecutive time units and that is located before the M consecutive time units.

Based on the foregoing technical solution, when the M consecutive time units are located after the P unavailable time units, the communication apparatus may send the first message in the M consecutive time units by using the first sending parameter determined based on the received third information. The third information may be from the receiving device of the first message, so that the communication apparatus sends the first message based on an indication of the receiving device, to improve a receive success rate of the first message.

Optionally, the third information may be in a form of a signal. That is, receiving or detecting the third information may alternatively be represented by receiving or detecting the signal.

Optionally, there may be one or more pieces of third information. The communication apparatus may use, as a sending parameter in the M consecutive time units, a first sending parameter determined based on third information that is received at the latest in time domain.

In a possible implementation of the first aspect of embodiments of this application, each of the M consecutive time units includes a DMRS.

Optionally, the communication apparatus cancels sending of the first message in M consecutive time units, where a part of the M consecutive time units include no DMRS.

Based on the foregoing technical solution, each of the M consecutive time units includes the DMRS for demodulating a carried signal, so that after receiving the first message in the M consecutive time units, the receiving device performs demodulation by using a plurality of DMRSs included in all of the M consecutive time units, to obtain the first message. In this way, a specific implementation of carrying the DMRSs in the M consecutive time units is provided, and the receiving device can determine, based on the plurality of DMRSs, to perform joint channel estimation in the M consecutive time units.

In a possible implementation of the first aspect of embodiments of this application, a part of the M consecutive time units include no DMRS.

Based on the foregoing technical solution, the part of the M consecutive time units include no DMRS. That is, the communication apparatus uses a DMRS-less (DMRS-less) technology in the M consecutive time units, to reduce time-domain density of DMRSs. In this way, a specific implementation of carrying a DMRS in the M consecutive time units is provided, signaling overheads of the communication apparatus is reduced, and spectral efficiency is improved.

Optionally, for example, a time unit is a slot. The DMRS-less (DMRS-less) technology may indicate to reduce time-domain density of DMRSs in each slot, or place no DMRS in some slots but perform demodulation based on channel estimation of another slot in which a DMRS is placed. In a specific manner, a channel estimation result of an adjacent slot having a DMRS is reused for a slot having no DMRS, or interpolated joint channel estimation is performed in a plurality of slots. When channel estimation quality is ensured, DMRS overheads are reduced and spectral efficiency is improved by reducing a DMRS, so that a coverage capability of a system is improved.

In a possible implementation of the first aspect of embodiments of this application, both the 1st time unit and the last time unit in the M consecutive time units include a DMRS.

Optionally, the communication apparatus cancels sending of the first message in M consecutive time units, where the 1st time unit or the last time unit in the M consecutive time units includes no DMRS.

Based on the foregoing technical solution, when the part of the M consecutive time units include no DMRS, both the 1st time unit and the last time unit in the M consecutive time units include the DMRS. That is, the time unit that includes no DMRS is not the 1st time unit or the last time unit in the M consecutive time units. In this way, the receiving device may perform, in the M consecutive time units by using the DMRSs in the 1st time unit and the last time unit, interpolated joint channel estimation on the time unit that includes no DMRS. While the time-domain density of the DMRSs is reduced to improve spectral efficiency, it is ensured that the receiving device can perform joint channel estimation in the M consecutive time units, to improve communication efficiency.

In a possible implementation of the first aspect of embodiments of this application, the process of the sending the first message in the joint transmission manner in M consecutive time units may specifically include: sending the first message in the joint transmission manner in the M consecutive time units at a first frequency domain position.

Optionally, the first frequency domain position may indicate a carrier frequency value (for example, 2.4 gigahertz GHz or 6.0 GHz), or indicate a carrier frequency band (for example, 2.41 GHz to 2.42 GHz or 6.01 GHz to 6.03 GHz) of a bandwidth (for example, 10 megahertz MHz or 20 MHz), or the first frequency domain position may indicate an RB number or an RB index value. This is not limited herein.

Based on the foregoing technical solution, the communication apparatus may send the first message in the joint transmission manner in the M consecutive time units at a same first frequency domain position, so that the receiving device determines, based on the first frequency domain position, to perform joint channel estimation in the M consecutive time units.

In a possible implementation of the first aspect of embodiments of this application, the N consecutive time units are configured for sending the first message in the joint transmission manner at a second frequency domain position or a third frequency domain position, and the first frequency domain position is different from at least one of the second frequency domain position and the third frequency domain position.

Optionally, the second frequency domain position may include one or more frequency domain positions, or the third frequency domain position may include one or more frequency domain positions.

Based on the foregoing technical solution, the N consecutive time units are configured to send the first message in the joint transmission manner at a second frequency domain position or a third frequency domain position. That is, a plurality of groups of N consecutive time units are configured to perform data transmission by alternately using the second frequency domain position and the third frequency domain position for every adjacent groups of N consecutive time units, to obtain a frequency hopping gain. When there are P unavailable time units in the N consecutive time units, the communication apparatus may send the first message by using the first frequency domain position different from the second frequency domain position and/or the third frequency domain position, to increase a degree of differentiation between a frequency domain position of the first message carried in the M consecutive time units and a frequency domain position in another group of N consecutive time units, so that a good frequency hopping gain is obtained.

In a possible implementation of the first aspect of embodiments of this application, the N consecutive time units further include K consecutive time units that are non-consecutive to the M consecutive time units, the K consecutive time units do not include the P unavailable time units, and the method may further include: sending the first message in the joint transmission manner in the K consecutive time units at the first frequency domain position, the second frequency domain position, the third frequency domain position, or a fourth frequency domain position, where the fourth frequency domain position is different from the first frequency domain position.

Optionally, the fourth frequency domain position may be different from at least one of the second frequency domain position and the third frequency domain position.

Based on the foregoing technical solution, in the N consecutive time units, there may be K consecutive time units that are different from the P unavailable time units and that are non-consecutive to the M consecutive time units, and the first message is sent by using a plurality of possible frequency domain positions in the K consecutive time units and the M consecutive time units, to increase a degree of differentiation between frequency domain positions in different time units in the N consecutive time units, so that a good frequency hopping gain is obtained.

In a possible implementation of the first aspect of embodiments of this application, before the sending the first message in the joint transmission manner in M consecutive time units, the method further includes: determining a first index value, where the first index value is for determining a frequency domain position at which the first message is sent in the N consecutive time units; determining a second index value, where the first index value is for determining a frequency domain position at which the first message is sent in the M consecutive time units; and/or determining a third index value, where the first index value is for determining a frequency domain position at which the first message is sent in the K consecutive time units.

Based on the foregoing technical solution, the communication apparatus may determine the first index value in a configuration or preconfiguration manner, to make the frequency domain position at which the first message is sent in the N consecutive time units clear. Similarly, the frequency domain position for sending the first message may alternatively be made clear by using the second index value and the third index value. That is, the frequency domain position at which the communication apparatus sends the first message is limited, and subsequently, the receiving device of the first message also aligns, by using the index value, the frequency domain position at which the communication apparatus sends the first message, to improve a receive/transmit success rate of the first message.

In a possible implementation of the first aspect of embodiments of this application, the method further includes: determining a fourth index value based on a target index value, where the fourth index value is for determining a frequency domain position in a time unit after the N consecutive time units, and the target index value includes the first index value or the second index value.

Optionally, the fourth index value is for determining a frequency domain position in N consecutive time units adjacent to and after the N consecutive time units.

Based on the foregoing technical solution, the frequency domain position in the N consecutive time units adjacent to and after the N consecutive time units may be determined by using the first index value and the second index value, that is, may be determined in different manners. Flexibility of solution implementation is improved, and a signal receive/transmit success rate in the adjacent N consecutive time units is also improved.

In a possible implementation of the first aspect of embodiments of this application,

a frequency hopping count of the N consecutive time units includes a frequency hopping count of the M consecutive time units; or

a frequency hopping count of the N consecutive time units includes a sum of ta frequency hopping count of the M consecutive time units and a value of a first parameter, where the first parameter includes one or more of the following: a quantity of time units in the P unavailable time units or a quantity of time unit segments in the P unavailable time units, a quantity of time units in first time units, and a quantity of time unit segments in the first time units, where the first time unit is a time unit in which the first message is not sent and that is in the M time units.

Optionally, when the first time unit and the P unavailable time units are consecutive in time domain, a value of the quantity of time unit segments in the P unavailable time units is 1 and a value of the quantity of time unit segments in the first time units is 0, or a value of the quantity of time unit segments in the P unavailable time units is 0 and a value of the quantity of time unit segments in the first time units is 1.

Based on the foregoing technical solution, when the frequency hopping count of the N consecutive time units is determined, the frequency hopping count of the N consecutive time units may include only the frequency hopping count of the M consecutive time units other than the P unavailable time units, or may further include the first parameter. The first parameter may be implemented by using one or more of the foregoing items. The frequency hopping count of the N consecutive time units including the unavailable time unit is determined in a plurality of manners, to improve flexibility of solution implementation.

In a possible implementation of the first aspect of embodiments of this application, the method may further include: sending the first message in an independent transmission manner in a second time unit, where the second time unit is at least one of the N consecutive time units, the second time unit is different from the P time units, the first time unit is non-consecutive to the M consecutive time units, and the independent transmission manner is different from the joint transmission manner.

Optionally, second time units are non-consecutive in time domain.

Specifically, the independent transmission manner is different from the joint transmission manner. To be specific, a transmission rule that may be indicated by the independent transmission manner is that any one of the following does not need to be met: The precoding matrices are consistent, the antenna ports are consistent, the power control parameters are consistent, the phases are consecutive, and both the 1st time unit and the last time unit include the demodulation reference signal DMRS.

Based on the foregoing technical solution, the communication apparatus sends the first message in the independent transmission manner different from the joint transmission manner in the second time unit that is different from the P unavailable time units and that is non-consecutive to the M consecutive time units, so that the receiving device performs channel estimation in the second time unit in a manner other than joint channel estimation, to improve use efficiency of the N consecutive time units in time domain, and improve communication efficiency.

In a possible implementation of the first aspect of embodiments of this application, a first repetition count of the first message indicating that the N consecutive time units are configured for sending in the joint transmission manner is 1. In this case, before the sending the first message in the joint transmission manner in M consecutive time units, the method may further include: determining a second repetition count of the first message based on a comparison between a ratio of M to N and a first threshold, where the second repetition count is greater than or equal to 1.

Optionally, when the ratio of M to N is greater than the first threshold, it is determined that the second repetition count of the first message is greater than 1; when the ratio of M to N is less than the first threshold, it is determined that the second repetition count of the first message is equal to 1; or when the ratio of M to N is equal to the first threshold, it is determined that the second repetition count of the first message is greater than (or equal to) 1.

Optionally, there are a plurality of segments of M consecutive time units in the N consecutive time units. If the ratio is greater than the first threshold, an actual repetition is sent once in each segment of M consecutive time units.

Optionally, the first repetition count may be a count of nominal repetitions (nominal repetitions), and the second repetition count may be a count of actual repetitions (actual repetitions).

Based on the foregoing technical solution, when the first repetition count of the first message indicating that the N consecutive time units are configured for sending in the joint transmission manner is 1, for example, when the N consecutive time units are configured for transmitting a transport block processing over multi-slot physical uplink shared channel (TB processing over multi-slot PUSCH), the communication apparatus may determine the second repetition count of the first message based on the comparison between the ratio of M to N and the first threshold. That is, the communication apparatus determines a repetition count of the first message based on a length of M actually available consecutive time units other than the P unavailable time units in the N consecutive time units in time domain. The information transmission process is optimized based on the actual channel status, to further improve communication efficiency.

In a possible implementation of the first aspect of embodiments of this application, the first message includes uplink information, sidelink information, or downlink information.

It should be noted that the first message may be the uplink information, the sidelink information, the downlink information, or other information, for example, information carried on a physical random access channel (physical random access channel, PRACH). This is not limited herein.

In a possible implementation of the first aspect of embodiments of this application, the first information includes uplink-downlink slot configuration information.

Based on the foregoing technical solution, when performing communication in time division duplex (time division duplex, TDD) mode, the communication apparatus may determine the first information based on the uplink-downlink slot configuration information, that is, determine, based on the uplink-downlink slot configuration information, that the N consecutive time units are configured to receive the first message in the joint transmission manner. While a specific implementation of a process of determining the first information is provided, signaling overheads of configuring the first information in another manner can also be reduced, and spectral efficiency can be improved.

In a possible implementation of the first aspect of embodiments of this application, a process in which the first information is for determining the N consecutive time units specifically includes: determining, based on the first information, a quantity of time units for uplink transmission; and further determining the N consecutive time units based on the quantity of time units for uplink transmission.

Based on the foregoing technical solution, a specific implementation of determining the N consecutive time units based on the uplink-downlink slot configuration information is provided, to improve solution feasibility.

In a possible implementation of the first aspect of embodiments of this application, the time unit for uplink transmission includes at least one of the following: an uplink time unit, a flexible time unit, or a special time unit.

Optionally, there may be a plurality of values of N. To be specific, the value of N is equal to a sum of consecutive-slot quantities of at least one of the uplink time unit, the flexible time unit, and the special time unit.

Optionally, it is determined, in the configuration or preconfiguration manner, that the flexible time unit is included in the time unit for uplink transmission. For example, the communication apparatus receives additional signaling to indicate whether a flexible slot is an uplink slot or a downlink slot. Alternatively, the communication apparatus indicates that the flexible slot is available for the uplink transmission, and the flexible slot is directly used during uplink transmission without signaling indication.

Based on the foregoing technical solution, a plurality of implementations of the time unit for uplink transmission are provided, to improve solution feasibility.

A second aspect of embodiments of this application provides a communication method. The method is applied to a communication apparatus used as a receiving end. Specifically, the method may be performed by a terminal device (or a network device), or may be performed by a component (for example, a processor, a chip, or a chip system) of the terminal device (or the network device). In the method, the communication apparatus first determines first information, where the first information indicates that N consecutive time units are configured to receive a first message in a joint transmission manner, and N is an integer greater than 1. Then, the communication apparatus receives the first message in the joint transmission manner in M consecutive time units, where there are P unavailable time units in the N consecutive time units, the M consecutive time units are a part of the N consecutive time units, the M consecutive time units do not include the P unavailable time units, M is an integer greater than 1, and P is an integer greater than 0.

Based on the foregoing technical solution, the communication apparatus first determines the first information indicating that the N consecutive time units are configured to receive the first message in the joint transmission manner. To be specific, the communication apparatus performs joint channel estimation in the N bundled consecutive time units to obtain the first message; and when there are P unavailable time units in the N consecutive time units indicated by the first information, the communication apparatus receives the first message in the joint transmission manner in the M consecutive time units different from the P unavailable time units. In this way, the first message can be transmitted in the M consecutive time units in the N consecutive time units, and the communication apparatus may perform joint channel estimation in the M consecutive time units, to implement communication in a plurality of bundled time units including an unavailable time unit, avoid communication interruption, and improve communication efficiency.

Optionally, the first message may be a data channel/a control channel, data/information, a signal, or the like.

Optionally, the joint transmission manner may alternatively be represented in another form, for example, a bundling transmission manner, a cross-slot bundling transmission manner, or a multi-slot DMRS bundling sending manner.

Specifically, the communication apparatus may determine the first information through configuration or preconfiguration.

For example, when the first information is determined in a configuration manner, a signaling indication (for example, a joint channel estimation enabling indication/a joint sending enabling indication, or a directly indicated quantity N of time units for joint channel estimation/joint sending) may be received, to determine that the N consecutive time units are configured for sending the first message in the joint transmission manner. That is, it is determined that, when the receiving device needs to be supported in performing joint channel estimation, sending/transmission performed by the communication apparatus needs to meet at least one of the following: Precoding matrices are consistent, antenna ports are consistent, power control parameters are consistent, phases are consecutive, and both the 1st time unit and the last time unit include a demodulation reference signal DMRS.

For another example, when the communication apparatus performs transmission in the joint transmission manner on an allocated resource, a transmission rule defined on the resource is that when the N consecutive time units are configured for sending the first message in the joint transmission manner, the joint transmission manner meets at least one of the following conditions: Precoding matrices are consistent, antenna ports are consistent, power control parameters are consistent, phases are consecutive, and both the 1st time unit and the last time unit include a demodulation reference signal DMRS.

It should be noted that, in the N consecutive time units, if P is equal to 1, or P is greater than 1 and the P unavailable time units are consecutive in time domain, the M time units may include at least one segment in a time unit before the P unavailable time units and a time unit after the P unavailable time units. If P is greater than 1 and the P unavailable time units are non-consecutive time units, that is, the P unavailable time units include a plurality of segments of unavailable time units, there may be at least one available time unit (for example, M time units) in the plurality of segments of unavailable time units, and the M consecutive time units may include one or more segments other than the P unavailable time units.

In addition, the time unit mentioned in this embodiment of this application may be at different granularities. For example, the time unit may be implemented in a form of a symbol, a slot, a subframe, a frame, or the like. This is not specifically limited herein.

Optionally, the first information may be determined by configuring the first information for the communication apparatus by a network device (an access network device or a core network device), or may be determined by preconfiguring the first information in the communication apparatus. This is not limited herein.

In a possible implementation of the second aspect of embodiments of this application, the first information includes configuration information, and the configuration information includes at least one of the following (parameters):

> a value of N;
> at least one demodulation reference signal DMRS pattern corresponding to a value of N;
> a value of M;
> at least one demodulation reference signal DMRS pattern corresponding to a value of M; or
> a first frequency hopping parameter for receiving the first message.

Optionally, the communication apparatus determines the first information through configuration. That is, the first information includes the configuration information indicating to implement the joint transmission manner in the N consecutive time units.

Based on the foregoing technical solution, the communication apparatus may determine the first information through configuration, determine the at least one parameter based on the configuration information included in the first information, and subsequently receive the first message in the M consecutive time units based on the at least one parameter.

In a possible implementation of the second aspect of embodiments of this application, in the M consecutive time units, the first frequency hopping parameter for sending the first message is associated with the value of N or the value of M.

In a possible implementation of the first aspect of embodiments of this application, the first frequency hopping parameter is for determining a frequency domain position at which the first message is sent in the joint transmission manner in the N consecutive time units; and/or the first frequency hopping parameter is for determining a frequency domain position at which the first message is sent in the joint transmission manner in the M consecutive time units.

Based on the foregoing technical solution, in the M consecutive time units, the first frequency hopping parameter for receiving the first message may be associated with the value of N or the value of M, and may be for determining a corresponding frequency domain position, so that the communication apparatus can receive the first message based on the frequency domain position. In this way, the communication apparatus optimizes an information transmission process based on an actual channel status, to further improve communication efficiency.

In a possible implementation of the second aspect of embodiments of this application, the receiving the first message in the joint transmission manner in M consecutive time units includes: receiving the first message in the joint transmission manner in the M consecutive time units based on a configured grant.

Based on the foregoing technical solution, if transmission is of the configured grant, namely, a configured grant type 1 (Configured Grant type 1, CG type 1), the communication apparatus can obtain the first information without indication of downlink control information DCI. Compared with a manner of determining, through the indication of the DCI, to receive the first message in the joint transmission manner in the M consecutive time units, this can reduce signaling overheads, and improve spectral efficiency.

In a possible implementation of the second aspect of embodiments of this application, the receiving the first message in the joint transmission manner in M consecutive time units includes: receiving the first message in the joint transmission manner in the M consecutive time units based on a configured grant type 2 (CG type 2) or a dynamic grant (Dynamic Grant, DG).

Based on the foregoing technical solution, when it is determined, in a CG type 2 or DG manner, to receive the first message in the joint transmission manner in the M consecutive time units, because in the CG type 2 or DG manner, the DCI may indicate that different time unit quantities correspond to one demodulation reference signal pattern (DMRS pattern), or may correspond to a plurality of DMRS patterns, and indicate a to-be-selected pattern in the DCI, the communication apparatus is used as a device that sends the DCI, so that the communication apparatus and a transmitting device of the first message align a specific DMRS pattern for sending the first message, and a receive/transmit success rate of the first message is improved.

Optionally, the first information is carried in an RRC message.

Optionally, in a CG type 1 (without the DCI) transmission manner (that is, the indication of the DCI is not needed), the first information (RRC) indicates at least one of the following configurations:

If each time unit quantity (N or M) corresponds to one DMRS pattern, the first message is sent based on the corresponding DMRS pattern in N time units; or if there is an unavailable time unit, there are M consecutive available time units in N time units (M<N), and the first message is sent based on a quantity of time units included in the M consecutive available time units and a corresponding pattern indicated in the first information.

If each time unit quantity (N or M) corresponds to a plurality of DMRS patterns, one of the DMRS patterns may be defined as a default pattern (default pattern), and the first message is sent based on the corresponding default pattern in N time units; or if there is an unavailable time unit, there are M consecutive available time units in N time units (M<N), and the first message is sent based on a quantity of time units included in the M consecutive available time units and a corresponding default pattern indicated in the first information.

Optionally, in a CG type 2 transmission manner and a DG transmission manner (that is, through the indication of the DCI), the first information (RRC) indicates at least one of the several configurations.

If each time unit quantity (N or M) corresponds to one DMRS pattern, the first message is sent based on the corresponding DMRS pattern in N time units; or if there is an unavailable time unit, there are M consecutive available time units in N time units (M<N), and the first message is sent based on a quantity of time units included in the M consecutive available time units and a corresponding pattern indicated in the first information.

If each time unit quantity (N or M) corresponds to a plurality of DMRS patterns, and second information (the DCI) indicates one of the plurality of patterns, the first message is sent in N time units based on the corresponding pattern indicated by the DCI; or if there is an unavailable time unit, there are M consecutive available time units in N time units (M<N), and the first message is sent based on a quantity of time units included in the M consecutive available time units and a pattern that is indicated by the DCI in DMRS patterns that are indicated in the first information and that correspond to the quantity M of the consecutive time units.

In a possible implementation of the second aspect of embodiments of this application, the method may further include: sending second information, where the second information indicates a first demodulation reference signal pattern, and the first demodulation reference signal pattern is one of the at least one demodulation reference signal pattern corresponding to the value of N or one of the at least one demodulation reference signal pattern corresponding to the value of M. Then, the receiving the first message in the joint transmission manner in M consecutive time units includes: receiving the first message in the joint transmission manner in the M consecutive time units based on the second information.

Based on the foregoing technical solution, in the M consecutive time units, the communication apparatus receives the first message based on the DMRS pattern indicated by the second information. That is, the communication apparatus is used as a device that schedules the second information, so that the communication apparatus and the transmitting device that sends the first message align a specific DMRS pattern for receiving the first message, and a receive/transmit success rate of the first message is improved.

In a possible implementation of the first aspect of embodiments of this application, the receiving the first message in the joint transmission manner in M consecutive time units includes: receiving the first message in the joint transmission manner in the M consecutive time units based on the first information.

Based on the foregoing technical solution, in the M consecutive time units, the communication apparatus receives the first message based on a related transmitting parameter indicated by the first information. That is, the communication apparatus is used as a device that schedules the first information, so that the communication apparatus and the transmitting device that sends the first message align a specific transmitting parameter for sending the first message, and a receive/transmit success rate of the first message is improved.

In a possible implementation of the second aspect of embodiments of this application, the M consecutive time units are located after the P unavailable time units.

Based on the foregoing technical solution, to avoid transmission interruption in the N consecutive time units caused by the P unavailable time units, the M consecutive time units for receiving the first message may be located after the P unavailable time units in time domain.

Optionally, the communication apparatus may determine the P unavailable time units in a dynamic or static configured manner. For example, the P time units may become unavailable because other transmission preempts, due to preemption information (a need to send or receive other information), a channel that is of a transmitting end of the first message and on which the first message is located. In addition, the preemption information may be determined by the communication apparatus in the P time units in the N consecutive time units and a time unit that is in the N consecutive time units and that is before the P time units. In this way, a specific implementation of the M time units is provided, and the solution can be applicable to an application scenario of the P unavailable time units caused by preemption.

Optionally, the communication apparatus does not receive the first message in the M consecutive time units located before the P unavailable time units in time domain.

In a possible implementation of the second aspect of embodiments of this application, the method further includes: sending third information in a time unit located before the M consecutive time units, where the third information is for determining that a receiving parameter is a first receiving parameter; and a process of the receiving the first message in the joint transmission manner in M consecutive time units may specifically include: receiving the first message based on the first receiving parameter in the joint transmission manner in the M consecutive time units.

Based on the foregoing technical solution, when the M consecutive time units are located after the P unavailable time units, the communication apparatus may receive the first message in the M consecutive time units by using the first sending parameter determined based on the sent third information. The third information may be sent to the sending device of the first message, so that the transmitting device sends the first message based on an indication of the communication apparatus, to improve a receive success rate of the first message.

Optionally, there may be one or more pieces of third information. The communication apparatus may use, as a receiving parameter in the M consecutive time units, a first parameter determined based on third information that is sent at the latest in time domain.

In a possible implementation of the second aspect of embodiments of this application, each of the M consecutive time units includes a DMRS.

Optionally, the communication apparatus cancels receiving of the first message in M consecutive time units, where a part of the M consecutive time units include no DMRS.

Based on the foregoing technical solution, each of the M consecutive time units includes the DMRS for demodulating a carried signal, so that after receiving the first message in the M consecutive time units, the communication apparatus performs demodulation by using a plurality of DMRSs included in all of the M consecutive time units, to obtain the first message. In this way, a specific implementation of carrying the DMRSs in the M consecutive time units is provided, and the communication apparatus can determine, based on the plurality of DMRSs, to perform joint channel estimation in the M consecutive time units.

In a possible implementation of the second aspect of embodiments of this application, a part of the M consecutive time units include no DMRS.

Based on the foregoing technical solution, the part of the M consecutive time units include no DMRS. That is, the transmitting end of the first message uses a DMRS-less (DMRS-less) technology in the M consecutive time units, to reduce time-domain density of DMRSs. In this way, a specific implementation of carrying a DMRS in the M consecutive time units is provided, signaling overheads is reduced, and spectral efficiency is improved.

Optionally, for example, a time unit is a slot. The DMRS-less (DMRS-less) technology may indicate to reduce time-domain density of DMRSs in each slot, or place no DMRS in some slots but perform demodulation based on channel estimation of another slot in which a DMRS is placed. In a specific manner, a channel estimation result of an adjacent slot having a DMRS is reused for a slot having no DMRS, or interpolated joint channel estimation is performed in a plurality of slots. When channel estimation quality is ensured, DMRS overheads are reduced and spectral efficiency is improved by reducing a DMRS, so that a coverage capability of a system is improved.

In a possible implementation of the second aspect of embodiments of this application, both the 1st time unit and the last time unit in the M consecutive time units include a DMRS.

Optionally, the communication apparatus cancels receiving of the first message in M consecutive time units, where the 1st time unit or the last time unit in the M consecutive time units includes no DMRS.

Based on the foregoing technical solution, when the part of the M consecutive time units include no DMRS, both the 1st time unit and the last time unit in the M consecutive time units include the DMRS. That is, the time unit that includes no DMRS is not the 1st time unit or the last time unit in the M consecutive time units. In this way, the communication apparatus may perform, in the M consecutive time units by using the DMRSs in the 1st time unit and the last time unit, interpolated joint channel estimation on the time unit that includes no DMRS. While the time-domain density of the DMRSs is reduced to improve spectral efficiency, it is ensured that the communication apparatus can perform joint channel estimation in the M consecutive time units, to improve communication efficiency.

In a possible implementation of the second aspect of embodiments of this application, the process of the receiving the first message in the joint transmission manner in M consecutive time units may specifically include: receiving the first message in the joint transmission manner in the M consecutive time units at a first frequency domain position.

Optionally, the first frequency domain position may indicate a carrier frequency value (for example, 2.4 gigahertz GHz or 6.0 GHz), or indicate a carrier frequency band (for example, 2.41 GHz to 2.42 GHz or 6.01 GHz to 6.03 GHz) of a bandwidth (for example, 10 megahertz MHz or 20 MHz), or the first frequency domain position may indicate an RB number or an RB index value. This is not limited herein.

Based on the foregoing technical solution, the communication apparatus may receive the first message in the joint transmission manner in the M consecutive time units at a same first frequency domain position, so that the communication apparatus determines, based on the first frequency domain position, to perform joint channel estimation in the M consecutive time units.

In a possible implementation of the second aspect of embodiments of this application, the N consecutive time units are configured to receive the first message in the joint transmission manner at a second frequency domain position or a third frequency domain position, and the first frequency domain position is different from at least one of the second frequency domain position and the third frequency domain position.

Optionally, the second frequency domain position may include one or more frequency domain positions, or the third frequency domain position may include one or more frequency domain positions.

Based on the foregoing technical solution, the N consecutive time units are configured to send the first message in the joint transmission manner at a second frequency domain position or a third frequency domain position. That is, a plurality of groups of N consecutive time units are configured to perform data transmission by alternately using the second frequency domain position and the third frequency domain position for every adjacent groups of N consecutive time units, to obtain a frequency hopping gain. When there are P unavailable time units in the N consecutive time units, the communication apparatus may receive the first message by using the first frequency domain position different from the second frequency domain position and/or the third frequency domain position, to increase a degree of differentiation between a frequency domain position of the first message carried in the M consecutive time units and a frequency domain position in another group of N consecutive time units, so that a good frequency hopping gain is obtained.

In a possible implementation of the second aspect of embodiments of this application, the N consecutive time units further include K consecutive time units that are non-consecutive to the M consecutive time units, the K consecutive time units do not include the P unavailable time units, and the method may further include: receiving the first message in the joint transmission manner in the K consecutive time units at the first frequency domain position, the second frequency domain position, the third frequency domain position, or a fourth frequency domain position, where the fourth frequency domain position is different from the first frequency domain position.

Optionally, the fourth frequency domain position may be different from at least one of the second frequency domain position and the third frequency domain position.

Based on the foregoing technical solution, in the N consecutive time units, there may be K consecutive time units that are different from the P unavailable time units and that are non-consecutive to the M consecutive time units, and the first message is sent by using a plurality of possible frequency domain positions in the K consecutive time units and the M consecutive time units, to increase a degree of differentiation between frequency domain positions in different time units in the N consecutive time units, so that a good frequency hopping gain is obtained.

In a possible implementation of the second aspect of embodiments of this application, before the receiving the first message in the joint transmission manner in M consecutive time units, the method further includes: determining a first index value, where the first index value is for determining a frequency domain position at which the first message is sent in the N consecutive time units; determining a second index value, where the first index value is for determining a frequency domain position at which the first message is sent in the M consecutive time units; and/or determining a third index value, where the first index value is for determining a frequency domain position at which the first message is sent in the K consecutive time units.

Based on the foregoing technical solution, the communication apparatus may determine the first index value in a configuration or preconfiguration manner, to make the frequency domain position at which the first message is received in the N consecutive time units clear. Similarly, the frequency domain position for receiving the first message may alternatively be made clear by using the second index value and the third index value. That is, the frequency domain position at which the communication apparatus receives the first message is limited, and subsequently, the transmitting device of the first message also aligns, by using the index value, the frequency domain position at which the communication apparatus receives the first message, to improve a receive/transmit success rate of the first message.

In a possible implementation of the second aspect of embodiments of this application, the method further includes: determining a fourth index value based on a target index value, where the fourth index value is for determining a frequency domain position in a time unit after the N consecutive time units, and the target index value includes the first index value or the second index value.

Optionally, the fourth index value is for determining a frequency domain position in N consecutive time units adjacent to and after the N consecutive time units.

Based on the foregoing technical solution, the frequency domain position in the N consecutive time units adjacent to and after the N consecutive time units may be determined by using the first index value and the second index value, that is, may be determined in different manners. Flexibility of solution implementation is provided, and a signal receive/transmit success rate in the adjacent N consecutive time units is also improved.

In a possible implementation of the second aspect of embodiments of this application, a frequency hopping count of the N consecutive time units includes a frequency hopping count of the M consecutive time units; or
a frequency hopping count of the N consecutive time units includes a sum of a frequency hopping count of the M consecutive time units and a value of a first parameter, where the first parameter includes one or more of the following: a quantity of time units in the P unavailable time units or a quantity of time unit segments in the P unavailable time units, a quantity of time units in first time units, and a quantity of time unit segments in the first time units, where the first time unit is a time unit in which the first message is not received and that is in the M time units.

Optionally, when the first time unit and the P unavailable time units are consecutive in time domain, a value of the quantity of time unit segments in the P unavailable time units is 1 and a value of the quantity of time unit segments in the first time units is 0, or a value of the quantity of time unit segments in the P unavailable time units is 0 and a value of the quantity of time unit segments in the first time units is 1.

Based on the foregoing technical solution, when the frequency hopping count of the N consecutive time units is determined, the frequency hopping count of the N consecutive time units may include only the frequency hopping count of the M consecutive time units other than the P unavailable time units, or may further include the first parameter. The first parameter may be implemented by using one or more of the foregoing items. The frequency hopping count of the N consecutive time units including the unavailable time unit is determined in a plurality of manners, to improve flexibility of solution implementation.

In a possible implementation of the second aspect of embodiments of this application, the method may further include: receiving the first message in an independent transmission manner in a second time unit, where the second time unit is at least one of the N consecutive time units, the second time unit is different from the P time units, the first time unit is non-consecutive to the M consecutive time units, and the independent transmission manner is different from the joint transmission manner.

Optionally, second time units are non-consecutive in time domain.

Specifically, the independent transmission manner is different from the joint transmission manner. To be specific, a transmission rule that may be indicated by the independent transmission manner is that any one of the following does not need to be met: The precoding matrices are consistent, the antenna ports are consistent, the power control parameters are consistent, the phases are consecutive, and both the 1st time unit and the last time unit include the demodulation reference signal DMRS.

Based on the foregoing technical solution, the communication apparatus receives the first message in the independent transmission manner different from the joint transmission manner in the second time unit that is different from the P unavailable time units and that is non-consecutive to the M consecutive time units, so that the communication apparatus performs channel estimation in the second time unit in a manner other than joint channel estimation, to improve use efficiency of the N consecutive time units in time domain, and improve communication efficiency.

In a possible implementation of the second aspect of embodiments of this application, a first repetition count of the first message indicating that the N consecutive time units are configured for sending in the joint transmission manner is 1. In this case, before the receiving the first message in the joint transmission manner in M consecutive time units, the method may further include: determining a second repetition count of the first message based on a comparison between a ratio of M to N and a first threshold, where the second repetition count is greater than or equal to 1.

Optionally, when the ratio of M to N is greater than the first threshold, it is determined that the second repetition count of the first message is greater than 1; when the ratio of M to N is less than the first threshold, it is determined that the second repetition count of the first message is equal to 1; or when the ratio of M to N is equal to the first threshold, it is determined that the second repetition count of the first message is greater than (or equal to) 1.

Optionally, the first repetition count may be a count of nominal repetitions (nominal repetitions), and the second repetition count may be a count of actual repetitions (actual repetitions).

Based on the foregoing technical solution, when the first repetition count of the first message indicating that the N consecutive time units are configured for sending in the joint transmission manner is 1, for example, when the N consecutive time units are configured for transmitting a transport block processing over multi-slot physical uplink shared channel (TB processing over multi-slot PUSCH), the communication apparatus may determine the second repetition count of the first message based on the comparison between the ratio of M to N and the first threshold. That is, the communication apparatus determines a repetition count of the first message based on a length of M actually available consecutive time units other than the P unavailable time units in the N consecutive time units in time domain. The information transmission process is optimized based on the actual channel status, to further improve communication efficiency.

In a possible implementation of the second aspect of embodiments of this application, the first message includes uplink information, sidelink information, or downlink information.

It should be noted that the first message may be the uplink information, the sidelink information, the downlink information, or other information, for example, information carried on a physical random access channel (physical random access channel, PRACH). This is not limited herein.

In a possible implementation of the second aspect of embodiments of this application, the first information includes uplink-downlink slot configuration information.

Based on the foregoing technical solution, when performing communication in time division duplex (time division duplex, TDD) mode, the communication apparatus may determine the first information based on the uplink-downlink slot configuration information, that is, determine, based on the uplink-downlink slot configuration information, that the N consecutive time units are configured to receive the first message in the joint transmission manner. While a specific implementation of a process of determining the first information is provided, signaling overheads of configuring the first information in another manner can also be reduced, and spectral efficiency can be improved.

In a possible implementation of the second aspect of embodiments of this application, a process in which the first information is for determining the N consecutive time units specifically includes: determining, based on the first information, a quantity of time units for uplink transmission; and further determining the N consecutive time units based on the quantity of time units for uplink transmission.

Based on the foregoing technical solution, a specific implementation of determining the N consecutive time units based on the uplink-downlink slot configuration information is provided, to improve solution feasibility.

In a possible implementation of the second aspect of embodiments of this application, the time unit for uplink transmission includes at least one of the following: an uplink time unit, a flexible time unit, or a special time unit.

Optionally, there may be a plurality of values of N. To be specific, the value of N is equal to a sum of consecutive-slot quantities of at least one of the uplink time unit, the flexible time unit, and the special time unit.

Optionally, it is determined, in the configuration or preconfiguration manner, that the flexible time unit is included in the time unit for uplink transmission. For example, the communication apparatus receives additional signaling to indicate whether a flexible slot is an uplink slot or a downlink slot. Alternatively, the communication apparatus indicates that the flexible slot is available for the uplink transmission, and the flexible slot is directly used during uplink transmission without signaling indication.

Based on the foregoing technical solution, a plurality of implementations of the time unit for uplink transmission are provided, to improve solution feasibility.

A third aspect of embodiments of this application provides a communication method. The method is applied to a communication apparatus used as a transmitting end. Specifically, the method may be performed by a terminal device (or a network device), or may be performed by a component (for example, a processor, a chip, or a chip system) of the terminal device (or the network device). In the method, a communication apparatus determines first information, where the first information indicates that N consecutive time units are configured for sending a first message in a joint transmission manner, and N is an integer greater than 1. Then, the communication apparatus sends the first message in an independent transmission manner in a first time unit, where there are P unavailable time units in the N consecutive time units, the first time unit is different from the P unavailable time units, the independent transmission manner is different from the joint transmission manner, and P is an integer greater than 0.

Based on the foregoing technical solution, the communication apparatus first determines the first information indicating that the N consecutive time units are configured for sending the first message in the joint transmission manner. To be specific, a receiving device that receives the first message performs joint channel estimation in the N bundled consecutive time units to obtain the first message; and when there are P unavailable time units in the N consecutive time units indicated by the first information, the communication apparatus sends the first message in the independent transmission manner different from the joint transmission manner in the first time unit different from the P unavailable time units. In this way, the first message can be transmitted in the first time unit in the N consecutive time units, and the receiving device may perform channel estimation in the first time unit in a manner other than the joint channel estimation, to implement communication in a plurality of bundled time units including an unavailable time unit, avoid communication interruption, and improve communication efficiency.

Optionally, the first message may be a data channel/a control channel, data/information, a signal, or the like.

Optionally, the joint transmission manner may alternatively be represented in another form, for example, a bundling transmission manner, a cross-slot bundling transmission manner, or a multi-slot DMRS bundling sending manner.

Specifically, the communication apparatus may determine the first information through configuration or preconfiguration.

For example, when the first information is determined in a configuration manner, a signaling indication (for example, a joint channel estimation enabling indication/a joint sending enabling indication, or a directly indicated quantity N of time units for joint channel estimation/joint sending) may be received, to determine that the N consecutive time units are configured for sending the first message in the joint transmission manner. That is, it is determined that, when the receiving device needs to be supported in performing joint channel estimation, sending/transmission performed by the communication apparatus needs to meet at least one of the following: Precoding matrices are consistent, antenna ports are consistent, power control parameters are consistent, phases are consecutive, and both the 1st time unit and the last time unit include a demodulation reference signal DMRS.

For another example, when the communication apparatus performs transmission in the joint transmission manner on an allocated resource, a transmission rule defined on the resource is that when the N consecutive time units are configured for sending the first message in the joint transmission manner, the joint transmission manner meets at least one of the following conditions: Precoding matrices are consistent, antenna ports are consistent, power control parameters are consistent, phases are consecutive, and both the 1st time unit and the last time unit include a demodulation reference signal DMRS.

Similarly, the independent transmission manner is different from the joint transmission manner. To be specific, a transmission rule that may be indicated by the independent transmission manner is that any one of the following does not need to be met: The precoding matrices are consistent, the antenna ports are consistent, the power control parameters are consistent, the phases are consecutive, and both the 1st time unit and the last time unit include the demodulation reference signal DMRS.

It should be noted that the time unit mentioned in this embodiment of this application may be at different granularities. For example, the time unit may be implemented in a form of a symbol, a slot, a subframe, a frame, or the like. This is not specifically limited herein.

Optionally, the first information may be determined by configuring the first information for the communication apparatus by a network device (an access network device or a core network device), or may be determined by preconfiguring the first information in the communication apparatus. This is not limited herein.

In a possible implementation of the third aspect of embodiments of this application, the first information includes configuration information, and the configuration information includes at least one of the following:

a value of N;
at least one demodulation reference signal pattern corresponding to a value of N;
at least one demodulation reference signal pattern corresponding to a time unit quantity value of 1; or
a first frequency hopping parameter for sending the first message.

Optionally, the communication apparatus determines the first information through configuration. That is, the first information includes the configuration information indicating to implement the joint transmission manner in the N consecutive time units.

Based on the foregoing technical solution, the communication apparatus may determine the first information through configuration, determine the at least one parameter based on the configuration information included in the first information, and subsequently send the first message in the first time unit based on the at least one parameter.

In a possible implementation of the third aspect of embodiments of this application, the first frequency hopping parameter for sending the first message is associated with the value of N.

In a possible implementation of the third aspect of embodiments of this application, the first frequency hopping parameter is for determining a frequency domain position at which the first message is sent in the joint transmission manner in the N consecutive time units and/or a frequency domain position at which the first message is sent in the independent transmission manner in the first time unit.

Based on the foregoing technical solution, in the first time unit, the first frequency hopping parameter for sending the first message may be associated with the value of N, and may be for determining a corresponding frequency domain position, so that the communication apparatus can send the first message based on the frequency domain position. In this way, the communication apparatus optimizes an information transmission process based on an actual channel status, to further improve communication efficiency.

In a possible implementation of the third aspect of embodiments of this application, the sending the first message in an independent transmission manner in a first time unit includes: sending the first message in the independent transmission manner in the first time unit based on a configured grant.

Based on the foregoing technical solution, if transmission is of the configured grant, namely, a configured grant type 1 (Configured Grant type 1, CG type 1), the communication apparatus can obtain the first information without indication of downlink control information DCI. Compared with a manner of determining, through the indication of the DCI, to send the first message in the independent transmission manner in the first time unit, this can reduce signaling overheads, and improve spectral efficiency.

In a possible implementation of the third aspect of embodiments of this application, the sending the first message in an independent transmission manner in a first time unit includes: sending the first message in the independent transmission manner in the first time unit based on a configured grant type 2 (CG type 2) or a dynamic grant (Dynamic Grant, DG).

Based on the foregoing technical solution, when it is determined, in a CG type 2 or DG manner, to send the first message in the independent transmission manner in the first time unit, because in the CG type 2 or DG manner, the DCI may indicate that different time unit quantities correspond to one demodulation reference signal pattern (DMRS pattern), or may correspond to a plurality of DMRS patterns, and indicate a to-be-selected pattern in the DCI, a device that sends the DCI is used as the receiving device of the first message, so that the communication apparatus and the receiving device align a specific DMRS pattern for sending the first message, and a receive/transmit success rate of the first message is improved.

Optionally, the first information is carried in an RRC message.

Optionally, in a CG type 1 (without the DCI) transmission manner (that is, the indication of the DCI is not needed), the first information (RRC) indicates at least one of the following configurations:

If each time unit quantity (N or M) corresponds to one DMRS pattern, the first message is sent based on the corresponding DMRS pattern in N time units; or if there is an unavailable time unit, there are M consecutive available time units in N time units (M<N), and the first message is sent based on a quantity of time units included in the M consecutive available time units and a corresponding pattern indicated in the first information.

If each time unit quantity (N or M) corresponds to a plurality of DMRS patterns, one of the DMRS patterns may be defined as a default pattern (default pattern), and the first message is sent based on the corresponding default pattern in N time units; or if there is an unavailable time unit, there are M consecutive available time units in N time units (M<N), and the first message is sent based on a quantity of time units included in the M consecutive available time units and a corresponding default pattern indicated in the first information.

Optionally, in a CG type 2 transmission manner and a DG transmission manner (that is, through the indication of the DCI), the first information (RRC) indicates at least one of the several configurations.

If each time unit quantity (N or M) corresponds to one DMRS pattern, the first message is sent based on the corresponding DMRS pattern in N time units; or if there is an unavailable time unit, there are M consecutive available time units in N time units (M<N), and the first message is sent based on a quantity of time units included in the M consecutive available time units and a corresponding pattern indicated in the first information.

If each time unit quantity (N or M) corresponds to a plurality of DMRS patterns, and second information (the DCI) indicates one of the plurality of patterns, the first message is sent in N time units based on the corresponding pattern indicated by the DCI; or if there is an unavailable time unit, there are M consecutive available time units in N time units (M<N), and the first message is sent based on a quantity of time units included in the M consecutive available time units and a pattern that is indicated by the DCI in DMRS patterns that are indicated in the first information and that correspond to the quantity M of the consecutive time units.

In a possible implementation of the third aspect of embodiments of this application, the method further includes: receiving second information, where the second information indicates a first demodulation reference signal pattern, and the first demodulation reference signal pattern is one of the at least one demodulation reference signal pattern corresponding to the value of N. The sending the first message in an independent transmission manner in a first time unit includes:

sending the first message in the independent transmission manner in the first time unit based on the second information.

Based on the foregoing technical solution, in the first time unit, the communication apparatus sends the first message based on the DMRS pattern indicated by the second information. That is, a device that schedules the second information is used as the receiving device of the first message, so that the communication apparatus and the receiving device align a specific DMRS pattern for sending the first message, and a receive/transmit success rate of the first message is improved.

In a possible implementation of the third aspect of embodiments of this application, the sending the first message in an independent transmission manner in a first time unit includes: sending the first message in the independent transmission manner in the first time unit based on the first information.

Based on the foregoing technical solution, in the first time unit, the communication apparatus sends the first message based on a related transmitting parameter indicated by the first information. That is, a device that schedules the first information is used as the receiving device of the first message, so that the communication apparatus and the receiving device align a specific transmitting parameter for sending the first message, and a receive/transmit success rate of the first message is improved.

In a possible implementation of the third aspect of embodiments of this application, the first time unit is located after the P unavailable time units.

Optionally, the first time unit may alternatively be located before the P unavailable time units.

Based on the foregoing technical solution, to avoid transmission interruption in the N consecutive time units caused by the P unavailable time units, the first time unit for sending the first message may be located after the P unavailable time units in time domain.

Optionally, the communication apparatus may determine the P unavailable time units in a dynamic or static configured manner. For example, the P time units may become unavailable because other transmission preempts, due to preemption information (a need to send or receive other information), a channel that is of the communication apparatus and on which the first message is located. In addition, the preemption information may be determined by the communication apparatus in the P time units in the N consecutive time units and a time unit that is in the N consecutive time units and that is before the P time units. In this way, a specific implementation of the first time unit is provided, and the solution can be applicable to an application scenario of the P unavailable time units caused by preemption.

Optionally, the communication apparatus cancels sending of the first message in the first time unit located before the P unavailable time units in time domain.

In a possible implementation of the third aspect of embodiments of this application, the method may further include: receiving or detecting third information in a time unit located before the first time unit, where the third information is for determining that a transmitting parameter is a first sending parameter. In this case, a process of the sending the first message in an independent transmission manner in a first time unit may specifically include: sending the first message based on the first sending parameter in the independent transmission manner in the first time unit.

Based on the foregoing technical solution, when the first time unit is located after the P unavailable time units, the communication apparatus may send the first message in the first time unit by using the first sending parameter determined based on the received third information. The third information may be from the receiving device of the first message, so that the communication apparatus sends the first message based on an indication of the receiving device, to improve a receive success rate of the first message.

Optionally, the third information may be in a form of a signal. That is, receiving or detecting the third information may alternatively be represented by receiving or detecting the signal.

Optionally, there may be one or more pieces of third information. The communication apparatus may use, as a sending parameter in the first time unit, a first sending parameter determined based on third information that is received at the latest in time domain.

In a possible implementation of the third aspect of embodiments of this application, each of first time units includes a DMRS.

Optionally, the communication apparatus cancels sending of the first message in first time units, where a part of the first time units include no DMRS.

Based on the foregoing technical solution, each of the first time units includes the DMRS for demodulating a carried signal, so that after receiving the first message in the first time unit, the receiving device performs demodulation by using a plurality of DMRSs included in all of the first time units, to obtain the first message. In this way, a specific implementation of carrying the DMRS in the first time unit is provided, and the receiving device can determine, based on the plurality of DMRSs, to perform channel estimation in the first time unit in the manner other than the joint channel estimation.

In a possible implementation of the third aspect of embodiments of this application, a part of the first time units include no DMRS.

Based on the foregoing technical solution, the part of the first time units include no DMRS. That is, the communication apparatus uses a DMRS-less (DMRS-less) technology in the first time unit, to reduce time-domain density of DMRSs. In this way, a specific implementation of carrying a DMRS in the first time unit is provided, signaling overheads of the communication apparatus is reduced, and spectral efficiency is improved.

Optionally, for example, a time unit is a slot. The DMRS-less (DMRS-less) technology may indicate to reduce time-domain density of DMRSs in each slot, or place no DMRS in some slots but perform demodulation based on channel estimation of another slot in which a DMRS is placed. When channel estimation quality is ensured, DMRS overheads are reduced and spectral efficiency is improved by reducing a DMRS, so that a coverage capability of a system is improved.

In a possible implementation of the third aspect of embodiments of this application, the process of the sending the first message in an independent transmission manner in a first time unit may specifically include: sending the first message in the independent transmission manner in a time unit that includes a DMRS and that is in the first time units.

Optionally, the communication apparatus cancels sending of the first message in a first time unit that includes no DMRS.

Based on the foregoing technical solution, when the part of the first time units include no DMRS, the communication apparatus sends the first message only in the time unit including the DMRS. In this way, the receiving device demodulates the first message by using the DMRS in each time unit in the time unit that includes the DMRS and that is in the first time units, to improve a success rate of performing data demodulation by the receiving end of the first message in the first time unit by using the DMRS.

In a possible implementation of the third aspect of embodiments of this application, the process of the sending the first message in an independent transmission manner in a first time unit may specifically include: sending the first message in the independent transmission manner in the first time unit at a first frequency domain position, where the N consecutive time units are configured for sending the first message in the independent transmission manner at a second frequency domain position or a third frequency domain position, and the first frequency domain position is different from at least one of the second frequency domain position and the third frequency domain position.

Optionally, the first frequency domain position may indicate a carrier frequency value (for example, 2.4 gigahertz GHz or 6.0 GHz), or indicate a carrier frequency band (for example, 2.41 GHz to 2.42 GHz or 6.01 GHz to 6.03 GHz) of a bandwidth (for example, 10 megahertz MHz or 20 MHz), or the first frequency domain position may indicate an RB number or an RB index value. This is not limited herein.

Optionally, the second frequency domain position may include one or more frequency domain positions, or the third frequency domain position may include one or more frequency domain positions.

Based on the foregoing technical solution, the N consecutive time units are configured to send the first message in the joint transmission manner at a second frequency domain position or a third frequency domain position. That is, a plurality of groups of N consecutive time units are configured to perform data transmission by alternately using the second frequency domain position and the third frequency domain position for every adjacent groups of N consecutive time units, to obtain a frequency hopping gain. When there are P unavailable time units in the N consecutive time units, the communication apparatus may send the first message by using the first frequency domain position different from the second frequency domain position and/or the third frequency domain position, to increase a degree of differentiation between a frequency domain position of the first message carried in the first time unit and a frequency domain position in another group of N consecutive time units, so that a good frequency hopping gain is obtained.

In a possible implementation of the third aspect of embodiments of this application, the N consecutive time units further include a second time unit different from the first time unit, the second time unit does not include the P unavailable time units, and the method further includes: sending the first message in the independent transmission manner in the second time unit at the first frequency domain position, the second frequency domain position, the third frequency domain position, or a fourth frequency domain position.

Optionally, the fourth frequency domain position may be different from at least one of the second frequency domain position and the third frequency domain position.

Based on the foregoing technical solution, in the N consecutive time units, there may be a second time unit that is different from the P unavailable time units and that is different from the first time unit, and the first message is sent by using a plurality of possible frequency domain positions in the second time unit and the first time unit, to increase a degree of differentiation between frequency domain positions in different time units in the N consecutive time units, so that a good frequency hopping gain is obtained.

In a possible implementation of the third aspect of embodiments of this application, before the sending the first message in an independent transmission manner in a first time unit, the method further includes: determining a first index value, where the first index value is for determining a frequency domain position at which the first message is sent in the N consecutive time units; determining a second index value, where the first index value is for determining a frequency domain position at which the first message is sent in the first time unit; and/or determining a third index value, where the first index value is for determining a frequency domain position at which the first message is sent in the second time unit.

Based on the foregoing technical solution, the communication apparatus may determine the first index value in a configuration or preconfiguration manner, to make the frequency domain position at which the first message is sent in the N consecutive time units clear. Similarly, the frequency domain position for sending the first message may alternatively be made clear by using the second index value and the third index value. That is, the frequency domain position at which the communication apparatus sends the first message is limited, and subsequently, the receiving device of the first message also aligns, by using the index value, the frequency domain position at which the communication apparatus sends the first message, to improve a receive/transmit success rate of the first message.

In a possible implementation of the third aspect of embodiments of this application, the method further includes: determining a fourth index value based on a target index value, where the fourth index value is for determining a frequency domain position in a time unit after the N consecutive time units, and the target index value includes the first index value or the second index value.

Optionally, the fourth index value is for determining a frequency domain position in N consecutive time units adjacent to and after the N consecutive time units.

Based on the foregoing technical solution, the frequency domain position in the N consecutive time units adjacent to and after the N consecutive time units may be determined by using the first index value and the second index value, that is, may be determined in different manners. Flexibility of solution implementation is provided, and a signal receive/transmit success rate in the adjacent N consecutive time units is also improved.

In a possible implementation of the third aspect of embodiments of this application,

a frequency hopping count of the N consecutive time units includes a frequency hopping count of the first time unit; or
a frequency hopping count of the N consecutive time units includes a sum of a frequency hopping count of the first time unit and a value of a first parameter, where the first parameter includes one or more of the following:
a quantity of time units in the P unavailable time units, a quantity of time unit segments in the P unavailable time units, a quantity of time units in third time units, and a quantity of time unit segments in the third time units, where the third time unit is a time unit that is in the N consecutive time units and that is different from the first time unit.

Optionally, when the third time unit and the P unavailable time units are consecutive in time domain, a value of the quantity of time unit segments in the P unavailable time units is 1 and a value of the quantity of time unit segments in the third time units is 0, or a value of the quantity of time unit segments in the P unavailable time units is 0 and a value of the quantity of time unit segments in the third time units is 1.

Based on the foregoing technical solution, when the frequency hopping count of the N consecutive time units is determined, the frequency hopping count of the N consecutive time units may include only the frequency hopping count of the first time unit other than the P unavailable time units, or may further include the first parameter. The first parameter may be implemented by using one or more of the foregoing items. The frequency hopping count of the N consecutive time units including the unavailable time unit is determined in a plurality of manners, to improve flexibility of solution implementation.

In a possible implementation of the third aspect of embodiments of this application, a frequency hopping granularity of the first time unit is each time unit.

Optionally, a plurality of groups of N consecutive time units are configured as a frequency hopping granularity of every N consecutive time units.

Based on the foregoing technical solution, in the N consecutive time units, the frequency hopping granularity of each time unit may be set in the first time unit other than the P unavailable time units, so that frequency hopping is performed for a plurality of times in different time units in the N consecutive time units, to obtain a good frequency hopping gain.

In a possible implementation of the third aspect of embodiments of this application, a first repetition count of the first message indicating that the N consecutive time units are configured for sending in the joint transmission manner is 1. Before the sending the first message in an independent transmission manner in a first time unit, the method may further include: determining a second repetition count of the first message based on a comparison between a ratio of M to N and a first threshold, where the second repetition count is greater than or equal to 1, and M is a quantity of time units in the N consecutive time units, different from the P unavailable time units, and consecutive in time domain.

Optionally, when the ratio of M to N is greater than the first threshold, it is determined that the second repetition count of the first message is greater than 1; when the ratio of M to N is less than the first threshold, it is determined that the second repetition count of the first message is equal to 1; or when the ratio of M to N is equal to the first threshold, it is determined that the second repetition count of the first message is greater than (or equal to) 1.

Optionally, the first repetition count may be a count of nominal repetitions (nominal repetitions), and the second repetition count may be a count of actual repetitions (actual repetitions).

Based on the foregoing technical solution, when the first repetition count of the first message indicating that the N consecutive time units are configured for sending in the joint transmission manner is 1, for example, when the N consecutive time units are configured for transmitting a transport block processing over multi-slot physical uplink shared channel (TB processing over multi-slot PUSCH), the communication apparatus may determine the second repetition count of the first message based on the comparison between the ratio of M to N and the first threshold. That is, the communication apparatus determines a repetition count of the first message based on a length of an actually available first time unit other than the P unavailable time units in the N consecutive time units in time domain. The information transmission process is optimized based on the actual channel status, to further improve communication efficiency.

In a possible implementation of the third aspect of embodiments of this application, the first message includes uplink information, sidelink information, or downlink information.

It should be noted that the first message may be the uplink information, the sidelink information, the downlink information, or other information, for example, information carried on a physical random access channel (physical random access channel, PRACH). This is not limited herein.

In a possible implementation of the third aspect of embodiments of this application, the first information includes uplink-downlink slot configuration information.

Based on the foregoing technical solution, when performing communication in time division duplex (time division duplex, TDD) mode, the communication apparatus may determine the first information based on the uplink-downlink slot configuration information, that is, determine, based on the uplink-downlink slot configuration information, that the N consecutive time units are configured to receive the first message in the joint transmission manner. While a specific implementation of a process of determining the first information is provided, signaling overheads of configuring the first information in another manner can also be reduced, and spectral efficiency can be improved.

In a possible implementation of the third aspect of embodiments of this application, a process in which the first information is for determining the N consecutive time units specifically includes: determining, based on the first information, a quantity of time units for uplink transmission; and further determining the N consecutive time units based on the quantity of time units for uplink transmission.

Based on the foregoing technical solution, a specific implementation of determining the N consecutive time units based on the uplink-downlink slot configuration information is provided, to improve solution feasibility.

In a possible implementation of the third aspect of embodiments of this application, the time unit for uplink transmission includes at least one of the following: an uplink time unit, a flexible time unit, or a special time unit.

Optionally, there may be a plurality of values of N. To be specific, the value of N is equal to a sum of consecutive-slot quantities of at least one of the uplink time unit, the flexible time unit, and the special time unit.

Optionally, it is determined, in the configuration or preconfiguration manner, that the flexible time unit is included in the time unit for uplink transmission. For example, the communication apparatus receives additional signaling to indicate whether a flexible slot is an uplink slot or a downlink slot. Alternatively, the communication apparatus indicates that the flexible slot is available for the uplink transmission, and the flexible slot is directly used during uplink transmission without signaling indication.

Based on the foregoing technical solution, a plurality of implementations of the time unit for uplink transmission are provided, to improve solution feasibility.

A fourth aspect of embodiments of this application provides a communication method. The method is applied to a communication apparatus used as a receiving end. Specifically, the method may be performed by a terminal device (or a network device), or may be performed by a component (for example, a processor, a chip, or a chip system) of the terminal device (or the network device). In the method, the communication apparatus first determines first information, where the first information indicates that N consecutive time units are configured to receive a first message in a joint transmission manner, and N is an integer greater than 1; and then receives the first message in an independent transmission manner in a first time unit, where there are P unavailable time units in the N consecutive time units, the first time unit is different from the P unavailable time units, the independent transmission manner is different from the joint transmission manner, and P is an integer greater than 0.

Optionally, the first message may be a data channel/a control channel, data/information, a signal, or the like.

Optionally, the joint transmission manner may alternatively be represented in another form, for example, a bundling transmission manner, a cross-slot bundling transmission manner, or a multi-slot DMRS bundling sending manner.

Specifically, the communication apparatus may determine the first information through configuration or preconfiguration.

For example, when the first information is determined in a configuration manner, a signaling indication (for example, a joint channel estimation enabling indication/a joint sending enabling indication, or a directly indicated quantity N of time units for joint channel estimation/joint sending) may be received, to determine that the N consecutive time units are configured for sending the first message in the joint transmission manner. That is, it is determined that, when the receiving device needs to be supported in performing joint channel estimation, sending/transmission performed by the communication apparatus needs to meet at least one of the following: Precoding matrices are consistent, antenna ports are consistent, power control parameters are consistent, phases are consecutive, and both the $1^{st}$ time unit and the last time unit include a demodulation reference signal DMRS.

For another example, when the communication apparatus performs transmission in the joint transmission manner on an allocated resource, a transmission rule defined on the resource is that when the N consecutive time units are configured for sending the first message in the joint transmission manner, the joint transmission manner meets at least one of the following conditions: Precoding matrices are consistent, antenna ports are consistent, power control parameters are consistent, phases are consecutive, and both the $1^{st}$ time unit and the last time unit include a demodulation reference signal DMRS.

Based on the foregoing technical solution, the communication apparatus first determines the first information indicating that the N consecutive time units are configured to receive the first message in the joint transmission manner. To be specific, a receiving device that receives the first message performs joint channel estimation in the N bundled consecutive time units to obtain the first message; and when there are P unavailable time units in the N consecutive time units indicated by the first information, the communication apparatus receives the first message in the independent transmission manner different from the joint transmission manner in the first time unit different from the P unavailable time units. In this way, the first message can be transmitted in the first time unit in the N consecutive time units, and the communication apparatus may perform channel estimation in the first time unit in a manner other than the joint channel estimation, to implement communication in a plurality of bundled time units including an unavailable time unit, avoid communication interruption, and improve communication efficiency.

It should be noted that the time unit mentioned in this embodiment of this application may be at different granularities. For example, the time unit may be implemented in a form of a symbol, a slot, a subframe, a frame, or the like. This is not specifically limited herein.

Optionally, the first information may be determined by configuring the first information for the communication apparatus by a network device (an access network device or a core network device), or may be determined by preconfiguring the first information in the communication apparatus. This is not limited herein.

In a possible implementation of the fourth aspect of embodiments of this application, the first information includes configuration information, and the configuration information includes at least one of the following:

a value of N;
at least one demodulation reference signal pattern corresponding to a value of N;
at least one demodulation reference signal pattern corresponding to a time unit quantity value of 1; or
a first frequency hopping parameter for receiving the first message.

Optionally, the communication apparatus determines the first information through configuration. That is, the first information includes the configuration information indicating to implement the joint transmission manner in the N consecutive time units.

Based on the foregoing technical solution, the communication apparatus may determine the first information through configuration, determine the at least one parameter based on the configuration information included in the first information, and subsequently receive the first message in the first time unit based on the at least one parameter.

In a possible implementation of the fourth aspect of embodiments of this application, the first frequency hopping parameter for receiving the first message is associated with the value of N.

In a possible implementation of the fourth aspect of embodiments of this application, the first frequency hopping parameter is for determining a frequency domain position at which the first message is sent in the joint transmission manner in the N consecutive time units and/or a frequency domain position at which the first message is sent in the independent transmission manner in the first time unit.

Based on the foregoing technical solution, in the first time unit, the first frequency hopping parameter for receiving the first message may be associated with the value of N or the value of M, and may be for determining a corresponding frequency domain position, so that the communication apparatus can receive the first message based on the frequency domain position. In this way, the communication apparatus optimizes an information transmission process based on an actual channel status, to further improve communication efficiency.

In a possible implementation of the fourth aspect of embodiments of this application, the sending the first message in an independent transmission manner in a first time unit includes: sending the first message in the independent transmission manner in the first time unit based on a configured grant.

Based on the foregoing technical solution, if transmission is of the configured grant, namely, a configured grant type 1 (Configured Grant type 1, CG type 1), the communication apparatus can obtain the first information without indication of downlink control information DCI. Compared with a manner of determining, through the indication of the DCI, to receive the first message in the independent transmission manner in the first time unit, this can reduce signaling overheads, and improve spectral efficiency.

In a possible implementation of the fourth aspect of embodiments of this application, the receiving the first message in an independent transmission manner in a first time unit includes: receiving the first message in the independent transmission manner in the first time unit based on a configured grant type 2 (CG type 2) or a dynamic grant (Dynamic Grant, DG).

Based on the foregoing technical solution, when it is determined, in a CG type 2 or DG manner, to receive the first message in the independent transmission manner in the first time unit, because in the CG type 2 or DG manner, the DCI may indicate that different time unit quantities correspond to one demodulation reference signal pattern (DMRS pattern), or may correspond to a plurality of DMRS patterns, and indicate a to-be-selected pattern in the DCI, the communication apparatus is used as a device that sends the DCI, so that the communication apparatus and a transmitting device of the first message align a specific DMRS pattern for sending the first message, and a receive/transmit success rate of the first message is improved.

Optionally, the first information is carried in an RRC message.

Optionally, in a CG type 1 (without the DCI) transmission manner (that is, the indication of the DCI is not needed), the first information (RRC) indicates at least one of the following configurations:

If each time unit quantity (N or M) corresponds to one DMRS pattern, the first message is sent based on the corresponding DMRS pattern in N time units; or if there is an unavailable time unit, there are M consecutive available time units in N time units (M<N), and the first message is sent based on a quantity of time units included in the M consecutive available time units and a corresponding pattern indicated in the first information.

If each time unit quantity (N or M) corresponds to a plurality of DMRS patterns, one of the DMRS patterns may be defined as a default pattern (default pattern), and the first message is sent based on the corresponding default pattern in N time units; or if there is an unavailable time unit, there are M consecutive available time units in N time units (M<N), and the first message is sent based on a quantity of time units included in the M consecutive available time units and a corresponding default pattern indicated in the first information.

Optionally, in a CG type 2 transmission manner and a DG transmission manner (that is, through the indication of the DCI), the first information (RRC) indicates at least one of the several configurations.

If each time unit quantity (N or M) corresponds to one DMRS pattern, the first message is sent based on the corresponding DMRS pattern in N time units; or if there is an unavailable time unit, there are M consecutive available time units in N time units (M<N), and the first message is sent based on a quantity of time units included in the M consecutive available time units and a corresponding pattern indicated in the first information.

If each time unit quantity (N or M) corresponds to a plurality of DMRS patterns, and second information (the DCI) indicates one of the plurality of patterns, the first message is sent in N time units based on the corresponding pattern indicated by the DCI; or if there is an unavailable time unit, there are M consecutive available time units in N time units (M<N), and the first message is sent based on a quantity of time units included in the M consecutive available time units and a pattern that is indicated by the DCI in DMRS patterns that are indicated in the first information and that correspond to the quantity M of the consecutive time units.

In a possible implementation of the fourth aspect of embodiments of this application, the method further includes: sending second information, where the second information indicates a first demodulation reference signal pattern, and the first demodulation reference signal pattern is one of the at least one demodulation reference signal pattern corresponding to the value of N. The sending the first message in an independent transmission manner in a first time unit includes: sending the first message in the independent transmission manner in the first time unit based on the second information.

Based on the foregoing technical solution, in the first time unit, the communication apparatus receives the first message based on the DMRS pattern indicated by the second information. That is, the communication apparatus is used as a device that schedules the second information, so that the communication apparatus and the transmitting device that sends the first message align a specific DMRS pattern for receiving the first message, and a receive/transmit success rate of the first message is improved.

In a possible implementation of the fourth aspect of embodiments of this application, the sending the first message in an independent transmission manner in a first time unit includes: sending the first message in the independent transmission manner in the first time unit based on the first information.

Based on the foregoing technical solution, in the first time unit, the communication apparatus receives the first message based on a related transmitting parameter indicated by the first information. That is, the communication apparatus is used as a device that schedules the first information, so that the communication apparatus and the transmitting device that sends the first message align a specific transmitting parameter for sending the first message, and a receive/transmit success rate of the first message is improved.

In a possible implementation of the fourth aspect of embodiments of this application, the first time unit is located after the P unavailable time units.

Based on the foregoing technical solution, to avoid transmission interruption in the N consecutive time units caused by the P unavailable time units, the first time unit for sending the first message may be located after the P unavailable time units in time domain.

Optionally, the communication apparatus may determine the P unavailable time units in a dynamic or static configured manner. For example, the P time units may become unavailable because other transmission preempts, due to preemption information (a need to send or receive other information), a channel that is of the communication apparatus and on which the first message is located. In addition, the preemption information may be determined by the communication apparatus in the P time units in the N consecutive time units and a time unit that is in the N consecutive time units and that is before the P time units. In this way, a specific implementation of the first time unit is provided, and the solution can be applicable to an application scenario of the P unavailable time units caused by preemption.

Optionally, the communication apparatus cancels sending of the first message in the first time unit located before the P unavailable time units in time domain.

In a possible implementation of the fourth aspect of embodiments of this application, the method may further include: receiving or detecting third information in a time unit located before the first time unit, where the third information is for determining that a receiving parameter is a first receiving parameter; and a process of the receiving the first message in an independent transmission manner in a first time unit may specifically include: receiving the first message based on the first receiving parameter in the independent transmission manner in the first time unit.

Based on the foregoing technical solution, when the first time unit is located after the P unavailable time units, the communication apparatus may receive the first message in the first time unit by using the first sending parameter determined based on the sent third information. The third information may be sent to the sending device of the first message, so that the transmitting device sends the first message based on an indication of the communication apparatus, to improve a receive success rate of the first message.

Optionally, the third information may be in a form of a signal. That is, receiving or detecting the third information may alternatively be represented by receiving or detecting the signal.

Optionally, there may be one or more pieces of third information. The communication apparatus may use, as a receiving parameter in the first time unit, a first receiving parameter determined based on third information that is sent at the latest in time domain.

In a possible implementation of the fourth aspect of embodiments of this application, each of first time units includes a DMRS.

Optionally, the communication apparatus cancels receiving of the first message in first time units, where a part of the first time units include no DMRS.

Based on the foregoing technical solution, each of the first time units includes the DMRS for demodulating a carried signal, so that after receiving the first message in the first time unit, the communication apparatus performs demodulation by using a plurality of DMRSs included in all of the first time units, to obtain the first message. A specific implementation of carrying the DMRS in the first time unit is provided.

In a possible implementation of the fourth aspect of embodiments of this application, a part of the first time units include no DMRS.

Based on the foregoing technical solution, the part of the first time units include no DMRS. That is, a transmitting end of the first message uses a DMRS-less (DMRS-less) technology in the first time unit, to reduce time-domain density of DMRSs. In this way, a specific implementation of carrying a DMRS in the first time unit is provided, signaling overheads is reduced, and spectral efficiency is improved.

Optionally, for example, a time unit is a slot. The DMRS-less (DMRS-less) technology may indicate to reduce time-domain density of DMRSs in each slot, or place no DMRS in some slots but perform demodulation based on channel estimation of another slot in which a DMRS is placed. When channel estimation quality is ensured, DMRS overheads are reduced and spectral efficiency is improved by reducing a DMRS, so that a coverage capability of a system is improved.

In a possible implementation of the fourth aspect of embodiments of this application, the process of the receiving the first message in an independent transmission manner in a first time unit may specifically include: receiving the first message in the independent transmission manner in a time unit that includes a DMRS and that is in the first time units.

Optionally, the communication apparatus cancels receiving of the first message in a first time unit that includes no DMRS.

Based on the foregoing technical solution, when the part of the first time units include no DMRS, the communication apparatus receives the first message only in the time unit including the DMRS. In this way, the communication apparatus demodulates the first message by using the DMRS in each time unit in the time unit that includes the DMRS and that is in the first time units, to improve a success rate of performing data demodulation by the communication apparatus in the first time unit by using the DMRS.

In a possible implementation of the fourth aspect of embodiments of this application, the process of the receiving the first message in an independent transmission manner in a first time unit may specifically include: receiving the first message in the independent transmission manner in the first time unit at a first frequency domain position, where the N consecutive time units are configured to receive the first message in the joint transmission manner at a second frequency domain position or a third frequency domain position, and the first frequency domain position is different from at least one of the second frequency domain position and the third frequency domain position.

Optionally, the first frequency domain position may indicate a carrier frequency value (for example, 2.4 gigahertz GHz or 6.0 GHz), or indicate a carrier frequency band (for example, 2.41 GHz to 2.42 GHz or 6.01 GHz to 6.03 GHz) of a bandwidth (for example, 10 megahertz MHz or 20 MHz), or the first frequency domain position may indicate an RB number or an RB index value. This is not limited herein.

Optionally, the second frequency domain position may include one or more frequency domain positions, or the third frequency domain position may include one or more frequency domain positions.

Based on the foregoing technical solution, the N consecutive time units are configured to send the first message in the joint transmission manner at a second frequency domain position or a third frequency domain position. That is, a plurality of groups of N consecutive time units are configured to perform data transmission by alternately using the second frequency domain position and the third frequency domain position for every adjacent groups of N consecutive time units, to obtain a frequency hopping gain. When there are P unavailable time units in the N consecutive time units, the communication apparatus may receive the first message by using the first frequency domain position different from the second frequency domain position and/or the third frequency domain position, to increase a degree of differentiation between a frequency domain position of the first message carried in the first time unit and a frequency domain position in another group of N consecutive time units, so that a good frequency hopping gain is obtained.

In a possible implementation of the fourth aspect of embodiments of this application, the N consecutive time units further include a second time unit different from the first time unit, the second time unit does not include the P unavailable time units, and the method may further include: receiving the first message in the independent transmission manner in the second time unit at the first frequency domain position, the second frequency domain position, the third frequency domain position, or a fourth frequency domain position.

Optionally, the fourth frequency domain position may be different from at least one of the second frequency domain position and the third frequency domain position.

Based on the foregoing technical solution, in the N consecutive time units, there may be a second time unit that is different from the P unavailable time units and that is different from the first time unit, and the first message is received by using a plurality of possible frequency domain positions in the second time unit and the first time unit, to increase a degree of differentiation between frequency domain positions in different time units in the N consecutive time units, so that a good frequency hopping gain is obtained.

In a possible implementation of the fourth aspect of embodiments of this application, before the sending the first message in an independent transmission manner in a first time unit, the method further includes: determining a first index value, where the first index value is for determining a frequency domain position at which the first message is sent in the N consecutive time units; determining a second index value, where the first index value is for determining a frequency domain position at which the first message is sent in the first time unit; and/or determining a third index value, where the first index value is for determining a frequency domain position at which the first message is sent in the second time unit.

Based on the foregoing technical solution, the communication apparatus may determine the first index value in a configuration or preconfiguration manner, to make the frequency domain position at which the first message is received in the N consecutive time units clear. Similarly, the frequency domain position for receiving the first message may alternatively be made clear by using the second index value and the third index value. That is, the frequency domain position at which the communication apparatus receives the first message is limited, and subsequently, the transmitting device of the first message also aligns, by using the index value, the frequency domain position at which the communication apparatus receives the first message, to improve a receive/transmit success rate of the first message.

In a possible implementation of the fourth aspect of embodiments of this application, a fourth index value is determined based on a target index value, where the fourth index value is for determining a frequency domain position in a time unit after the N consecutive time units, and the target index value includes the first index value or the second index value.

Optionally, the fourth index value is for determining a frequency domain position in N consecutive time units adjacent to and after the N consecutive time units.

Based on the foregoing technical solution, the frequency domain position in the N consecutive time units adjacent to and after the N consecutive time units may be determined by using the first index value and the second index value, that is, may be determined in different manners. Flexibility of solution implementation is provided, and a signal receive/transmit success rate in the adjacent N consecutive time units is also improved.

In a possible implementation of the fourth aspect of embodiments of this application, a frequency hopping count of the N consecutive time units includes a frequency hopping count of the first time unit; or

a frequency hopping count of the N consecutive time units includes a sum of a frequency hopping count of the M consecutive time units and a value of a first parameter, where the first parameter includes one or more of the following: a quantity of time units in the P unavailable time units, a quantity of time unit segments in the P unavailable time units, a quantity of time units in third time units, and a quantity of time unit segments in the third time units, where the third time unit is a time unit that is in the N consecutive time units and that is different from the first time unit.

Optionally, when the third time unit and the P unavailable time units are consecutive in time domain, a value of the quantity of time unit segments in the P unavailable time units is 1 and a value of the quantity of time unit segments in the third time units is 0, or a value of the quantity of time unit segments in the P unavailable time units is 0 and a value of the quantity of time unit segments in the third time units is 1.

Based on the foregoing technical solution, when the frequency hopping count of the N consecutive time units is determined, the frequency hopping count of the N consecutive time units may include only a frequency hopping count of the first time unit other than the P unavailable time units, or may further include the first parameter. The first parameter may be implemented by using one or more of the foregoing items. The frequency hopping count of the N consecutive time units including the unavailable time unit is determined in a plurality of manners, to improve flexibility of solution implementation.

In a possible implementation of the fourth aspect of embodiments of this application,

a frequency hopping granularity of the first time unit is each time unit.

Based on the foregoing technical solution, in the N consecutive time units, the frequency hopping granularity of each time unit may be set in the first time unit other than the P unavailable time units, so that frequency hopping is performed for a plurality of times in different time units in the N consecutive time units, to obtain a good frequency hopping gain.

In a possible implementation of the fourth aspect of embodiments of this application, a first repetition count of the first message indicating that the N consecutive time units are configured to receive in the independent transmission manner is 1. Before the receiving the first message in an independent transmission manner in a first time unit, the method may further include: determining a second repetition count of the first message based on a comparison between a ratio of M to N and a first threshold, where the second repetition count is greater than or equal to 1, and M is a quantity of time units in the N consecutive time units, different from the P unavailable time units, and consecutive in time domain.

Optionally, when the ratio of M to N is greater than the first threshold, it is determined that the second repetition count of the first message is greater than 1; when the ratio of M to N is less than the first threshold, it is determined that the second repetition count of the first message is equal to 1; or when the ratio of M to N is equal to the first threshold, it is determined that the second repetition count of the first message is greater than (or equal to) 1.

Optionally, the first repetition count may be a count of nominal repetitions (nominal repetitions), and the second repetition count may be a count of actual repetitions (actual repetitions).

Based on the foregoing technical solution, when the first repetition count of the first message indicating that the N consecutive time units are configured for sending in the joint transmission manner is 1, for example, when the N consecutive time units are configured for transmitting a transport block processing over multi-slot physical uplink shared channel (TB processing over multi-slot PUSCH), the communication apparatus may determine the second repetition count of the first message based on the comparison between the ratio of M to N and the first threshold. That is, the communication apparatus determines a repetition count of the first message based on a length of M actually available consecutive time units other than the P unavailable time units in the N consecutive time units in time domain. The information transmission process is optimized based on the actual channel status, to further improve communication efficiency.

In a possible implementation of the fourth aspect of embodiments of this application, the first message includes uplink information, sidelink information, or downlink information.

It should be noted that the first message may be the uplink information, the sidelink information, the downlink information, or other information, for example, information carried on a physical random access channel (physical random access channel, PRACH). This is not limited herein.

In a possible implementation of the fourth aspect of embodiments of this application, the first information includes uplink-downlink slot configuration information.

Based on the foregoing technical solution, when performing communication in time division duplex (time division duplex, TDD) mode, the communication apparatus may determine the first information based on the uplink-downlink slot configuration information, that is, determine, based on the uplink-downlink slot configuration information, that the N consecutive time units are configured to receive the first message in the joint transmission manner. While a specific implementation of a process of determining the first information is provided, signaling overheads of configuring the first information in another manner can also be reduced, and spectral efficiency can be improved.

In a possible implementation of the fourth aspect of embodiments of this application, a process in which the first information is for determining the N consecutive time units specifically includes: determining, based on the first information, a quantity of time units for uplink transmission; and further determining the N consecutive time units based on the quantity of time units for uplink transmission.

Based on the foregoing technical solution, a specific implementation of determining the N consecutive time units based on the uplink-downlink slot configuration information is provided, to improve solution feasibility.

In a possible implementation of the fourth aspect of embodiments of this application, the time unit for uplink transmission includes at least one of the following: an uplink time unit, a flexible time unit, or a special time unit.

Optionally, there may be a plurality of values of N. To be specific, the value of N is equal to a sum of consecutive-slot quantities of at least one of the uplink time unit, the flexible time unit, and the special time unit.

Optionally, it is determined, in the configuration or preconfiguration manner, that the flexible time unit is included in the time unit for uplink transmission. For example, the communication apparatus receives additional signaling to indicate whether a flexible slot is an uplink slot or a downlink slot. Alternatively, the communication apparatus indicates that the flexible slot is available for the uplink transmission, and the flexible slot is directly used during uplink transmission without signaling indication.

Based on the foregoing technical solution, a plurality of implementations of the time unit for uplink transmission are provided, to improve solution feasibility.

A fifth aspect of embodiments of this application provides a communication method. The method is applied to a communication apparatus used as a receiving end. Specifically, the method may be performed by a terminal device (or a network device), or may be performed by a component (for example, a processor, a chip, or a chip system) of the terminal device (or the network device). In the method, the communication apparatus first receives first information, where the first information includes uplink-downlink slot configuration information. Then, the communication apparatus determines N consecutive time units based on the first information, where the N consecutive time units are configured for sending a first message in a joint transmission manner, N is an integer greater than 1, and the joint transmission manner meets at least one of the following: Precoding matrices are consistent, antenna ports are consistent, power control parameters are consistent, phases are consecutive, and both the 1st time unit and the last time unit include a demodulation reference signal DMRS.

Based on the foregoing technical solution, when performing communication in time division duplex (time division duplex, TDD) mode, the communication apparatus may determine, based on the first information including the uplink-downlink slot configuration information, the N consecutive time units configured to send the first message in the joint transmission manner, and subsequently may send the first message in the joint transmission manner in the N consecutive time units, so that a receiving end of the first message receives the first message in a joint channel estimation manner. Signaling overheads of configuring the first information in another manner can be reduced, and spectral efficiency can be improved.

In a possible implementation of the fifth aspect of embodiments of this application, a process of determining the N consecutive time units based on the first information specifically includes: determining, based on the first information, a quantity of time units for uplink transmission; and further determining the N consecutive time units based on the quantity of time units for uplink transmission.

Based on the foregoing technical solution, a specific implementation of determining the N consecutive time units based on the uplink-downlink slot configuration information is provided, to improve solution feasibility.

In a possible implementation of the fifth aspect of embodiments of this application, the time unit for uplink transmission includes at least one of the following: an uplink time unit, a flexible time unit, or a special time unit.

Optionally, there may be a plurality of values of N. To be specific, the value of N is equal to a sum of consecutive-slot quantities of at least one of the uplink time unit, the flexible time unit, and the special time unit.

Optionally, it is determined, in a configuration or preconfiguration manner, that the flexible time unit is included in the time unit for uplink transmission. For example, the communication apparatus receives additional signaling to indicate whether a flexible slot is an uplink slot or a downlink slot. Alternatively, the communication apparatus indicates that the flexible slot is available for the uplink transmission, and the flexible slot is directly used during uplink transmission without signaling indication.

Based on the foregoing technical solution, a plurality of implementations of the time unit for uplink transmission are provided, to improve solution feasibility.

A sixth aspect of embodiments of this application provides a communication apparatus, including a processing unit and a transceiver unit.

The processing unit is configured to determine first information, where the first information indicates that N consecutive time units are configured for sending a first message in a joint transmission manner, and N is an integer greater than 1.

The transceiver unit is configured to: when there are P unavailable time units in the N consecutive time units, send the first message in the joint transmission manner in M consecutive time units, where the M consecutive time units are a part of the N consecutive time units, the M consecutive time units do not include the P unavailable time units, M is an integer greater than 1, and P is an integer greater than 0.

Optionally, the first message may be a data channel/a control channel, data/information, a signal, or the like.

In a possible implementation of the sixth aspect of embodiments of this application, the first information includes configuration information, and the configuration information includes at least one of the following:

  a value of N;
  at least one demodulation reference signal pattern corresponding to a value of N;
  a value of M;
  at least one demodulation reference signal pattern corresponding to a value of M; or
  a first frequency hopping parameter for sending the first message.

In a possible implementation of the sixth aspect of embodiments of this application, the first frequency hopping parameter of the first message is associated with the value of N or the value of M.

In a possible implementation of the sixth aspect of embodiments of this application, the first frequency hopping parameter is for determining:

  a frequency domain position at which the first message is sent in the joint transmission manner in the N consecutive time units; and/or
  a frequency domain position at which the first message is sent in the joint transmission manner in the M consecutive time units.

In a possible implementation of the sixth aspect of embodiments of this application, the transceiver unit is specifically configured to:
send the first message in the joint transmission manner in the M consecutive time units based on a configured grant.

In a possible implementation of the sixth aspect of embodiments of this application, the transceiver unit is further configured to:
receive second information, where the second information indicates a first demodulation reference signal pattern, and the first demodulation reference signal pattern is one of the at least one demodulation reference signal corresponding to the value of N or one of the at least one demodulation reference signal corresponding to the value of M.

The transceiver unit is specifically configured to:

send the first message in the joint transmission manner in the M consecutive time units based on the second information.

In a possible implementation of the sixth aspect of embodiments of this application, the transceiver unit is specifically configured to:

send the first message in the joint transmission manner in the M consecutive time units based on the first information.

In a possible implementation of the sixth aspect of embodiments of this application, the M consecutive time units are located after the P unavailable time units.

In a possible implementation of the sixth aspect of embodiments of this application, the transceiver unit is further configured to:

receive or detect third information in a time unit located before the M consecutive time units, where the third information is for determining that a transmitting parameter is a first sending parameter.

The transceiver unit is specifically configured to:

send the first message based on the first sending parameter in the joint transmission manner in the M consecutive time units.

Optionally, the third information may be in a form of a signal. That is, receiving or detecting the third information may alternatively be represented by receiving or detecting the signal.

In a possible implementation of the sixth aspect of embodiments of this application, each of the M consecutive time units includes a DMRS.

In a possible implementation of the sixth aspect of embodiments of this application, a part of the M consecutive time units include no DMRS.

In a possible implementation of the sixth aspect of embodiments of this application, both the 1st time unit and the last time unit in the M consecutive time units include a DMRS.

In a possible implementation of the sixth aspect of embodiments of this application, the transceiver unit is specifically configured to:

send the first message in the joint transmission manner in the M consecutive time units at a first frequency domain position.

In a possible implementation of the sixth aspect of embodiments of this application, the N consecutive time units are configured for sending the first message in the joint transmission manner at a second frequency domain position or a third frequency domain position, and the first frequency domain position is different from at least one of the second frequency domain position and the third frequency domain position.

In a possible implementation of the sixth aspect of embodiments of this application, the N consecutive time units further include K consecutive time units that are non-consecutive to the M consecutive time units, the K consecutive time units do not include the P unavailable time units, and the transceiver unit is further configured to:

send the first message in the joint transmission manner in the K consecutive time units at the first frequency domain position, the second frequency domain position, the third frequency domain position, or a fourth frequency domain position, where the fourth frequency domain position is different from the first frequency domain position.

In a possible implementation of the sixth aspect of embodiments of this application, the processing unit is further configured to:

determine a first index value, where the first index value is for determining a frequency domain position at which the first message is sent in the N consecutive time units;
determine a second index value, where the first index value is for determining a frequency domain position at which the first message is sent in the M consecutive time units; and/or
determine a third index value, where the first index value is for determining a frequency domain position at which the first message is sent in the K consecutive time units.

In a possible implementation of the sixth aspect of embodiments of this application, the processing unit is further configured to:

determine a fourth index value based on a target index value, where the fourth index value is for determining a frequency domain position in a time unit after the N consecutive time units, and the target index value includes the first index value or the second index value.

In a possible implementation of the sixth aspect of embodiments of this application, the transceiver unit is further configured to:

send the first message in an independent transmission manner in a first time unit, where the first time unit is at least one of the N consecutive time units, the first time unit is different from the P time units, the second time unit is non-consecutive to the M consecutive time units, and the independent transmission manner is different from the joint transmission manner.

In a possible implementation of the sixth aspect of embodiments of this application, a first repetition count of the first message indicating that the N consecutive time units are configured for sending in the joint transmission manner is 1.

The processing unit is further configured to:

determine a second repetition count of the first message based on a comparison between a ratio of M to N and a first threshold, where the second repetition count is greater than or equal to 1.

In a possible implementation of the sixth aspect of embodiments of this application, the first message includes uplink information, sidelink information, or downlink information.

In the sixth aspect of embodiments of this application, composition modules of the communication apparatus may be further configured to perform the steps performed in the possible implementations of the first aspect. For details, refer to the first aspect. Details are not described herein again.

A seventh aspect of embodiments of this application provides a communication apparatus, including a processing unit and a transceiver unit.

The processing unit is configured to determine first information, where the first information indicates that N consecutive time units are configured to receive a first message in a joint transmission manner, and N is an integer greater than 1.

The transceiver unit is configured to: when there are P unavailable time units in the N consecutive time units, receive the first message in the joint transmission manner in M consecutive time units, where the M consecutive time units are a part of the N consecutive time units, the M consecutive time units do not include the P unavailable time units, M is an integer greater than 1, and P is an integer greater than 0.

Optionally, the first message may be a data channel/a control channel, data/information, a signal, or the like.

In a possible implementation of the seventh aspect of embodiments of this application, the first information includes configuration information, and the configuration information includes at least one of the following:

a value of N;
at least one demodulation reference signal pattern corresponding to a value of N;
a value of M;
at least one demodulation reference signal pattern corresponding to a value of M; or
a first frequency hopping parameter for sending the first message.

In a possible implementation of the seventh aspect of embodiments of this application, the first frequency hopping parameter of the first message is associated with the value of N or the value of M.

In a possible implementation of the seventh aspect of embodiments of this application, the first frequency hopping parameter is for determining:

a frequency domain position at which the first message is sent in the joint transmission manner in the N consecutive time units; and/or
a frequency domain position at which the first message is sent in the joint transmission manner in the M consecutive time units.

In a possible implementation of the seventh aspect of embodiments of this application, the transceiver unit is specifically configured to:

receive the first message in the joint transmission manner in the M consecutive time units based on a configured grant.

In a possible implementation of the seventh aspect of embodiments of this application, the transceiver unit is further configured to:

send third information, where the third information indicates a first demodulation reference signal pattern, and the first demodulation reference signal pattern is one of the at least one demodulation reference signal pattern corresponding to the value of N or one of the at least one demodulation reference signal pattern corresponding to the value of M.

The transceiver unit is specifically configured to:

receive the first message in the joint transmission manner in the M consecutive time units based on the third information.

In a possible implementation of the seventh aspect of embodiments of this application, the transceiver unit is specifically configured to:

receive the first message in the joint transmission manner in the M consecutive time units based on the first information.

In a possible implementation of the seventh aspect of embodiments of this application, the M consecutive time units are located after the P unavailable time units.

In a possible implementation of the seventh aspect of embodiments of this application, the transceiver unit is further configured to:

send third information in a time unit located before the M consecutive time units, where the third information is for determining that a receiving parameter is a first receiving parameter.

The transceiver unit is specifically configured to:

receive the first message based on the first receiving parameter in the joint transmission manner in the M consecutive time units.

In a possible implementation of the seventh aspect of embodiments of this application, each of the M consecutive time units includes a DMRS.

In a possible implementation of the seventh aspect of embodiments of this application, a part of the M consecutive time units include no DMRS.

In a possible implementation of the seventh aspect of embodiments of this application, both the 1st time unit and the last time unit in the M consecutive time units include a DMRS.

In a possible implementation of the seventh aspect of embodiments of this application, the transceiver unit is specifically configured to:

receive the first message in the joint transmission manner in the M consecutive time units at a first frequency domain position.

In a possible implementation of the seventh aspect of embodiments of this application, the N consecutive time units are configured to receive the first message in the joint transmission manner at a second frequency domain position or a third frequency domain position, and the first frequency domain position is different from at least one of the second frequency domain position and the third frequency domain position.

In a possible implementation of the seventh aspect of embodiments of this application, the N consecutive time units further include K consecutive time units that are non-consecutive to the M consecutive time units, the K consecutive time units do not include the P unavailable time units, and the transceiver unit is further configured to:

receive the first message in the joint transmission manner in the K consecutive time units at the first frequency domain position, the second frequency domain position, the third frequency domain position, or a fourth frequency domain position, where the fourth frequency domain position is different from the first frequency domain position.

In a possible implementation of the seventh aspect of embodiments of this application, the processing unit is further configured to:

determine a first index value, where the first index value is for determining a frequency domain position at which the first message is sent in the N consecutive time units;

determine a second index value, where the first index value is for determining a frequency domain position at which the first message is sent in the M consecutive time units; and/or

determine a third index value, where the first index value is for determining a frequency domain position at which the first message is sent in the K consecutive time units.

In a possible implementation of the seventh aspect of embodiments of this application, the processing unit is further configured to:

determine a fourth index value based on a target index value, where the fourth index value is for determining a frequency domain position in a time unit after the N consecutive time units, and the target index value includes the first index value or the second index value.

In a possible implementation of the seventh aspect of embodiments of this application, the transceiver unit is further configured to:

receive the first message in an independent transmission manner in a second time unit, where the second time unit is at least one of the N consecutive time units, the second time unit is different from the P time units, the second time unit is non-consecutive to the M consecutive time units, and the independent transmission manner is different from the joint transmission manner.

In a possible implementation of the seventh aspect of embodiments of this application, a first repetition count of the first message indicating that the N consecutive time units are configured for sending in the joint transmission manner is 1.

The processing unit is further configured to:

determine a second repetition count of the first message based on a comparison between a ratio of M to N and a first threshold, where the second repetition count is greater than or equal to 1.

In a possible implementation of the seventh aspect of embodiments of this application, the first message includes uplink information, sidelink information, or downlink information.

In the seventh aspect of embodiments of this application, composition modules of the communication apparatus may be further configured to perform the steps performed in the possible implementations of the second aspect. For details, refer to the second aspect. Details are not described herein again.

An eighth aspect of embodiments of this application provides a communication apparatus, including a processing unit and a transceiver unit.

The processing unit is configured to determine first information, where the first information indicates that N consecutive time units are configured for sending a first message in a joint transmission manner, and N is an integer greater than 1.

The transceiver unit is configured to: when there are P unavailable time units in the N consecutive time units, send the first message in an independent transmission manner in a first time unit, where the first time unit is different from the P unavailable time units, the independent transmission manner is different from the joint transmission manner, and P is an integer greater than 0.

Optionally, the first message may be a data channel/a control channel, data/information, a signal, or the like.

In a possible implementation of the eighth aspect of embodiments of this application, the first information includes configuration information, and the configuration information includes at least one of the following:

a value of N;
at least one demodulation reference signal pattern corresponding to a value of N;
at least one demodulation reference signal pattern corresponding to a time unit quantity value of 1; or
a first frequency hopping parameter for receiving the first message.

In a possible implementation of the eighth aspect of embodiments of this application, the first frequency hopping parameter of the first message is associated with the value of N.

In a possible implementation of the eighth aspect of embodiments of this application, the first frequency hopping parameter is for determining:

a frequency domain position at which the first message is sent in the joint transmission manner in the N consecutive time units; and/or
a frequency domain position at which the first message is sent in the independent transmission manner in the first time unit.

In a possible implementation of the eighth aspect of embodiments of this application, the transceiver unit is specifically configured to:
send the first message in the independent transmission manner in the first time unit based on a configured grant.

In a possible implementation of the eighth aspect of embodiments of this application, the transceiver unit is further configured to:
receive second information, where the second information indicates a first demodulation reference signal pattern, and the first demodulation reference signal pattern is one of the at least one demodulation reference signal pattern corresponding to the value of N.

The transceiver unit is specifically configured to:
send the first message in the independent transmission manner in the first time unit based on the second information.

In a possible implementation of the eighth aspect of embodiments of this application, the transceiver unit is specifically configured to:
send the first message in the independent transmission manner in the first time unit based on the first information.

In a possible implementation of the eighth aspect of embodiments of this application, the first time unit is located after the P unavailable time units.

In a possible implementation of the eighth aspect of embodiments of this application, the transceiver unit is further configured to:
receive or detect third information in a time unit located before the first time unit, where the third information is for determining that a transmitting parameter is a first sending parameter.

The transceiver unit is specifically configured to:
send the first message based on the first sending parameter in the independent transmission manner in the first time unit.

Optionally, the third information may be in a form of a signal. That is, receiving or detecting the third information may alternatively be represented by receiving or detecting the signal.

In a possible implementation of the eighth aspect of embodiments of this application, each of first time units includes a DMRS.

In a possible implementation of the eighth aspect of embodiments of this application, a part of the first time units include no DMRS.

In a possible implementation of the eighth aspect of embodiments of this application, the transceiver unit is specifically configured to:
send the first message in the independent transmission manner in a time unit that includes a DMRS and that is in the first time units.

In a possible implementation of the eighth aspect of embodiments of this application, the transceiver unit is specifically configured to:

send the first message in the independent transmission manner in the first time unit at a first frequency domain position, where the N consecutive time units are configured for sending the first message in the independent transmission manner at a second frequency domain position or a third frequency domain position, and the first frequency domain position is different from at least one of the second frequency domain position and the third frequency domain position.

In a possible implementation of the eighth aspect of embodiments of this application, the N consecutive time units further include a second time unit different from the first time unit, the second time unit does not include the P unavailable time units, and the apparatus is further configured to:

send the first message in the independent transmission manner in the second time unit at the first frequency domain position, the second frequency domain position, the third frequency domain position, or a fourth frequency domain position.

In a possible implementation of the eighth aspect of embodiments of this application, the processing unit is further configured to:

determine a first index value, where the first index value is for determining a frequency domain position at which the first message is sent in the N consecutive time units;

determine a second index value, where the first index value is for determining a frequency domain position at which the first message is sent in the first time unit; and/or

determine a third index value, where the first index value is for determining a frequency domain position at which the first message is sent in the second time unit.

In a possible implementation of the eighth aspect of embodiments of this application, the processing unit is further configured to:

determine a fourth index value based on a target index value, where the fourth index value is for determining a frequency domain position in a time unit after the N consecutive time units, and the target index value includes the first index value or the second index value.

In a possible implementation of the eighth aspect of embodiments of this application,

a frequency hopping granularity of the first time unit is each time unit.

In a possible implementation of the eighth aspect of embodiments of this application, a first repetition count of the first message indicating that the N consecutive time units are configured for sending in the joint transmission manner is 1.

The processing unit is further configured to:

determine a second repetition count of the first message based on a comparison between a ratio of M to N and a first threshold, where M is a quantity of time units in the N consecutive time units, different from the P unavailable time units, and consecutive in time domain, and the second repetition count is greater than or equal to 1.

In a possible implementation of the eighth aspect of embodiments of this application, the first message includes uplink information, sidelink information, or downlink information.

In the eighth aspect of embodiments of this application, composition modules of the communication apparatus may be further configured to perform the steps performed in the possible implementations of the third aspect. For details, refer to the third aspect. Details are not described herein again.

A ninth aspect of embodiments of this application provides a communication apparatus, including a processing unit and a transceiver unit.

The processing unit is configured to determine first information, where the first information indicates that N consecutive time units are configured to receive a first message in a joint transmission manner, and N is an integer greater than 1.

The transceiver unit is configured to: when there are P unavailable time units in the N consecutive time units, receive the first message in an independent transmission manner in a first time unit, where the first time unit is different from the P unavailable time units, the independent transmission manner is different from the joint transmission manner, and P is an integer greater than 0.

Optionally, the first message may be a data channel/a control channel, data/information, a signal, or the like.

In a possible implementation of the ninth aspect of embodiments of this application, the first information includes configuration information, and the configuration information includes at least one of the following:

a value of N;

at least one demodulation reference signal pattern corresponding to a value of N;

at least one demodulation reference signal pattern corresponding to a time unit quantity value of 1; or

a first frequency hopping parameter for receiving the first message.

In a possible implementation of the ninth aspect of embodiments of this application, the first frequency hopping parameter of the first message is associated with the value of N.

In a possible implementation of the ninth aspect of embodiments of this application, the first frequency hopping parameter is for determining:

a frequency domain position at which the first message is sent in the joint transmission manner in the N consecutive time units; and/or

a frequency domain position at which the first message is sent in the independent transmission manner in the first time unit.

In a possible implementation of the ninth aspect of embodiments of this application, the transceiver unit is specifically configured to:

receive the first message in the independent transmission manner in the first time unit based on a configured grant.

In a possible implementation of the ninth aspect of embodiments of this application, the transceiver unit is further configured to:

send second information, where the second information indicates a first demodulation reference signal pattern, and the first demodulation reference signal pattern is one of the at least one demodulation reference signal pattern corresponding to the value of N.

The transceiver unit is specifically configured to:

receive the first message in the independent transmission manner in the first time unit based on the second information.

In a possible implementation of the ninth aspect of embodiments of this application, the transceiver unit is specifically configured to:

receive the first message in the independent transmission manner in the first time unit based on the first information.

In a possible implementation of the ninth aspect of embodiments of this application, the first time unit is located after the P unavailable time units.

In a possible implementation of the ninth aspect of embodiments of this application, the transceiver unit is further configured to:

receive or detect third information in a time unit located before the first time unit, where the third information is for determining that a receiving parameter is a first receiving parameter.

The transceiver unit is specifically configured to:

receive the first message based on the first receiving parameter in the independent transmission manner in the first time unit.

Optionally, the third information may be in a form of a signal. That is, receiving or detecting the third information may alternatively be represented by receiving or detecting the signal.

In a possible implementation of the ninth aspect of embodiments of this application, each of first time units includes a DMRS.

In a possible implementation of the ninth aspect of embodiments of this application, a part of the first time units include no DMRS.

In a possible implementation of the ninth aspect of embodiments of this application, the transceiver unit is specifically configured to:

receive the first message in the independent transmission manner in a time unit that includes a DMRS and that is in the first time units.

In a possible implementation of the ninth aspect of embodiments of this application, the transceiver unit is specifically configured to:

receive the first message in the independent transmission manner in the first time unit at a first frequency domain position, where the N consecutive time units are configured to receive the first message in the joint transmission manner at a second frequency domain position or a third frequency domain position, and the first frequency domain position is different from at least one of the second frequency domain position and the third frequency domain position.

In a possible implementation of the ninth aspect of embodiments of this application, the N consecutive time units further include a second time unit different from the first time unit, the second time unit does not include the P unavailable time units, and the transceiver unit is further configured to:

receive the first message in the independent transmission manner in the second time unit at the first frequency domain position, the second frequency domain position, the third frequency domain position, or a fourth frequency domain position.

In a possible implementation of the ninth aspect of embodiments of this application, the processing unit is further configured to:

determine a first index value, where the first index value is for determining a frequency domain position at which the first message is sent in the N consecutive time units;

determine a second index value, where the first index value is for determining a frequency domain position at which the first message is sent in the first time unit; and/or

determine a third index value, where the first index value is for determining a frequency domain position at which the first message is sent in the second time unit.

In a possible implementation of the ninth aspect of embodiments of this application, the processing unit is further configured to:

determine a fourth index value based on a target index value, where the fourth index value is for determining a frequency domain position in a time unit after the N consecutive time units, and the target index value includes the first index value or the second index value.

In a possible implementation of the ninth aspect of embodiments of this application, a frequency hopping granularity of the first time unit is each time unit.

In a possible implementation of the ninth aspect of embodiments of this application, a first repetition count of the first message indicating that the N consecutive time units are configured to receive in the joint transmission manner is 1. Before the receiving the first message in an independent transmission manner in a first time unit, the processing unit is further configured to:

determine a second repetition count of the first message based on a comparison between a ratio of M to N and a first threshold, where M is a quantity of time units in the N consecutive time units, different from the P unavailable time units, and consecutive in time domain, and the second repetition count is greater than or equal to 1.

In a possible implementation of the ninth aspect of embodiments of this application, the first message includes uplink information, sidelink information, or downlink information.

In the ninth aspect of embodiments of this application, composition modules of the communication apparatus may be further configured to perform the steps performed in the possible implementations of the fourth aspect. For details, refer to the fourth aspect. Details are not described herein again.

A tenth aspect of embodiments of this application provides a communication apparatus, including a processing unit and a transceiver unit.

The transceiver unit is configured to receive first information, where the first information includes uplink-downlink slot configuration information.

The processing unit is configured to determine N consecutive time units based on the first information, where the N consecutive time units are configured for sending a first message in a joint transmission manner, N is an integer greater than 1, and the joint transmission manner meets at least one of the following: Precoding matrices are consistent, antenna ports are consistent, power control parameters are consistent, phases are consecutive, and both the $1^{st}$ time unit and the last time unit include a demodulation reference signal DMRS.

In a possible implementation of the tenth aspect of embodiments of this application, the processing unit is specifically configured to:

determine, based on the first information, a quantity of time units for uplink transmission; and
determine the N consecutive time units based on the quantity of time units for uplink transmission.

In a possible implementation of the tenth aspect of embodiments of this application,
the time unit for uplink transmission includes at least one of the following: an uplink time unit, a flexible time unit, or a special time unit.

Optionally, there may be a plurality of values of N. To be specific, the value of N is equal to a sum of consecutive-slot quantities of at least one of the uplink time unit, the flexible time unit, and the special time unit.

In a possible implementation of the tenth aspect of embodiments of this application, the processing unit is specifically configured to:

determine, in a configuration or preconfiguration manner, that the flexible time unit is included in the time unit for uplink transmission.

An eleventh aspect of embodiments of this application provides a communication method. The method is applied to a communication apparatus used as a transmitting end. Specifically, the method may be performed by a terminal device (or a network device), or may be performed by a component (for example, a processor, a chip, or a chip system) of the terminal device (or the network device). In the method, the communication apparatus first determines first indication information, where the first indication information indicates to send N repetitions on a first channel on a first time domain resource, and N is an integer greater than 1; and then sends M repetitions on the first channel on the first time domain resource when a second time domain resource and a third time domain resource overlap in time domain, where the second time domain resource is a time domain resource occupied by the M repetitions on the first channel, the third time domain resource is a time domain resource occupied by one or more second channels, and M is an integer greater than or equal to 1 and less than or equal to N.

Based on the foregoing technical solution, when the communication apparatus determines that the second time domain resource and the third time domain resource overlap, that is, when the communication apparatus determines that there is at least one overlapping time unit in the time domain resource occupied by the M repetitions on the first channel and the time domain resource occupied by the one or more second channels, the communication apparatus sends the M repetitions on the first time domain resource for sending the N repetitions on the first channel. When time domain resources of a plurality of channels overlap, at least a part of the N repetitions carried on the first channel are sent. This avoids higher communication complexity caused by blind detection performed by a receiving device of the N repetitions on the first channel in the overlapping time unit because the receiving device does not receive the N repetitions, and improves communication efficiency.

Optionally, second information carried on the second channel is repeatedly transmitted on the third time domain resource for one or more times.

Optionally, the first channel and the second channel have a same priority or different priorities.

Optionally, the first channel is a physical uplink shared channel PUSCH, and the second channel is a physical uplink control channel PUCCH.

Optionally, a subcarrier spacing of the first time domain resource is the same as or different from a subcarrier spacing of the second time domain resource.

Optionally, a channel type of the first channel is the same as or different from a channel type of the second channel.

Optionally, the first channel is for uplink transmission, sidelink transmission, and downlink transmission.

Optionally, the second channel is for uplink transmission, sidelink transmission, and downlink transmission.

Optionally, the first channel is the same as the second channel, or the first channel is different from the second channel.

Optionally, the communication apparatus determines the first time domain resource and the second time domain resource in a configuration or preconfiguration manner.

Optionally, the first channel is a legitimate first channel. To be specific, the first time domain resource for sending the first channel is not occupied by another configuration or channel.

Optionally, the communication apparatus determines the first indication information in a configuration or preconfiguration manner.

Optionally, the N repetitions on the first channel include a MAC protocol data unit (MAC PDU) repeated for N times, and the MAC PDU may be a padding MAC PDU (Padding MAC PDU).

Based on the foregoing technical solution, the first channel and the second channel may be obtained through configuration in the plurality of different manners above, to improve flexibility of solution implementation.

In a possible implementation of the eleventh aspect of embodiments of this application, sending of the first channel is canceled when the second time domain resource and the third time domain resource do not overlap in time domain.

Optionally, that sending of the first channel is canceled indicates that sending of at least one repetition on the first channel is canceled, that sending of the N repetitions on the first channel is canceled, or that sending of information or a signal carried on the first channel is canceled.

Based on the foregoing technical solution, when determining that the second time domain resource and the third time domain resource do not overlap, that is, when determining that any time unit in the time domain resource occupied by the M repetitions on the first channel and any time unit in the time domain resource occupied by the one or more second channels do not overlap, the communication apparatus cancels sending of the first channel, to reduce communication complexity and reduce signaling overheads.

In a possible implementation of the eleventh aspect of embodiments of this application, the sending M repetitions on the first channel on the first time domain resource includes: sending the M repetitions on the first channel on the second time domain resource.

In a possible implementation of the eleventh aspect of embodiments of this application, the method further includes: sending N-M repetitions on the first channel on a fourth time domain resource, where the fourth time domain resource is in the first time domain resource, and is different from the second time domain resource.

Based on the foregoing technical solution, on the fourth time domain resource different from the second time domain resource, the communication apparatus may alternatively send another repetition on the first channel, so that a receiving device of the first channel receives and processes the first information on the third time domain resource.

In a possible implementation of the eleventh aspect of embodiments of this application, the M repetitions on the first channel are sent on the first time domain resource when at least one of the following conditions is met: A time domain resource on which any one of the N repetitions is located and the third time domain resource overlap; a time domain resource on which the 1st repetition in the N repetitions is located and the third time domain resource overlap; or a time domain resource on which a repetition whose redundancy version RV value is 0 and that is in the N repetitions is located and the third time domain resource overlap.

Based on the foregoing technical solution, while a plurality of different conditions for the communication apparatus to determine to send the M repetitions on the first channel on the first time domain resource are provided, this helps reduce complexity of a determining process and improve communication efficiency.

In a possible implementation of the eleventh aspect of embodiments of this application, the method may further include: determining second indication information, where the second indication information indicates a repetition type on the first channel. In this case, the sending M repetitions carried on the first channel on the first time domain resource includes: sending, on the first time domain resource based on the repetition type, the M repetitions carried on the first channel.

Optionally, the communication apparatus determines the second indication information in a configuration or preconfiguration manner.

Optionally, the repetition type is a type A (Type A) or a type B (Type B).

Based on the foregoing technical solution, the communication apparatus sends the M repetitions on the first channel based on the repetition type indicated by the second indication information, so that a specific implementation of sending the first information is provided, and a receiving device of the M repetitions on the first channel may alternatively receive the M repetitions on the first channel based on the repetition type indicated by the second indication information. In this way, the communication apparatus and the receiving device align the repetition type of the first information, and a receive/transmit success rate of the first information is improved.

A twelfth aspect of embodiments of this application provides a communication method. The method is applied to a communication apparatus used as a transmitting end. Specifically, the method may be performed by a terminal device (or a network device), or may be performed by a component (for example, a processor, a chip, or a chip system) of the terminal device (or the network device). In the method, the communication apparatus first determines first indication information, where the first indication information indicates to send N repetitions on a first channel on a first time domain resource, and N is an integer greater than 1; and receives M repetitions on the first channel on the first time domain resource when a second time domain resource and a third time domain resource overlap in time domain, where the second time domain resource is a time domain resource occupied by the M repetitions on the first channel, the third time domain resource is a time domain resource occupied by one or more second channels, and M is an integer greater than or equal to 1 and less than or equal to N.

Based on the foregoing technical solution, when the communication apparatus determines that the second time domain resource and the third time domain resource overlap, that is, when the communication apparatus determines that there is at least one overlapping time unit in the time domain resource occupied by the M repetitions on the first channel and the time domain resource occupied by the one or more second channels, the communication apparatus receives the M repetitions on the first time domain resource for receiving the N repetitions on the first channel. When time domain resources of a plurality of channels overlap, at least a part of the N repetitions carried on the first channel are received. This avoids higher communication complexity caused by blind detection performed by a receiving device of the N repetitions on the first channel in the overlapping time unit because the receiving device does not receive the N repetitions, and improves communication efficiency.

Optionally, second information carried on the second channel is repeatedly transmitted on the third time domain resource for one or more times.

Optionally, the first channel and the second channel have a same priority or different priorities.

Optionally, the first channel is a physical uplink shared channel PUSCH, and the second channel is a physical uplink control channel PUCCH.

Optionally, a subcarrier spacing of the first time domain resource is the same as or different from a subcarrier spacing of the second time domain resource.

Optionally, a channel type of the first channel is the same as or different from a channel type of the second channel.

Optionally, the first channel is for uplink transmission, sidelink transmission, and downlink transmission.

Optionally, the second channel is for uplink transmission, sidelink transmission, and downlink transmission.

Optionally, the first channel is the same as the second channel, or the first channel is different from the second channel.

Optionally, the communication apparatus determines the first time domain resource and the second time domain resource in a configuration or preconfiguration manner.

Optionally, the first channel is a legitimate first channel. To be specific, the first time domain resource for receiving the first channel is not occupied by another configuration or channel.

Optionally, the N repetitions on the first channel include a MAC protocol data unit (MAC PDU) repeated for N times, and the MAC PDU may be a padding MAC PDU (Padding MAC PDU).

Optionally, the communication apparatus determines the first indication information in a configuration or preconfiguration manner.

Based on the foregoing technical solution, the first channel and the second channel may be obtained through configuration in the plurality of different manners above, to improve flexibility of solution implementation.

In a possible implementation of the twelfth aspect of embodiments of this application, receiving of the first channel is canceled when the second time domain resource and the third time domain resource do not overlap in time domain.

Optionally, that receiving of the first channel is canceled indicates that receiving of at least one repetition on the first channel is canceled, that receiving of the N repetitions on the first channel is canceled, or that receiving of information or a signal carried on the first channel is canceled.

Based on the foregoing technical solution, when determining that the second time domain resource and the third time domain resource do not overlap, that is, when determining that any time unit in the time domain resource occupied by the M repetitions on the first channel and any time unit in the time domain resource occupied by the one or more second channels do not overlap, the communication apparatus cancels receiving of the first channel, to reduce communication complexity and reduce signaling overheads.

In a possible implementation of the twelfth aspect of embodiments of this application, the receiving M repetitions on the first channel on the first time domain resource includes:
receiving the M repetitions on the first channel on the second time domain resource.

In a possible implementation of the twelfth aspect of embodiments of this application, the method further includes:
receiving N-M repetitions on the first channel on a fourth time domain resource, where the fourth time domain resource is in the first time domain resource, and is different from the second time domain resource.

Based on the foregoing technical solution, on the fourth time domain resource different from the second time domain resource, the communication apparatus may alternatively receive another repetition on the first channel, so that a receiving device of the first channel receives and processes the first information on the third time domain resource.

In a possible implementation of the twelfth aspect of embodiments of this application, the M repetitions on the first channel are received on the first time domain resource when at least one of the following conditions is met:

A time domain resource on which any one of the N repetitions is located and the third time domain resource overlap;

a time domain resource on which the 1st repetition in the N repetitions is located and the third time domain resource overlap; or

a time domain resource on which a repetition whose redundancy version RV value is 0 and that is in the N repetitions is located and the third time domain resource overlap.

Based on the foregoing technical solution, while a plurality of different conditions for the communication apparatus to determine to send the M repetitions on the first channel on the first time domain resource are provided, this helps reduce complexity of a determining process and improve communication efficiency.

A thirteenth aspect of embodiments of this application provides a communication apparatus, including a processing unit and a transceiver unit.

The processing unit is configured to determine first indication information, where the first indication information indicates to send N repetitions on a first channel on a first time domain resource, and N is an integer greater than 1.

The transceiver unit is configured to send M repetitions on the first channel on the first time domain resource when a second time domain resource and a third time domain resource overlap in time domain, where the second time domain resource is a time domain resource occupied by the M repetitions on the first channel, the third time domain resource is a time domain resource occupied by one or more second channels, and M is an integer greater than or equal to 1 and less than or equal to N.

Optionally, second information carried on the second channel is repeatedly transmitted in each time unit in the third time domain resource for one or more times.

Optionally, the first channel and the second channel have a same priority or different priorities.

Optionally, the first channel is a physical uplink shared channel PUSCH, and the second channel is a physical uplink control channel PUCCH.

Optionally, a subcarrier spacing of the first time domain resource is the same as or different from a subcarrier spacing of the second time domain resource.

Optionally, a channel type of the first channel is the same as or different from a channel type of the second channel.

Optionally, the first channel is for uplink transmission, sidelink transmission, and downlink transmission.

Optionally, the second channel is for uplink transmission, sidelink transmission, and downlink transmission.

Optionally, the first channel is the same as the second channel, or the first channel is different from the second channel.

Optionally, the communication apparatus determines the first indication information in a configuration or preconfiguration manner.

Optionally, the communication apparatus determines the first time domain resource and the second time domain resource in a configuration or preconfiguration manner.

Optionally, the first channel is a legitimate first channel. To be specific, the first time domain resource for sending the first channel is not occupied by another configuration or channel.

Optionally, the N repetitions on the first channel include a MAC protocol data unit (MAC PDU) repeated for N times, and the MAC PDU may be a padding MAC PDU (Padding MAC PDU).

In a possible implementation of the thirteenth aspect of embodiments of this application, the processing unit is specifically configured to:

cancel sending of the first channel when the second time domain resource and the third time domain resource do not overlap in time domain.

Optionally, that sending of the first channel is canceled indicates that sending of at least one repetition on the first channel is canceled, that sending of the N repetitions on the first channel is canceled, or that sending of information or a signal carried on the first channel is canceled.

In a possible implementation of the thirteenth aspect of embodiments of this application, the transceiver unit is specifically configured to:

send the M repetitions on the first channel on the second time domain resource.

In a possible implementation of the thirteenth aspect of embodiments of this application, the transceiver unit is further configured to:

send N-M repetitions on the first channel on a fourth time domain resource, where the fourth time domain resource is in the first time domain resource, and is different from the second time domain resource.

In a possible implementation of the thirteenth aspect of embodiments of this application, the transceiver unit is configured to send the M repetitions on the first channel on the first time domain resource when at least one of the following conditions is met:

A time domain resource on which any one of the N repetitions is located and the third time domain resource overlap;

a time domain resource on which the 1st repetition in the N repetitions is located and the third time domain resource overlap; or

a time domain resource on which a repetition whose redundancy version RV value is 0 and that is in the N repetitions is located and the third time domain resource overlap.

In the thirteenth aspect of embodiments of this application, composition modules of the communication apparatus may be further configured to perform the steps performed in the possible implementations of the eleventh aspect. For details, refer to the eleventh aspect. Details are not described herein again.

A fourteenth aspect of embodiments of this application provides a communication apparatus, including a processing unit and a transceiver unit.

The processing unit is configured to determine first indication information, where the first indication information indicates to send N repetitions on a first channel on a first time domain resource, and N is an integer greater than 1.

The transceiver unit is configured to receive M repetitions on the first channel on the first time domain resource when a second time domain resource and a third time domain resource overlap in time domain, where the second time domain resource is a time domain resource occupied by the M repetitions on the first channel, the third time domain resource is a time domain resource occupied by one or more second channels, and M is an integer greater than or equal to 1 and less than or equal to N.

Optionally, second information carried on the second channel is repeatedly transmitted in each time unit in the third time domain resource for one or more times.

Optionally, the first channel and the second channel have a same priority or different priorities.

Optionally, the first channel is a physical uplink shared channel PUSCH, and the second channel is a physical uplink control channel PUCCH.

Optionally, a subcarrier spacing of the first time domain resource is the same as or different from a subcarrier spacing of the second time domain resource.

Optionally, a channel type of the first channel is the same as or different from a channel type of the second channel.

Optionally, the first channel is for uplink transmission, sidelink transmission, and downlink transmission.

Optionally, the second channel is for uplink transmission, sidelink transmission, and downlink transmission.

Optionally, the first channel is the same as the second channel, or the first channel is different from the second channel.

Optionally, the communication apparatus determines the first time domain resource and the second time domain resource in a configuration or preconfiguration manner.

Optionally, the first channel is a legitimate first channel. To be specific, the first time domain resource for receiving the first channel is not occupied by another configuration or channel.

Optionally, the N repetitions on the first channel include a MAC protocol data unit (MAC PDU) repeated for N times, and the MAC PDU may be a padding MAC PDU (Padding MAC PDU).

In a possible implementation of the fourteenth aspect of embodiments of this application, the processing unit is further configured to:

cancel receiving of the first channel when the second time domain resource and the third time domain resource do not overlap in time domain.

Optionally, that receiving of the first channel is canceled indicates that receiving of at least one repetition on the first channel is canceled, that receiving of the N repetitions on the first channel is canceled, or that receiving of information or a signal carried on the first channel is canceled.

In a possible implementation of the fourteenth aspect of embodiments of this application, the transceiver unit is specifically configured to:

receive the M repetitions on the first channel on the second time domain resource.

In a possible implementation of the fourteenth aspect of embodiments of this application, the transceiver unit is further configured to:

receive N-M repetitions on the first channel on a fourth time domain resource, where the fourth time domain resource is in the first time domain resource, and is different from the second time domain resource.

In a possible implementation of the fourteenth aspect of embodiments of this application, the transceiver unit is configured to receive the M repetitions on the first channel on the first time domain resource when at least one of the following conditions is met:

A time domain resource on which any one of the N repetitions is located and the third time domain resource overlap;

a time domain resource on which the 1$^{st}$ repetition in the N repetitions is located and the third time domain resource overlap; or

a time domain resource on which a repetition whose redundancy version RV value is 0 and that is in the N repetitions is located and the third time domain resource overlap.

In the fourteenth aspect of embodiments of this application, composition modules of the communication apparatus may be further configured to perform the steps performed in the possible implementations of the twelfth aspect. For details, refer to the twelfth aspect. Details are not described herein again.

A fifteenth aspect of embodiments of this application provides a communication apparatus. The communication apparatus includes at least one processor and an interface circuit. The interface circuit is configured to provide a program or instructions for the at least one processor. The at least one processor is configured to execute the program or the instructions, so that the communication apparatus implements the method according to any one of the first aspect or the possible implementations of the first aspect, the method according to any one of the third aspect or the possible implementations of the third aspect, the method according to any one of the fifth aspect or the possible implementations of the fifth aspect, or the method according to any one of the eleventh aspect or the possible implementations of the eleventh aspect.

A sixteenth aspect of embodiments of this application provides a communication apparatus. The communication apparatus includes at least one processor and an interface circuit. The interface circuit is configured to provide a program or instructions for the at least one processor. The at least one processor is configured to execute the program or the instructions, so that the communication apparatus implements the method according to any one of the second aspect or the possible implementations of the second aspect, the method according to any one of the fourth aspect or the possible implementations of the fourth aspect, or the method according to any one of the twelfth aspect or the possible implementations of the twelfth aspect.

A seventeenth aspect of embodiments of this application provides a computer-readable storage medium that stores one or more computer-executable instructions. When the computer-executable instructions are executed by a processor, the processor performs the method according to any one of the first aspect or the possible implementations of the first aspect, the method according to any one of the third aspect or the possible implementations of the third aspect, the method according to any one of the fifth aspect or the possible implementations of the fifth aspect, or the method according to any one of the eleventh aspect or the possible implementations of the eleventh aspect.

An eighteenth aspect of embodiments of this application provides a computer-readable storage medium that stores one or more computer-executable instructions. When the computer-executable instructions are executed by a processor, the processor performs the method according to any one of the second aspect or the possible implementations of the second aspect, the method according to any one of the fourth aspect or the possible implementations of the fourth aspect, or the method according to any one of the twelfth aspect or the possible implementations of the twelfth aspect.

A nineteenth aspect of embodiments of this application provides a computer program product (which is also referred to as a computer program) that stores one or more computers. When the computer program product is executed by a processor, the processor performs the method according to any one of the first aspect or the possible implementations of the first aspect, the method according to any one of the third aspect or the possible implementations of the third aspect, the method according to any one of the fifth aspect or the possible implementations of the fifth aspect, or the method according to any one of the eleventh aspect or the possible implementations of the eleventh aspect.

A twentieth aspect of embodiments of this application provides a computer program product that stores one or more computers. When the computer program product is executed by a processor, the processor performs the method according to any one of the second aspect or the possible implementations of the second aspect, the method according to any one of the fourth aspect or the possible implementations of the fourth aspect, or the method according to any one of the twelfth aspect or the possible implementations of the twelfth aspect.

A twenty-first aspect of embodiments of this application provides a chip system. The chip system includes at least one processor, configured to support a communication apparatus in implementing the function according to any one of the first aspect or the possible implementations of the first aspect, the function according to any one of the third aspect or the possible implementations of the third aspect, the function according to any one of the fifth aspect or the possible implementations of the fifth aspect, or the function according to any one of the eleventh aspect or the possible implementations of the eleventh aspect. In a possible design, the chip system may further include a memory. The memory is configured to store program instructions and data that are necessary for the communication apparatus. The chip system may include a chip, or may include the chip and another discrete component. Optionally, the chip system further includes an interface circuit. The interface circuit provides program instructions and/or data for the at least one processor.

A twenty-second aspect of embodiments of this application provides a chip system. The chip system includes at least one processor, configured to support a communication apparatus in implementing the function according to any one of the second aspect or the possible implementations of the second aspect, the function according to any one of the fourth aspect or the possible implementations of the fourth aspect, or the function according to any one of the twelfth aspect or the possible implementations of the twelfth aspect. In a possible design, the chip system may further include a memory. The memory is configured to store program instructions and data that are necessary for the communication apparatus. The chip system may include a chip, or may include the chip and another discrete component. Optionally, the chip system further includes an interface circuit. The interface circuit provides program instructions and/or data for the at least one processor.

A twenty-third aspect of embodiments of this application provides a communication system. The communication system includes the communication apparatus in the sixth aspect and the communication apparatus in the seventh aspect; the communication system includes the communication apparatus in the eighth aspect and the communication apparatus in the ninth aspect; the communication system includes the communication apparatus in the tenth aspect; the communication system includes the communication apparatus in the thirteenth aspect; and/or the communication system includes the communication apparatus in the fourteenth aspect.

For technical effects brought by the sixth aspect, the eighth aspect, the tenth aspect, the fifteenth aspect, the seventeenth aspect, the nineteenth aspect, the twenty-first aspect, the twenty-second aspect, and the twenty-third aspect, or any one of the possible implementations, refer to the technical effects brought by the second aspect or different possible implementations of the second aspect, or refer to the technical effects brought by the fourth aspect or different possible implementations of the fourth aspect. Details are not described herein again. Alternatively, refer to the technical effects brought by the eleventh aspect or different possible implementations of the eleventh aspect. Details are not described herein again.

For technical effects brought by the seventh aspect, the ninth aspect, the sixteenth aspect, the eighteenth aspect, the twentieth aspect, the twenty-second aspect, and the twenty-third aspect, or any one of the possible implementations, refer to the technical effects brought by the first aspect or different possible implementations of the first aspect, or refer to the technical effects brought by the third aspect or different possible implementations of the third aspect. Details are not described herein again. Alternatively, refer to the technical effects brought by the fifth aspect or different possible implementations of the fifth aspect. Details are not described herein again. Alternatively, refer to the technical effects brought by the twelfth aspect or different possible implementations of the twelfth aspect. Details are not described herein again.

It can be learned from the foregoing technical solutions that some embodiments provided in this application have the following advantage: The communication apparatus first determines the first information indicating that the N consecutive time units are configured for sending the first message in the joint transmission manner. To be specific, the receiving device that receives the first message performs joint channel estimation in the N bundled consecutive time units to obtain the first message; and when there are P unavailable time units in the N consecutive time units indicated by the first information, the communication apparatus sends the first message in the joint transmission manner in the M consecutive time units different from the P unavailable time units. In this way, the first message can be transmitted in the M consecutive time units in the N consecutive time units, and the receiving device may perform joint channel estimation in the M consecutive time units, to implement communication in the plurality of bundled time units including the unavailable time unit, avoid communication interruption, and improve communication efficiency.

**BRIEF DESCRIPTION OF DRAWINGS**

FIG. 1 is a schematic diagram of uplink transmission implementation according to an embodiment of this application;
FIG. 2 is a schematic diagram of a system architecture according to an embodiment of this application;
FIG. 3 is a schematic diagram of a communication method according to an embodiment of this application;
FIG. 4-1 is a schematic diagram of data transmission implementation in a communication method according to an embodiment of this application;
FIG. 4-2 is another schematic diagram of data transmission implementation in a communication method according to an embodiment of this application;
FIG. 4-3 is another schematic diagram of data transmission implementation in a communication method according to an embodiment of this application;
FIG. 5-1 is another schematic diagram of data transmission implementation in a communication method according to an embodiment of this application;
FIG. 5-2 is another schematic diagram of data transmission implementation in a communication method according to an embodiment of this application;
FIG. 6-1 is another schematic diagram of data transmission implementation in a communication method according to an embodiment of this application;
FIG. 6-2 is another schematic diagram of data transmission implementation in a communication method according to an embodiment of this application;
FIG. 6-3 is another schematic diagram of data transmission implementation in a communication method according to an embodiment of this application;
FIG. 6-4 is another schematic diagram of data transmission implementation in a communication method according to an embodiment of this application;
FIG. 6-5 is another schematic diagram of data transmission implementation in a communication method according to an embodiment of this application;
FIG. 6-6 is another schematic diagram of data transmission implementation in a communication method according to an embodiment of this application;

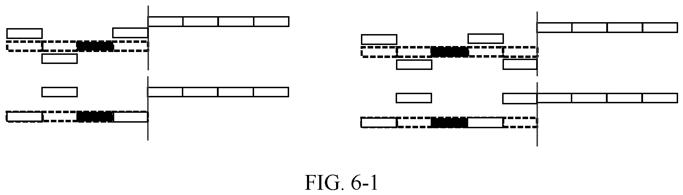

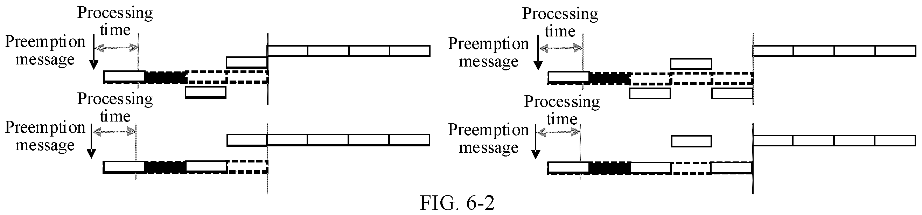

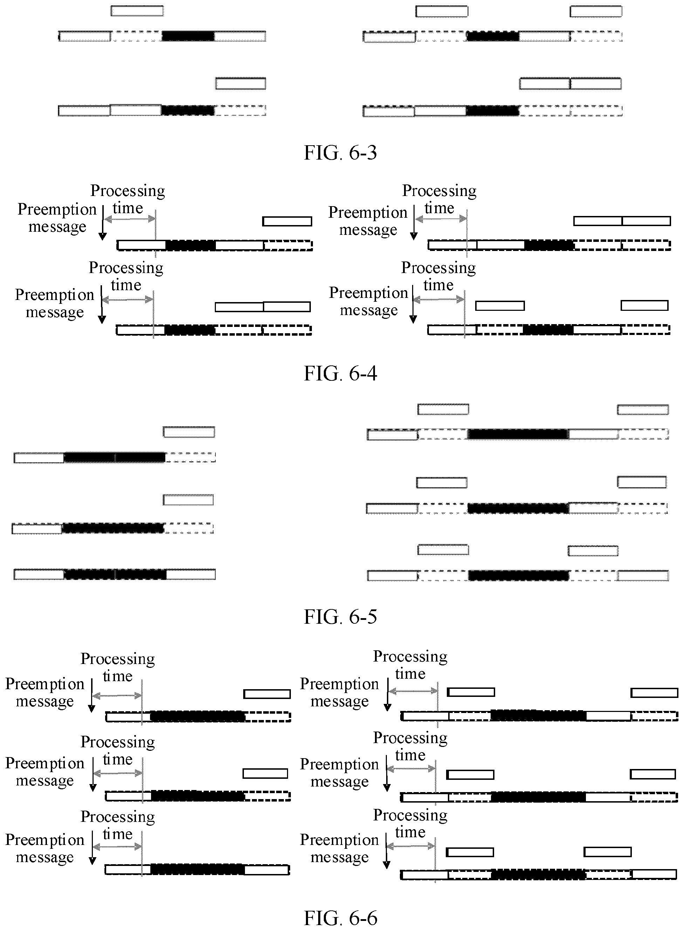

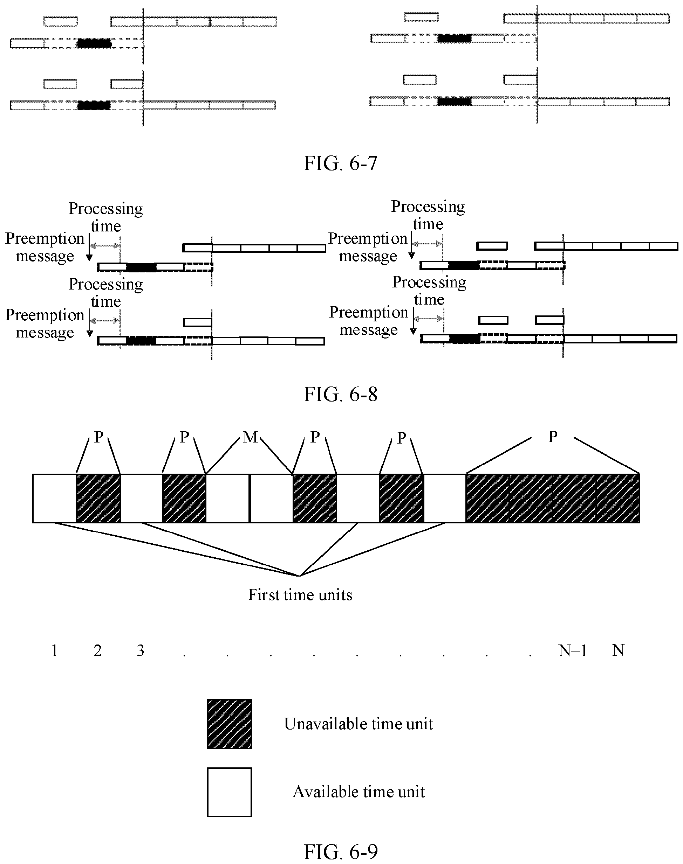

FIG. 6-7 is another schematic diagram of data transmission implementation in a communication method according to an embodiment of this application;
FIG. 6-8 is another schematic diagram of data transmission implementation in a communication method according to an embodiment of this application;
FIG. 6-9 is another schematic diagram of data transmission implementation in a communication method according to an embodiment of this application;

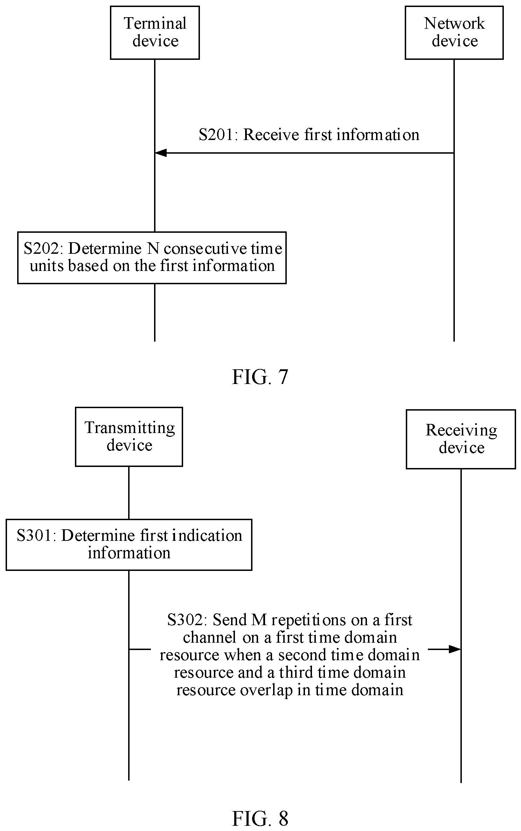

FIG. 7 is another schematic diagram of a communication method according to an embodiment of this application;
FIG. 8 is another schematic diagram of a communication method according to an embodiment of this application;

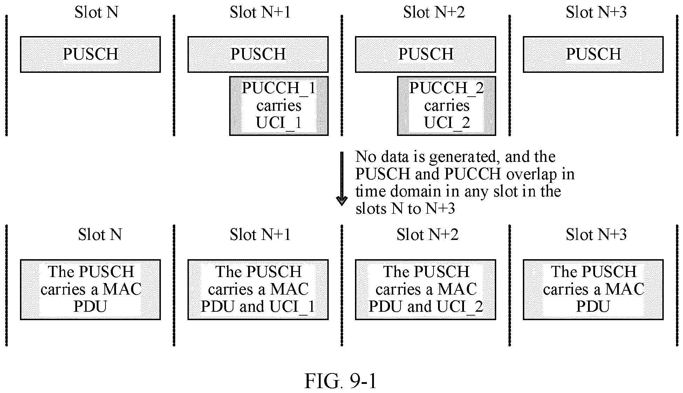

FIG. 9-1 is another schematic diagram of data transmission implementation in a communication method according to an embodiment of this application;

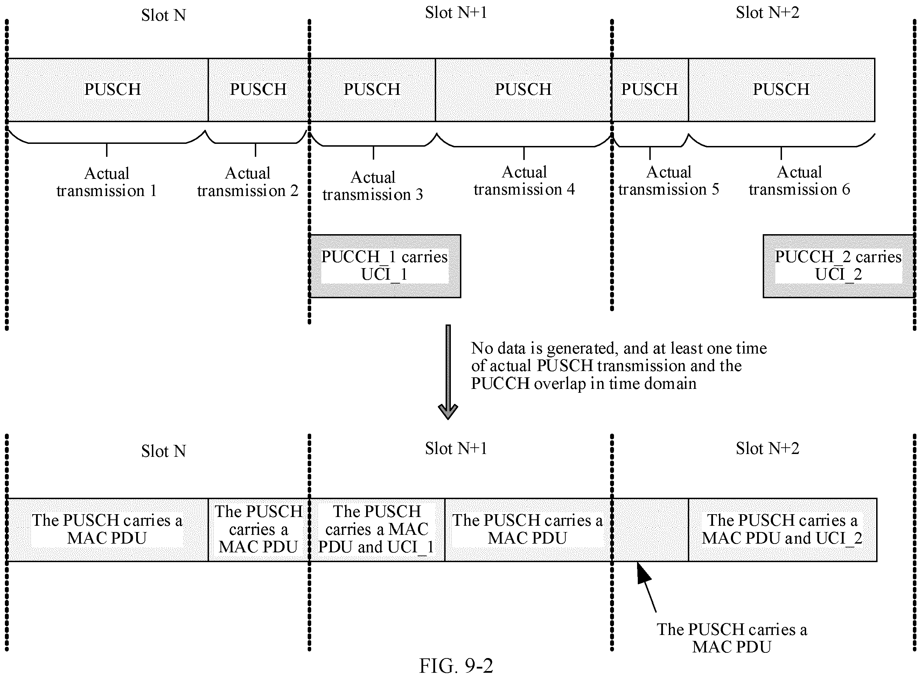

FIG. 9-2 is another schematic diagram of data transmission implementation in a communication method according to an embodiment of this application;

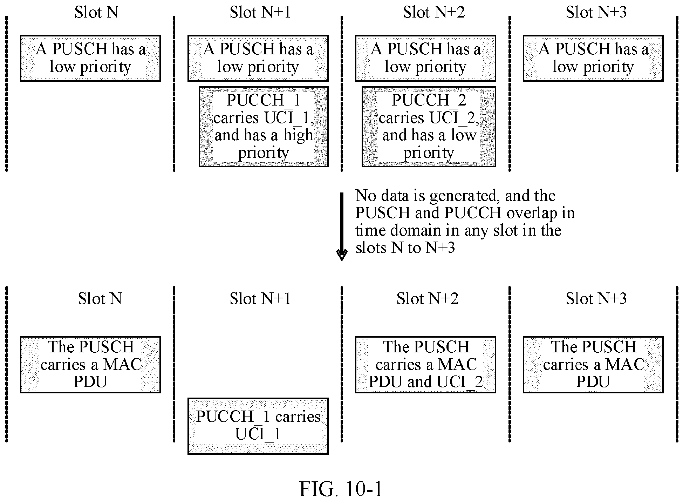

FIG. 10-1 is another schematic diagram of data transmission implementation in a communication method according to an embodiment of this application;

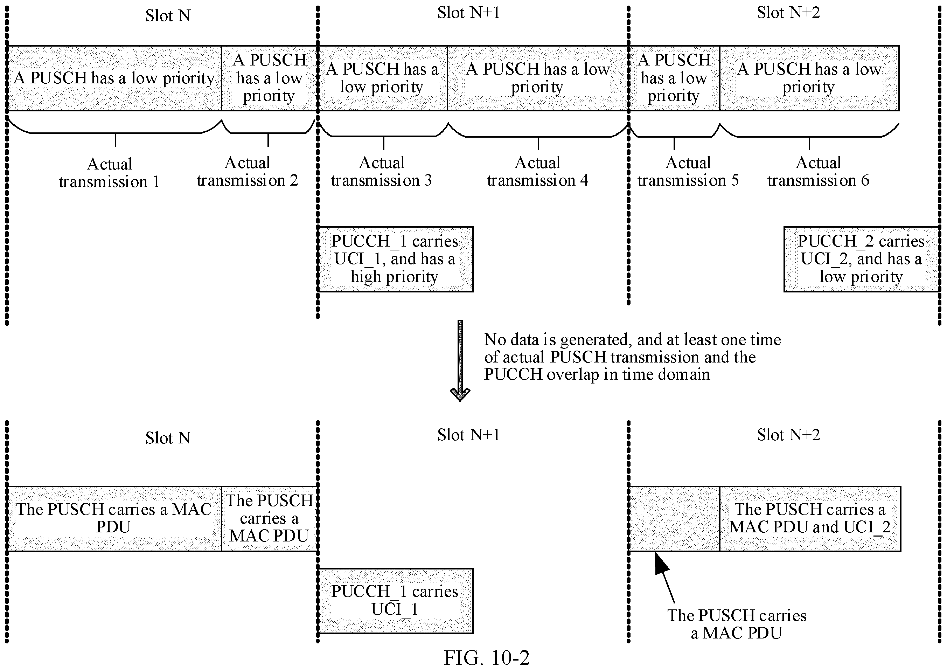

FIG. 10-2 is another schematic diagram of data transmission implementation in a communication method according to an embodiment of this application;

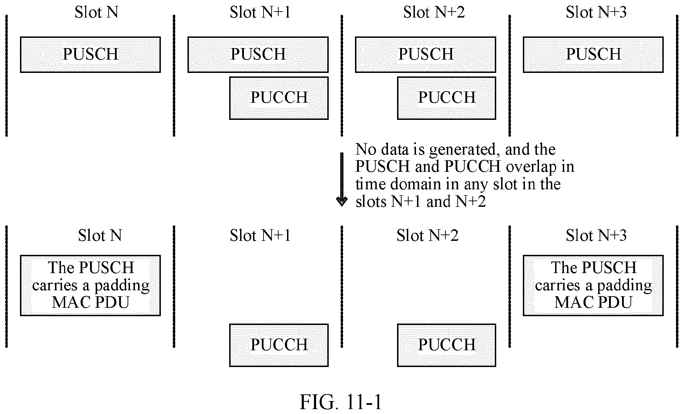

FIG. 11-1 is another schematic diagram of data transmission implementation in a communication method according to an embodiment of this application;

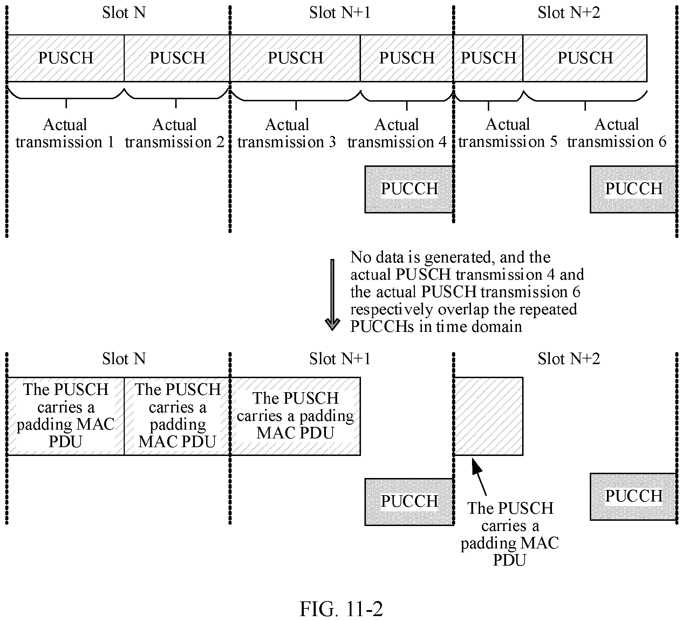

FIG. 11-2 is another schematic diagram of data transmission implementation in a communication method according to an embodiment of this application;

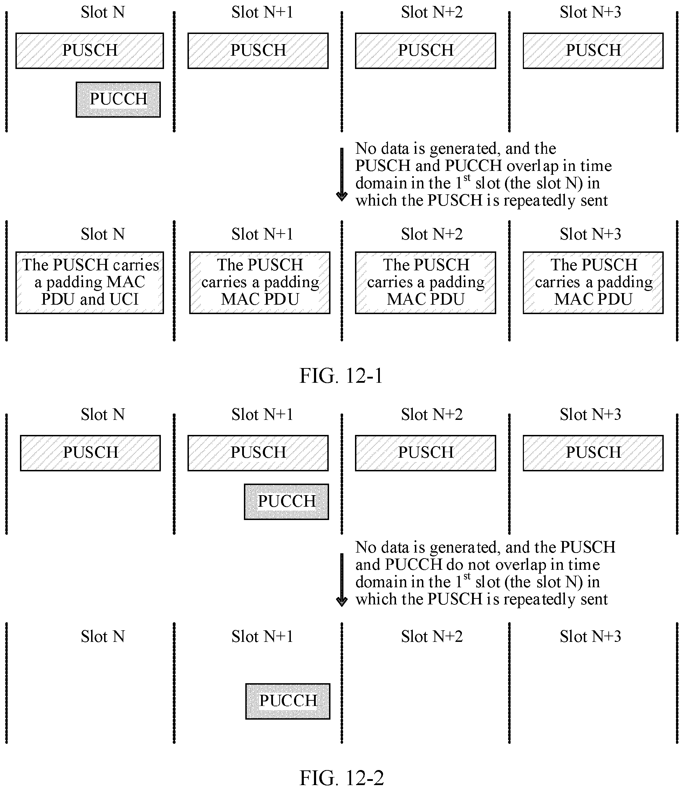

FIG. 12-1 is another schematic diagram of data transmission implementation in a communication method according to an embodiment of this application;
FIG. 12-2 is another schematic diagram of data transmission implementation in a communication method according to an embodiment of this application;

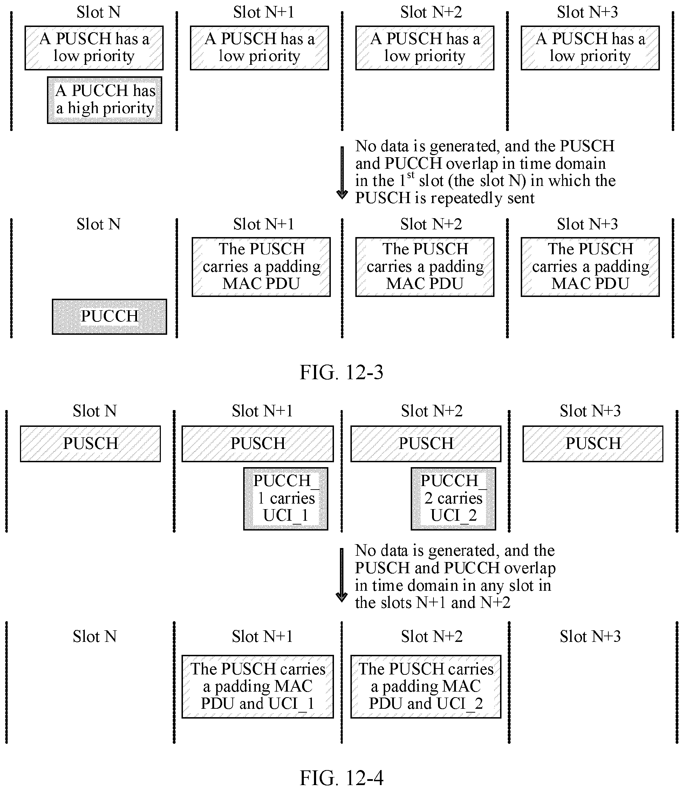

FIG. 12-3 is another schematic diagram of data transmission implementation in a communication method according to an embodiment of this application;

FIG. 12-4 is another schematic diagram of data transmission implementation in a communication method according to an embodiment of this application;

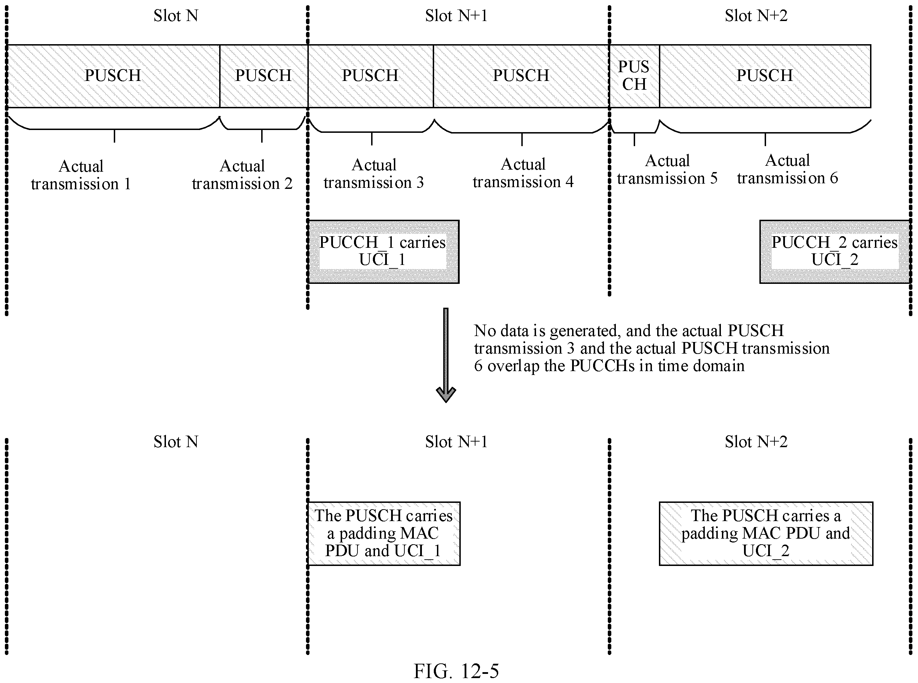

FIG. 12-5 is another schematic diagram of data transmission implementation in a communication method according to an embodiment of this application;

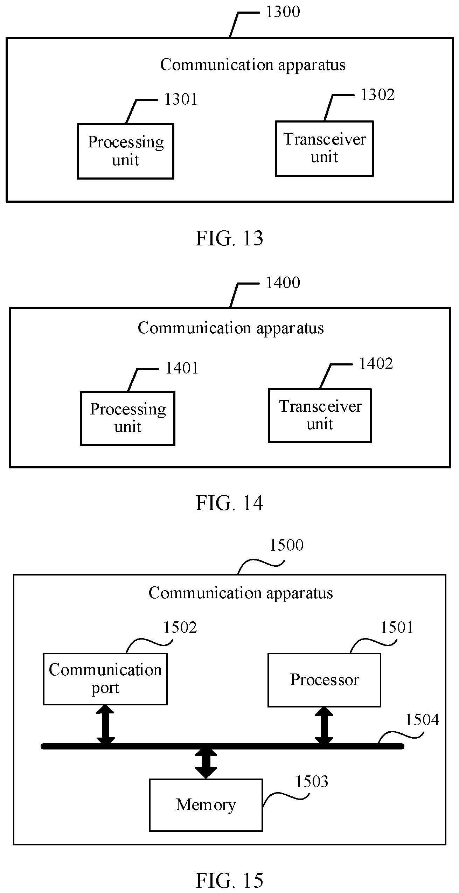

FIG. 13 is a schematic diagram of a communication apparatus according to an embodiment of this application;

FIG. 14 is another schematic diagram of a communication apparatus according to an embodiment of this application;

FIG. 15 is another schematic diagram of a communication apparatus according to an embodiment of this application; and

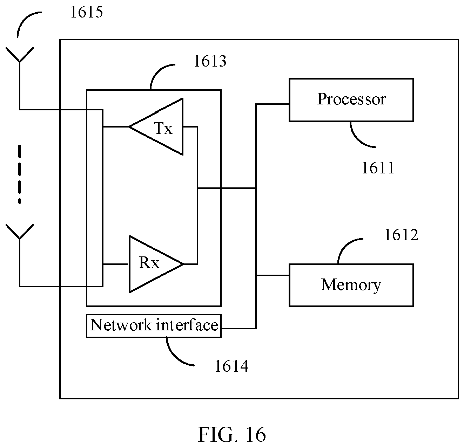

FIG. 16 is another schematic diagram of a communication apparatus according to an embodiment of this application.

## DESCRIPTION OF EMBODIMENTS

The following describes the technical solutions in embodiments of this application with reference to the accompanying drawings in embodiments of this application. It is clear that embodiments are merely some but not all of embodiments of this application. All other embodiments obtained by a person of ordinary skill in the art based on embodiments of this application without creative efforts shall fall within the protection scope of this application.

First, some terms in embodiments of this application are explained and described, to help a person skilled in the art have a better understanding.

1. A terminal device in this application includes a device that provides a voice for a user, a device that provides data connectivity for the user, or a device that provides the voice and the data connectivity for the user. For example, the terminal device may include a handheld device having a wireless connection function or a processing device connected to a wireless modem. The terminal device may also be referred to as a terminal for short. The terminal may communicate with a core network through a radio access network (radio access network, RAN), and exchange a voice or data with the RAN, or exchange the voice and the data with the RAN. The terminal may include user equipment (user equipment, UE), a wireless terminal, a mobile terminal, a device-to-device (device-to-device, D2D) communication terminal, a vehicle to everything (vehicle to everything, V2X) terminal, a road side unit (road side unit, RSU), a machine-to-machine/machine type communication (machine-to-machine/machine type communication, M2M/MTC) terminal, an internet of things (internet of things, IoT) terminal, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. The terminal may include a mobile phone (which is also referred to as a "cellular" phone), a computer with a mobile terminal, a portable, pocket-sized, handheld, computer built-in mobile apparatus, or the like. The terminal may include a device such as a personal communications service (personal communications service, PCS) phone, a cordless telephone set, a session initiation protocol (session initiation protocol, SIP) phone, a wireless local loop (wireless local loop, WLL) station, or a personal digital assistant (personal digital assistant, PDA). The terminal further includes a limited device, a device having low power consumption, a device having a limited storage capability, a device having a limited computing capability, or the like. The terminal may include an information sensing device such as a barcode, radio frequency identification (radio frequency identification, RFID), a sensor, a global positioning system (global positioning system, GPS), or a laser scanner.

By way of example but not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that is directly worn or integrated into clothes or an accessory of the user. The wearable device not only is a hardware device, but also implements a powerful function through software support, data exchange, and cloud interaction. In a broad sense, the wearable intelligent device includes full-featured and large-sized devices that can implement all or some functions without depending on smartphones, for example, smart watches or smart glasses, and devices that focus only on a type of application function and need to work with other devices such as smartphones, for example, various smart bands, smart helmets, or smart jewelry for monitoring physical signs.

If the various terminals described above are located in a vehicle, for example, placed in the vehicle or mounted in the vehicle, all the terminals may be considered as vehicle-mounted terminals. The vehicle-mounted terminals are also referred to as, for example, on board units (on board units, OBUs).

In embodiments of this application, an apparatus configured to implement a function of the terminal may be a terminal, or may be a circuit that can support the terminal in implementing the function, for example, a circuit that may be applied to a chip system. The chip system may be mounted in the terminal. In embodiments of this application, the chip system may include a chip, or may include the chip and another discrete component. In the technical solutions provided in embodiments of this application, an example in which the apparatus configured to implement the function of the terminal is the terminal is used to describe the technical solutions provided in embodiments of this application.

2. A network device in this application may include a radio access network (radio access network, RAN) device, for example, a base station (for example, an access point). The network device may be a device that communicates with a terminal device through an air interface and that is in an access network. Alternatively, a network device in a vehicle-to-everything (vehicle-to-everything, V2X) technology is a road side unit (road side unit, RSU). The base station may be configured to perform mutual conversion between a received over-the-air frame and an IP packet, and serve as a router between the terminal and a remaining part of the access network, where the remaining part of the access network may include an IP network. The RSU may be a fixed infrastructure entity supporting a V2X application, and exchange messages with another entity supporting the V2X application. The network device may further coordinate attribute management of the air interface. For example, the network device may include an evolved NodeB (evolved NodeB, NodeB, eNB, or eNodeB) in a long term evolution (long term evolution, LTE) system or long term evolution-advanced (long term evolution-advanced, LTE-A), may include a next generation NodeB (next generation NodeB, gNB) in an evolved packet core (evolved packet core, EPC), a 5th generation (fifth generation, 5G) communication technology, or a new radio (new radio, NR) system (which is also referred to as an NR system for short), or may include a central unit (central unit, CU) and a distributed unit (distributed unit, DU) in a cloud radio access network (cloud radio access network, Cloud RAN) system. This is not limited in embodiments of this application. The network device may further include a core network device. The core network device includes, for example, an access and mobility management function (access and mobility management function, AMF). It should be noted that the RSU may be a network-type RSU, or may be a terminal-device-type RSU. When the RSU is used as the network-type RSU, the RSU performs a function of the network device. When the RSU is used as the terminal-device-type RSU, the RSU performs a function of the terminal device.

The network device can send configuration information (for example, carried in a scheduling message and/or an indication message) to the terminal device, and the terminal device further performs network configuration based on the configuration information, so that network configurations of the network device and the terminal device are aligned. Alternatively, network configurations of the network device and the terminal device are aligned by using a network configuration preset in the network device and a network configuration preset in the terminal device. Specifically, "aligned" means that when there is an interaction message between the network device and the terminal device, the network device and the terminal device have consistent understandings of a carrier frequency for sending and receiving the interaction message, determining of an interaction message type, a meaning of field information carried in the interaction message, or another configuration of the interaction message.

In addition, in another possible case, the network device may be another apparatus that provides a wireless communication function for the terminal device. A specific technology and a specific device form that are used by the network device are not limited in embodiments of this application. For ease of description, this is not limited in embodiments of this application.

The network device may further include the core network device. The core network device includes, for example, the AMF, a user plane function (user plane function, UPF), or a session management function (session management function, SMF).

In embodiments of this application, an apparatus configured to implement a function of the network device may be the network device, or may be an apparatus, for example, a chip system, that can support the network device in implementing the function. The apparatus may be mounted in the network device. In the technical solutions provided in embodiments of this application, an example in which the apparatus configured to implement the function of the network device is the network device is used to describe the technical solutions provided in embodiments of this application.

3. Definitions of communication terms in this application

1. Higher layer signaling: The higher layer signaling may be signaling sent by a higher-layer protocol layer. The higher-layer protocol layer is at least one protocol layer above a physical (physical, PHY) layer. The higher-layer protocol layer may specifically include at least one of the following protocol layers: a medium access control (medium access control, MAC) layer, a radio link control (radio link control, RLC) layer, a packet data convergence protocol (packet data convergence protocol, PDCP) layer, a radio resource control (radio resource control, RRC) layer, and a non-access stratum (non-access stratum, NAS).

2. Demodulation reference signal-less (demodulation reference signal-less, DMRS-less): The DMRS-less means reducing time domain density of a demodulation reference signal (demodulation reference signal, DMRS) in each time unit, or placing no DMRS in some time units and performing demodulation through channel estimation of another time unit in which a DMRS is placed. A specific manner may be that a channel estimation result of an adjacent time unit having a DMRS is reused for the time unit having no DMRS, or interpolated joint channel estimation is performed on a plurality of time units. When channel estimation quality is ensured, DMRS overheads are reduced and spectral efficiency is improved by reducing a DMRS, so that a coverage capability of a system is improved.

3. Joint channel estimation: Interpolated channel estimation is performed through bundling (bundling) of a plurality of time units (time units), to improve channel estimation precision without increasing reference signal overheads. The joint channel estimation requires that phases of the plurality of bundled time units are consecutive. It should be ensured that power control parameters in the plurality of bundled time units are consistent, and transmission in the plurality of bundled time units should be continuous.

4. Slot: The slot is a time domain unit of data scheduling. In a normal cyclic prefix, one slot has 14 symbols. In an extended cyclic prefix, one slot has 12 symbols. There are a plurality of scheduling time units in 5G NR, for example, a frame, a subframe, the slot, and a symbol. A time length of one frame is 10 milliseconds (ms), the frame includes 10 subframes, and a time length corresponding to each subframe is 1 ms. The slot includes the 12 symbols in a case of the extended cyclic prefix, and includes the 14 symbols in a case of the normal cyclic prefix. A time domain symbol herein may be an orthogonal frequency division multiplexing (orthogonal frequency division multiplexing, OFDM) symbol. It should be noted that the slot defined in embodiments of this application may be the slot including the 14 (or 12) symbols in a general sense, or may be a mini-slot (mini-slot).

5. Coverage enhancement (Coverage Enhancement): On a slow-varying channel, DMRS-less can effectively reduce DMRS overheads and improve spectral efficiency while channel estimation quality is ensured, and is a potential coverage enhancement technology.

6. Uplink cancellation indication (cancellation indication, CI): An uplink cancellation indication (uplink CI, UL CI) is introduced in ultra-reliable and low-latency communications (Ultra-Reliable and Low-Latency Communications, URLLC) physical layer enhancement, and is indicated by downlink control information (downlink control information, DCI). A physical resource block (physical resource block, PRB) and an OFDM symbol are notified to a group of terminal devices, so that the terminal devices cancel, on the PRBs and the OFDM symbols, uplink transmission corresponding to the terminal devices, and the PRBs and the OFDM symbols are for uplink URLLC transmission of another terminal device.

7. Dynamic slot format indication (slot format indication, SFI): The dynamic slot format indication SFI may be for mutual conversion between an uplink slot and a downlink slot.

8. Uplink transmission priority: Specifically, there are priorities between a plurality of physical uplink shared channels (physical uplink shared channels, PUSCHs), there are priorities between a plurality of physical uplink control channels (physical uplink control channels, PUCCHs), there are priorities between a PUSCH and a PUCCH, priorities of a physical random access channel (physical random access channel, PRACH) and other uplink transmission are implemented by a terminal device, and there are priorities between a sounding reference signal (sounding reference signal, SRS) and the PUSCH.

9. Repetition (repetition): To avoid cross-slot-boundary transmission of a PUSCH, a terminal device may transmit the PUSCH by using a plurality of repetitions of an uplink grant (UL Grant) or RRC scheduling in consecutive available slots. This is a PUSCH repetition type A (repetition type A), where each slot includes only one repetition. In addition, a PUSCH repetition type B (repetition type B) is added, where the slot may include a plurality of repetitions. A type B nominal repetition (type B nominal repetition) configured each time is divided into a plurality of actual repetitions (actual repetitions) for sending when configured consecutive time domain resources cross a slot boundary or cross an unavailable symbol (where for example, one type B nominal repetition [one transport block (transport block, TB)] is configured to be transmitted on symbols 0 to 5, but the symbol 3 is unavailable, and therefore actual transmission is divided around the symbol 3, one actual repetition is separately sent on symbols 0 to 2 and symbols 4 and 5 [where two repetitions, namely, two TBs, are sent on a time domain resource for which one repetition is originally configured], and costs are that a transmission resource for each repetition/each TB is reduced, that a code rate is increased during sending, and that a gain of a low code rate is lost).

10. Transport block processing over multi-slot (TB processing over multi-slot): Generally, a TB is transmitted in a basic unit of a slot in time domain. The TB processing over multi-slot means transmitting one TB/data packet in a plurality of slots. This helps reduce a code rate to obtain a receive SNR gain and enhance coverage. The TB processing over multi-slot requires to perform joint coding on a plurality of slots for transmitting the TB and to use a same RV. A general implementation is division, at a slot boundary (slot boundary), into a plurality of segments for sending.

11. Uplink power control: The uplink transmit power control is determined according to the following formula:

$$P_{\mathrm{PUSCH,b,f,c}}(i, j, q_d, l)$$

$$= \min \left\{ \begin{array}{c} P_{\mathrm{CMAX,f,f}}(i), \\ P_{O_{\mathrm{PUSCH}},b,f,c}(j) + 10 \log_{10}\left(2^\mu \cdot M_{\mathrm{RB,b,f,c}}^{\mathrm{PUSCH}}(i)\right) + \alpha_{b,f,c}(j) \cdot PL_{b,f,c}(q_d) + \Delta_{\mathrm{TF,b,f,c}}(i) + f_{b,f,c}(i, l) \end{array} \right\}$$

A closed-loop power control part may be controlled by a base station. For an open-loop power control part $\alpha_{b,f,c}(j) \cdot PL_{b,f,c}(q_d)$, $\alpha_{b,f,c}(j)$ is indicated by a higher-layer parameter, and a path loss compensation value $PL_{b,f,c}(q_d)$ is calculated by UE based on a receive power of an SSB/a CSI-RS sent by the base station. It should be learned that when a terminal device receives a synchronization signal/physical broadcast channel block (synchronization signal/physical broadcast channel block, SS/PBCH block or SSB)/a channel state information reference signal (channel state information reference signal, CSI-RS), a network device does not need to know whether the terminal device changes power control in time.

12. Inter-slot (Inter-slot) frequency hopping: Frequency hopping modes of a repetition type A include the inter-slot frequency hopping and intra-slot (intra-slot) frequency hopping. Inter-slot means that each slot is a hop. In a case of the inter-slot frequency hopping, a start resource block (resource block, RB) during a slot is given by the following formula:

$$RB'_{\mathrm{start}} = \left\{ \begin{array}{l} RB_{\mathrm{start}} \quad n_h \bmod 2 = 0 \\ (RB_{\mathrm{start}} + RB_{\mathrm{offset}}) \bmod N_{\mathrm{BWP}}^{\mathrm{size}} \quad n_h \bmod 2 = 1 \end{array} \right.$$

$RB'_{\mathrm{start}}$ is a number of a start RB of each hop, $RB_{\mathrm{start}}$ is a number (a number of the 1st hop/a reference RB, indicated by a base station) that is of a start RB and that is indicated by signaling, $RB_{\mathrm{offset}}$ is a frequency hopping offset value (a quantity of offset RBs, indicated by the base station), $N_{\mathrm{BWP}}^{\mathrm{size}}$ is a quantity of RBs included in a bandwidth part (bandwidth part, BWP) BWP, and $n_h$ is a number of a hop.

13. Processing time: After receiving signaling, a terminal device needs processing time to process the signaling. Therefore, the terminal device cannot execute a message indicated by the signaling or respond to the signaling within the time.

14. Being static configured invalid (a time unit) and dynamic configured invalid (a time unit): A static configured invalid symbol/slot is an unavailable symbol/slot that exists before a terminal device performs transmission and that the UE can learn of when a base station schedules uplink transmission of the UE, may be a downlink slot/symbol, some reference signals, or the like. Therefore, there is space for determining some corresponding adjustments for the unavailable symbol/slot before transmission. The dynamic configured invalid refers to preemption information temporarily received by the terminal device during uplink transmission due to a dynamic SFI, an uplink cancellation indication UL CI, scheduling information of other high-priority transmission, or the like, and results in a burst invalid symbol/slot.

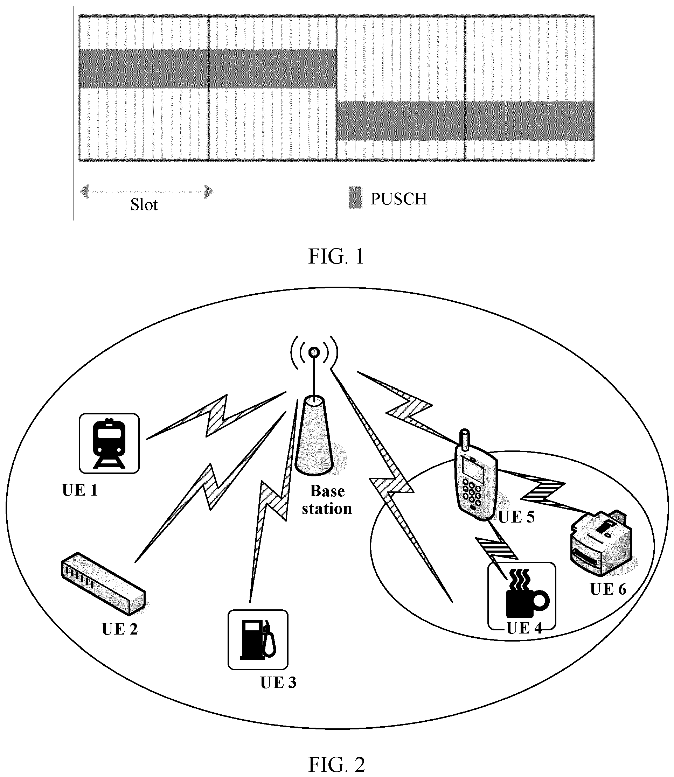

15. Frequency hopping+joint channel estimation: Generally, the frequency hopping is classified into inter-slot frequency hopping, intra-slot frequency hopping, and internal-repetition (intra-repetition) frequency hopping. The three frequency hopping manners are as follows: Each slot is used as one hop, two hops in the slot, and each repetition is used as one hop. To obtain a gain of the joint channel estimation, a frequency hopping+joint channel estimation technology is proposed. To be specific, each hop includes a plurality of slots/repetitions, and joint channel estimation is performed between the plurality of slots/repetitions on the hop. As shown in FIG. 1, for example, joint channel estimation is performed on PUSCH in two slots (slots). Frequency hopping may be performed in every two slots, and each slot may include at least one repetition.

16. Configuration and preconfiguration: In this application, both the configuration and the preconfiguration are used. The configuration means that a base station or a server sends configuration information of some parameters or parameter values to a terminal via a message or signaling, so that the terminal determines a communication parameter or a transmission resource based on the values or the information. Similar to the configuration, the preconfiguration may be a manner in which the base station or the server sends parameter information or a value to the terminal on another link or carrier different from a sidelink, or may be a manner in which a corresponding parameter or the parameter value is defined or the related parameter or the value is written to the terminal device in advance. This is not limited in this application. Further, these values and parameters may be changed or updated.

17. Uplink transmission cancellation mechanism: When uplink transmission is canceled by using an UL CI, the uplink transmission on all symbols after the 1st symbol on which a resource indicated by the UL CI and the uplink transmission overlap is canceled in time domain, and is not restored. When uplink transmission is canceled by other high-priority transmission in a terminal device, uplink transmission with a low priority is canceled no later than the 1st symbol on which the uplink transmission and the high-priority transmission overlap, and is not restoreed. If the uplink transmission includes K repetitions, the cancellation mechanism affects only a repetition on which preemption is performed, and does not affect transmission of another repetition.

18. Uplink discontinuous transmission: In a process of consecutive-slot-based transmission, if a time domain resource allocated for multi-slot uplink transmission (uplink transmission including a repetition) includes unavailable slots such as a downlink slot and a slot occupied by another reference signal, a terminal device cancels a repetition that should be sent in the slot, but still counts the repetition into a repetition count. Therefore, a count of final repetitions that are actually sent may be less than a configured count. In addition, in a process of available-slot-based uplink transmission, during time domain resource allocation, an unavailable slot is skipped to perform non-consecutive slot-based transmission until an actual repetition count is the same as a configured count.

Terms "system" and "network" may be used interchangeably in embodiments of this application. "At least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following" or a similar expression thereof indicates any combination of the items, and includes a singular item or any combination of plural items. For example, "at least one of A, B, and C" includes A, B, C, AB, AC, BC, or ABC. In addition, unless otherwise stated, ordinal numbers such as "first" and "second" in embodiments of this application are for distinguishing between a plurality of obj ects, but are not intended to limit an order, a time sequence, priorities, or importance of the plurality of objects.

This application may be applied to a long term evolution (long term evolution, LTE) system, a new radio (new radio, NR) system, or another communication system. The communication system includes a network device and a terminal device. The network device is used as a configuration information sending entity, and the terminal device is used as a configuration information receiving entity. Specifically, in the communication system, an entity sends configuration information to another entity, and sends data to the another entity; or receives data sent by the another entity. The another entity receives the configuration information, and sends the data to the configuration information sending entity based on the configuration information; or receives the data sent by the configuration information sending entity. This application may be applied to a terminal device in a connected state or an active (active) state, or may be applied to a terminal device in an inactive (inactive) state or an idle (idle) state.

FIG. 2 is a schematic diagram of a communication system according to an embodiment of this application. As shown in the figure, a configuration information sending entity may be a network device. The network device is described by using a base station (base station) as an example. Configuration information receiving entities may be UE 1 to UE 6. In this case, the communication system includes the base station and the UE 1 to the UE 6. In the communication system, the UE 1 to the UE 6 may send uplink data to the network device, and the network device needs to receive the uplink data sent by the UE 1 to the UE 6. In addition, the network device may send configuration information to the UE 1 to the UE 6.

As shown in FIG. 2, in a communication process, a signal transmit device (a transmitting end or a transmitting device) may be a network device, and a signal receive device (a receiving end or a receiving device) may be a terminal device; a signal transmit device (a transmitting end or a transmitting device) may be a terminal device, and a signal receive device (a receiving end or a receiving device) may be a network device; both a signal transmit device (a transmitting end or a transmitting device) and a signal receive device (a receiving end or a receiving device) may be network devices; or both a signal transmit device (a transmitting end or a transmitting device) and a signal receive device (a receiving end or a receiving device) may be terminal devices.

The wireless communication process shown in FIG. 2 is used as an example. Due to impact of Doppler effect and multipath effect, a radio signal is prone to fading in a transmission process. As a result, a signal received by the receiving end may be greatly different from a signal transmitted by the transmitting end. Therefore, at the receiving end, the signal usually needs to be processed through channel estimation, to restore, as much as possible, the signal transmitted by the transmitting end.

Currently, joint channel estimation (joint channel estimation) is an implementation of the channel estimation. In an implementation process of the joint channel estimation, the transmitting end may transmit a signal in a plurality of bundled (bundled) time units, and the receiving end performs joint channel estimation in the plurality of bundled time units, to improve channel estimation precision without increasing reference signal overheads. Generally, in the implementation process of the joint channel estimation, a joint channel estimation granularity N (where N is an integer greater than 1) is set in a preconfiguration or configuration manner.

However, when there is an unavailable time unit due to occupation by another signal in the plurality of bundled time units, transmission performed by the transmitting end in the unavailable time unit is interrupted. For example, when an uplink transmission cancellation mechanism and uplink discontinuous transmission encounter joint channel estimation, transmission is interrupted. Consequently, an action of enabling/disabling a radio frequency (RF) channel at the transmitting end occurs, and phases before and after the interruption are non-consecutive. Further, the receiving end cannot implement joint channel estimation. It easily causes a failure of performing joint channel estimation by the receiving end in the plurality of bundled time units, communication is interrupted, and communication efficiency is affected.

Therefore, when the joint channel estimation is configured (where it is assumed that a bundling granularity is N), how to implement, when the transmission is interrupted, communication in the plurality of bundled time units to ensure interrupted communication is an urgent technical problem to be resolved. Further, based on the technical problem, this application mainly defines a related transmission process of the transmitting end. Accordingly, the receiving end also needs to receive data based on the defined transmission process. Problems in the transmission process include at least the following content:

Problem 1: How to perform sending in the interrupted transmission?
Problem 2: How to update a power control parameter?
Problem 3: If frequency hopping is configured, how to enable frequency hopping in N slots in which an interruption symbol/slot is located and other slots that are bundled at the granularity N?

To resolve the foregoing related problems, this application provides a communication method and a communication apparatus, to implement communication in a plurality of bundled time units including an unavailable time unit, avoid communication interruption, and improve communication efficiency.

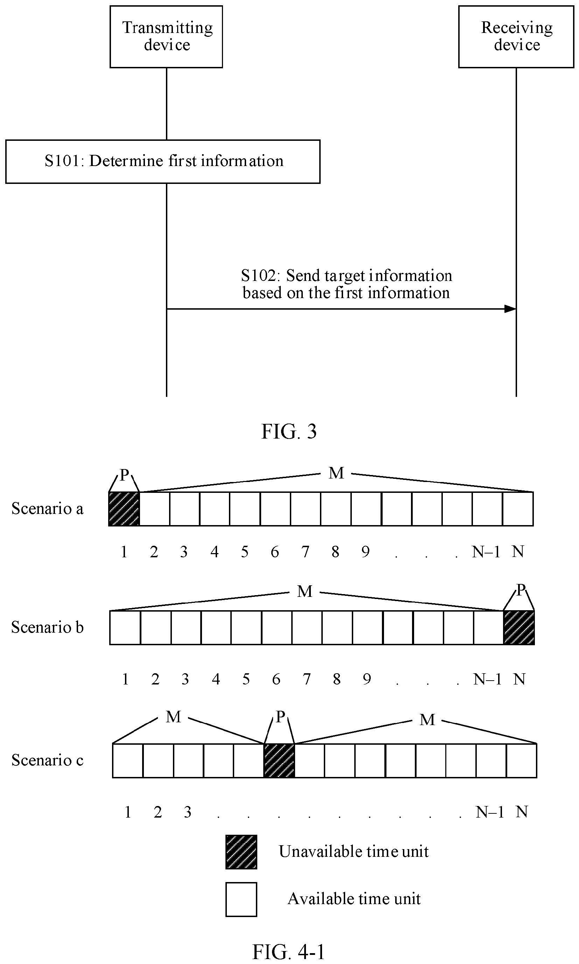

Refer to FIG. 3. A communication method provided in an embodiment of this application includes the following steps.

S101: A transmitting device determines first information.

In this embodiment, a communication apparatus used as the transmitting device determines the first information in step S101. The first information indicates that N consecutive time units are configured for sending a first message in a joint transmission manner. N is an integer greater than 1.

Optionally, the joint transmission manner may alternatively be represented in another form, for example, a bundling transmission manner, a cross-slot bundling transmission manner, or a multi-slot DMRS bundling sending manner.

Optionally, the first message may be a data channel/a control channel, data/information, a signal, or the like.

Specifically, the communication apparatus may determine the first information through configuration or preconfiguration.

For example, when the first information is determined in a configuration manner, a signaling indication (for example, a joint channel estimation enabling indication/a joint sending enabling indication, or a directly indicated quantity N of time units for joint channel estimation/joint sending) may be received, to determine that the N consecutive time units are configured for sending the first message in the joint transmission manner. That is, it is determined that, when a receiving device needs to be supported in performing joint channel estimation, sending/transmission performed by the communication apparatus needs to meet at least one of the following: Precoding matrices are consistent, antenna ports are consistent, power control parameters are consistent, phases are consecutive, and both the $1^{st}$ time unit and the last time unit include a demodulation reference signal DMRS.

For another example, when the communication apparatus performs transmission in the joint transmission manner on an allocated resource, a transmission rule defined on the resource is that when the N consecutive time units are configured for sending the first message in the joint transmission manner, the joint transmission manner meets at least one of the following conditions: Precoding matrices are consistent, antenna ports are consistent, power control parameters are consistent, phases are consecutive, and both the $1^{st}$ time unit and the last time unit include a demodulation reference signal DMRS.

In a possible implementation, the first information includes configuration information, and the configuration information includes at least one of the following (parameters): a value of N; at least one demodulation reference signal DMRS pattern corresponding to a value of N; a value of M; at least one demodulation reference signal DMRS pattern corresponding to a value of M; or a first frequency hopping parameter for sending the first message. M is a quantity of time units in the N consecutive time units, different from P unavailable time units, and consecutive in time domain. Optionally, the communication apparatus determines the first information through configuration. That is, the first information includes the configuration information indicating to implement the joint transmission manner in the N consecutive time units.

Specifically, the communication apparatus may determine the first information through configuration, determine the at least one parameter based on the configuration information included in the first information, and subsequently send the first message in an available time unit in the N consecutive time units based on the at least one parameter.

In a possible implementation, the first message includes uplink information, sidelink information, or downlink information. It should be noted that the first message may be the uplink information, the sidelink information, the downlink information, or other information, for example, information carried on a physical random access channel (physical random access channel, PRACH). This is not limited herein.

In a possible implementation, the first information includes uplink-downlink slot configuration information. Specifically, when performing communication in time division duplex (time division duplex, TDD) mode, the communication apparatus may determine the first information based on the uplink-downlink slot configuration information, that is, determine, based on the uplink-downlink slot configuration information, that the N consecutive time units are configured to receive the first message in the joint transmission manner. Signaling overheads of configuring the first information in another manner to determine the N consecutive time units can be reduced, and spectral efficiency can be improved.

Further, a process in which the first information is for determining the N consecutive time units specifically includes: determining, based on the first information, a quantity of time units for uplink transmission; and further determining the N consecutive time units based on the quantity of time units for uplink transmission. In addition, the time unit for uplink transmission includes at least one of the following: an uplink time unit, a flexible time unit, or a special time unit.

Optionally, there may be a plurality of values of N. To be specific, the value of N is equal to a sum of consecutive-slot quantities of at least one of the uplink time unit, the flexible time unit, and the special time unit.

Optionally, it is determined, in a configuration or preconfiguration manner, that the flexible time unit is included in the time unit for uplink transmission. For example, the communication apparatus receives additional signaling to indicate whether a flexible slot is an uplink slot or a downlink slot. Alternatively, the communication apparatus indicates that the flexible slot is available for the uplink transmission, and the flexible slot is directly used during uplink transmission without signaling indication.

Optionally, when the transmitting device is a terminal device, the first information may be determined by configuring the first information for the terminal device by a network device (an access network device or a core network device), or may be determined by preconfiguring the first information in the terminal device. This is not limited herein. Similarly, when the transmitting device is a network device, the first information may alternatively be determined by configuring the first information for the network device by another network device (an access network device or a core network device), or may be determined by preconfiguring the first information in the network device. This is not limited herein.

In addition, it should be noted that the time unit mentioned in this embodiment of this application may be at different granularities. For example, the time unit may be implemented in a form of a symbol, a slot, a subframe, a frame, or the like. This is not specifically limited herein.

S 102: The transmitting device sends the first message to a receiving end based on the first information.

In this embodiment, after the communication apparatus used as the transmitting device determines the first information in step S 101, the transmitting device sends the first message to the receiving end based on the first information in step S102. Accordingly, in step S102, a communication apparatus used as the receiving device receives the first message from the sending device based on the first information.

In step S102, in the N consecutive time units, the transmitting device sends the first message in an available time unit other than the P unavailable time units. The transmitting device may implement transmission in a plurality of implementations in the available time unit. For example, the transmitting device may perform transmission in the joint transmission manner, or may perform transmission in a transmission manner other than the joint transmission manner. The following separately describes the two transmission manners in detail.

In a first implementation, implementation of step S 102 includes the following process.

A process of step S 102 may specifically include: When there are P unavailable time units in the N consecutive time units, the communication apparatus sends the first message in the joint transmission manner in M consecutive time units, where the M consecutive time units are a part of the N consecutive time units, the M consecutive time units do not include the P unavailable time units, M is an integer greater than 1, and P is an integer greater than 0. A specific implementation of resolving the foregoing problem 1 is provided.

It should be noted that the P unavailable time units may be determined due to a static configured invalid slot, dynamic configured invalid slot, or another manner. This is not specifically limited herein.

Specifically, in the N consecutive time units, if P is equal to 1, or P is greater than 1 and the P unavailable time units are consecutive in time domain, the M time units may include at least one segment in a time unit before the P unavailable time units and a time unit after the P unavailable time units. If P is greater than 1 and the P unavailable time units are non-consecutive time units, that is, the P unavailable time units include a plurality of segments of unavailable time units, there may be at least one available time unit (for example, M time units) in the plurality of segments of unavailable time units, and the M consecutive time units may include one or more segments other than the P unavailable time units.

For example, in the N consecutive time units, if P is equal to 1, as shown in FIG. 4-1, the P unavailable time units may be the 1st time unit (a scenario a), any intermediate time unit (a scenario b), or an Nth time unit (a scenario c). In this case, the M consecutive time units may be located after the P time units (the scenario a), may be located before the P time units (the scenario b), or may be at least one segment in time units before the P time units and time units after the P time units (the scenario c).

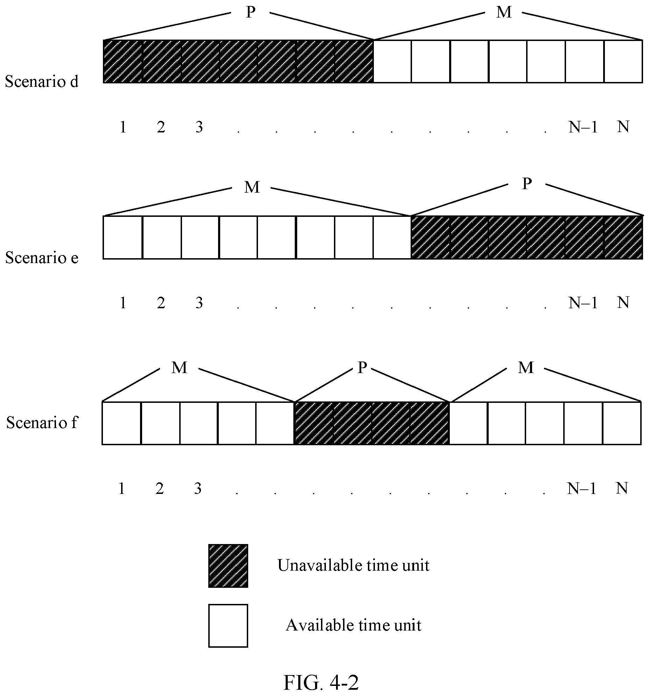

Similarly, in the N consecutive time units, if P is greater than 1 and the P unavailable time units are consecutive in time domain, as shown in FIG. 4-2, the P unavailable time units may include the 1st time unit (a scenario d), any segment of intermediate time units (a scenario e), or an $N^{th}$ time unit (a scenario f). In this case, the M consecutive time units may be located after the P time units (the scenario d), may be located before the P time units (the scenario e), or may be at least one segment in time units before the P time units and time units after the P time units (the scenario f).

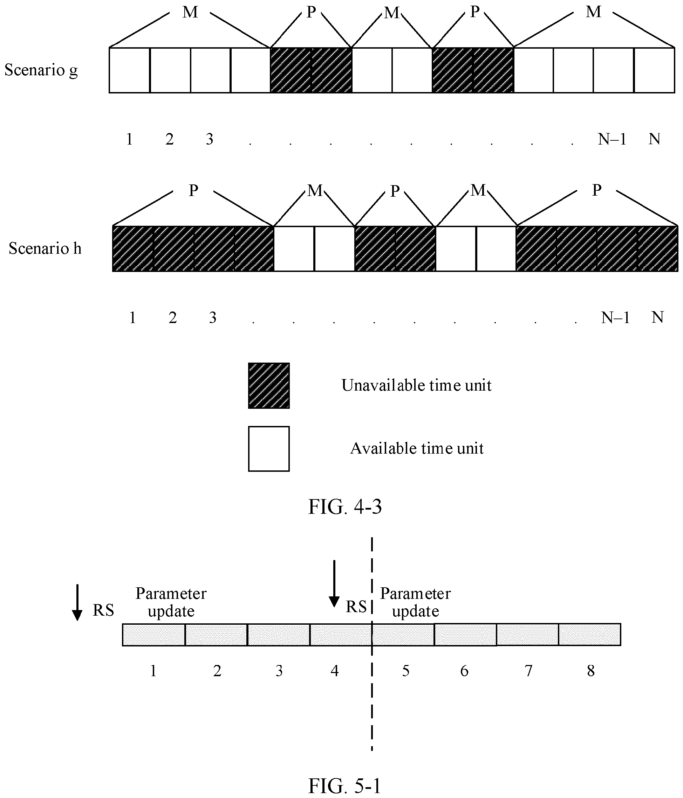

In addition, in the N consecutive time units, if P is greater than 1 and the P unavailable time units are non-consecutive time units (a scenario g and a scenario h), as shown in FIG. 4-3, that is, the P unavailable time units include a plurality of segments of unavailable time units, there may be at least one available time unit (for example, M time units) in the plurality of segments of unavailable time units, and the M consecutive time units may include one or more segments other than the P unavailable time units (the scenario g and the scenario h).

In a possible implementation, the M consecutive time units are located after the P unavailable time units. Specifically, to avoid transmission interruption in the N consecutive time units caused by the P unavailable time units, the M consecutive time units for sending the first message may be located after the P unavailable time units in time domain.

For example, an implementation process of a scenario in which the M consecutive time units are located after the P unavailable time units may be implemented as follows: M consecutive time units in the scenario a in FIG. 4-1, M consecutive time units including an $N^{th}$ time unit in the scenario c in FIG. 4-1, M consecutive time units including an $N^{th}$ time unit in the scenario d in FIG. 4-2, M consecutive time units including an $N^{th}$ time unit in the scenario f in FIG. 4-2, any one or more segments of M consecutive time units other than M consecutive time units including the 1st time unit in the scenario g in FIG. 4-3, and any one or more segments of M consecutive time units in the scenario h in FIG. 4-3.

Optionally, the communication apparatus may determine the P unavailable time units in a dynamic or static configured manner. For example, the P time units may become unavailable because other transmission preempts, due to preemption information (a need to send or receive other information), a channel that is of the communication apparatus and on which the first message is located. In addition, the preemption information may be determined by the communication apparatus in the P time units in the N consecutive time units and a time unit that is in the N consecutive time units and that is before the P time units. In this way, a specific implementation of the M time units is provided, and the solution can be applicable to an application scenario of the P unavailable time units caused by preemption.

Optionally, the communication apparatus cancels sending of the first message in the M consecutive time units located before the P unavailable time units in time domain.

For example, a scenario of the M consecutive time units on which sending is canceled may be implemented as follows: M consecutive time units close to the 1st time unit in the scenario c in FIG. 4-1, M consecutive time units close to the 1st time unit in the scenario f in FIG. 4-2, any one or more segments of M consecutive time units other than M consecutive time units close to an $N^{th}$ time unit in the scenario g in FIG. 4-3, and M consecutive time units close to the 1st time unit in the scenario h in FIG. 4-3.

In a possible implementation, before step S102, the method may further include: receiving or detecting third information in a time unit located before the M consecutive time units, where the third information is for determining that a transmitting parameter is a first sending parameter. In this case, a process of sending the first message in the joint transmission manner in the M consecutive time units in step S102 may specifically include: sending the first message based on the first sending parameter in the joint transmission manner in the M consecutive time units.

Optionally, the third information may be in a form of a signal. That is, receiving or detecting the third information may alternatively be represented by receiving or detecting the signal.

Specifically, when the M consecutive time units are located after the P unavailable time units, the communication apparatus may send the first message in the M consecutive time units by using the first sending parameter determined based on the received third information. The third information may be from the receiving device of the first message, so that the communication apparatus sends the first message based on an indication of the receiving device, to improve a receive success rate of the first message.

Optionally, there may be one or more pieces of third information. The communication apparatus may use, as a sending parameter in the M consecutive time units, a first parameter determined based on third information that is received at the latest in time domain. An example in which the third information is a CSI-RS/an SSB including a reference signal (reference signal, RS) and the first sending parameter mainly includes an open-loop power control parameter is used for description. It may be understood that the third information and the first sending parameter may alternatively be implemented in another manner. This is not limited herein. As shown in FIG. 5-1, when there is no unavailable time unit in the N consecutive time units, the open-loop power control parameter is updated in the 1st slot in every N (where N=4) slots, namely, the 1st slot and the 5th slot, and power control consistency is maintained during duration of the N slots.

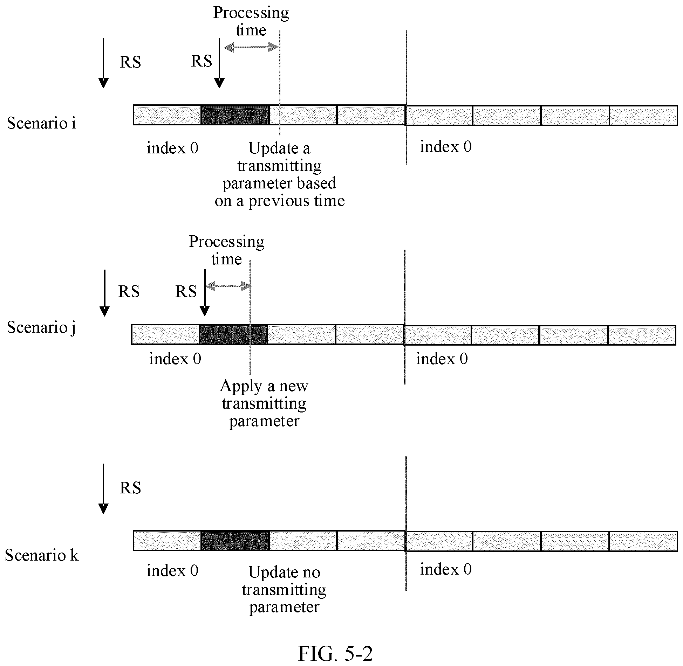

Further, when there are P (where P=1) unavailable time units in the N (where N=4) consecutive time units and the P unavailable time units are the 2nd time unit, the communication apparatus used as the transmitting device may consider time of processing the RS by the communication apparatus. If a new CSI-RS/SSB is received during transmission in the N consecutive time units (between a CSI-RS/an SSB for calculating a parameter used in the 1st slot in N slots in this group and a start point of the 1st slot after an unavailable slot), As shown in a scenario i in FIG. 5-2, if "a receiving moment+the processing time" of a latest CSI-RS/SSB is later than the start point of the 1st slot after the unavailable slot, an open-loop power control parameter of a previous time of CSI-RS/SSB measurement is applied. As shown in a scenario j in FIG. 5-2, if "a receiving moment+the processing time" of a latest CSI-RS/SSB is not later than the start point of the 1st slot after the unavailable slot, a latest open-loop power control parameter is applied. As shown in a scenario k in FIG. 5-2, if no new CSI-RS/SSB is received during transmission, the open-loop power control parameter is not updated.

In this embodiment, a specific implementation of resolving the foregoing problem 2 is provided. When there is an unavailable time unit, the 1st time unit after the unavailable time unit is additionally set as a new open-loop power control parameter update point, and a definition is that power control consistency is ensured in a subsequent time unit in the N slots in this group. First, a transmit power can better adapt to a channel status of current transmission by using an open-loop power control parameter as new as possible. Then, joint channel estimation can be performed in one or more consecutive time units whose quantity is less than N and that are after the unavailable time unit, and a gain of partial joint channel estimation can be obtained.

In addition, the process in which the communication apparatus sends the first message in the joint transmission manner in the M consecutive time units in step S102 may specifically include: sending the first message in the joint transmission manner in the M consecutive time units based on a configured grant. Specifically, if transmission is of the configured grant, namely, a configured grant type 1 (Configured Grant type 1, CG type 1), the communication apparatus can obtain the first information without indication of downlink control information DCI. Compared with a manner of determining, through the indication of the DCI, to send the first message in the joint transmission manner in the M consecutive time units, this can reduce signaling overheads, and improve spectral efficiency.

Optionally, that the communication apparatus sends the first message in the joint transmission manner in the M consecutive time units in step S 102 includes: sending the first message in the joint transmission manner in the M consecutive time units based on a configured grant type 2 (CG type 2) or a dynamic grant (Dynamic Grant, DG). Specifically, when it is determined, in a CG type 2 or DG manner, to send the first message in the joint transmission manner in the M consecutive time units, because in the CG type 2 or DG manner, the DCI may indicate that different time unit quantities correspond to one demodulation reference signal pattern (DMRS pattern), or may correspond to a plurality of DMRS patterns, and indicate a to-be-selected pattern in the DCI, a device that sends the DCI is used as the receiving device of the first message, so that the communication apparatus and the receiving device align a specific DMRS pattern for sending the first message, and a receive/transmit success rate of the first message is improved.

Optionally, the first information is carried in an RRC message.

Optionally, in a CG type 1 (without the DCI) transmission manner (that is, the indication of the DCI is not needed), the first information (RRC) indicates at least one of the following configurations:

If each time unit quantity (N or M) corresponds to one DMRS pattern, the first message is sent based on the corresponding DMRS pattern in N time units; or if there is an unavailable time unit, there are M consecutive available time units in N time units (M<N), and the first message is sent based on a quantity of time units included in the M consecutive available time units and a corresponding pattern indicated in the first information.

If each time unit quantity (N or M) corresponds to a plurality of DMRS patterns, one of the DMRS patterns may be defined as a default pattern (default pattern), and the first message is sent based on the corresponding default pattern in N time units; or if there is an unavailable time unit, there are M consecutive available time units in N time units (M<N), and the first message is sent based on a quantity of time units included in the M consecutive available time units and a corresponding default pattern indicated in the first information.

Optionally, in a CG type 2 transmission manner and a DG transmission manner (that is, through the indication of the DCI), the first information (RRC) indicates at least one of the several configurations.

If each time unit quantity (N or M) corresponds to one DMRS pattern, the first message is sent based on the corresponding DMRS pattern in N time units; or if there is an unavailable time unit, there are M consecutive available time units in N time units (M<N), and the first message is sent based on a quantity of time units included in the M consecutive available time units and a corresponding pattern indicated in the first information.

If each time unit quantity (N or M) corresponds to a plurality of DMRS patterns, and second information (the DCI) indicates one of the plurality of patterns, the first message is sent in N time units based on the corresponding pattern indicated by the DCI; or if there is an unavailable time unit, there are M consecutive available time units in N time units (M<N), and the first message is sent based on a quantity of time units included in the M consecutive available time units and a pattern that is indicated by the DCI in DMRS patterns that are indicated in the first information and that correspond to the quantity M of the consecutive time units.

In addition, before step S102, the method may further include: receiving the second information, where the second information indicates a first demodulation reference signal pattern, and the first demodulation reference signal pattern is one of the at least one demodulation reference signal pattern corresponding to the value of N or one of the at least one demodulation reference signal pattern corresponding to the value of M. Then, the process in which the communication apparatus sends the first message in the joint transmission manner in the M consecutive time units in step S102 may specifically include: sending the first message in the joint transmission manner in the M consecutive time units based on the second information. Specifically, in the M consecutive time units, the communication apparatus sends the first message based on the DMRS pattern indicated by the second information. That is, a device that schedules the second information is used as the receiving device of the first message, so that the communication apparatus and the receiving device align a specific DMRS pattern for sending the first message, and the receive/transmit success rate of the first message is improved.

In a possible implementation, that the communication apparatus sends the first message in the joint transmission manner in M consecutive time units in step S102 includes: sending the first message in the joint transmission manner in the M consecutive time units based on the first information obtained in step S101. Specifically, in the M consecutive time units, the communication apparatus sends the first message based on a related transmitting parameter indicated by the first information. That is, a device that schedules the first information is used as the receiving device of the first message, so that the communication apparatus and the receiving device align a specific transmitting parameter for sending the first message, and the receive/transmit success rate of the first message is improved.

In a possible implementation, each of the M consecutive time units includes a DMRS. Optionally, in step S102, the communication apparatus cancels sending of the first message in M consecutive time units, where a part of the M consecutive time units include no DMRS.

Specifically, each of the M consecutive time units includes the DMRS for demodulating a carried signal, so that after receiving the first message in the M consecutive time units, the receiving device performs demodulation by using a plurality of DMRSs included in all of the M consecutive time units, to obtain the first message. In this way, the receiving device can determine, based on the plurality of DMRSs, to perform joint channel estimation in the M consecutive time units.

In a possible implementation, a part of the M consecutive time units include no DMRS.

Specifically, the part of the M consecutive time units include no DMRS. That is, the communication apparatus uses a DMRS-less (DMRS-less) technology in the M consecutive time units, to reduce time-domain density of DMRSs, so that signaling overheads of the communication apparatus is reduced, and spectral efficiency is improved.

Optionally, for example, a time unit is a slot. The DMRS-less (DMRS-less) technology may indicate to reduce time-domain density of DMRSs in each slot, or place no DMRS in some slots but perform demodulation based on channel estimation of another slot in which a DMRS is placed. In a specific manner, a channel estimation result of an adjacent slot having a DMRS is reused for a slot having no DMRS, or interpolated joint channel estimation is performed in a plurality of slots. When channel estimation quality is ensured, DMRS overheads are reduced and spectral efficiency is improved by reducing a DMRS, so that a coverage capability of a system is improved.

Both the 1st time unit and the last time unit in the M consecutive time units include a DMRS. Optionally, in step S102, the communication apparatus cancels sending of the first message in M consecutive time units, where the 1st time unit or the last time unit in the M consecutive time units includes no DMRS.

Specifically, when the part of the M consecutive time units include no DMRS, both the 1st time unit and the last time unit in the M consecutive time units include the DMRS. That is, the time unit that includes no DMRS is not the 1st time unit or the last time unit in the M consecutive time units. In this way, the receiving device may perform, in the M consecutive time units by using the DMRSs in the 1st time unit and the last time unit, interpolated joint channel estimation on the time unit that includes no DMRS. While the time-domain density of the DMRSs is reduced to improve spectral efficiency, it is ensured that the receiving device can perform joint channel estimation in the M consecutive time units, to improve communication efficiency.

In a possible implementation, the process of sending the first message in the joint transmission manner in the M consecutive time units in step S 102 may specifically include: sending the first message in the joint transmission manner in the M consecutive time units at a first frequency domain position.

Optionally, the first frequency domain position may indicate a carrier frequency value (for example, 2.4 gigahertz GHz or 6.0 GHz), or indicate a carrier frequency band (for example, 2.41 GHz to 2.42 GHz or 6.01 GHz to 6.03 GHz) of a bandwidth (for example, 10 megahertz MHz or 20 MHz), or the first frequency domain position may indicate an RB number or an RB index value. This is not limited herein.

Specifically, the communication apparatus may send the first message in the joint transmission manner in the M consecutive time units at a same first frequency domain position, so that the receiving device determines, based on the first frequency domain position, to perform joint channel estimation in the M consecutive time units.

Optionally, a second frequency domain position may include one or more frequency domain positions, or a third frequency domain position may include one or more frequency domain positions.

In addition, the N consecutive time units are configured for sending the first message in the joint transmission manner at the second frequency domain position or the third frequency domain position, and the first frequency domain position is different from at least one of the second frequency domain position and the third frequency domain position. The N consecutive time units are configured to send the first message in the joint transmission manner at a second frequency domain position or a third frequency domain position. That is, a plurality of groups of N consecutive time units are configured to perform data transmission by alternately using the second frequency domain position and the third frequency domain position for every adjacent groups of N consecutive time units, to obtain a frequency hopping gain. When there are P unavailable time units in the N consecutive time units, the communication apparatus may send the first message by using the first frequency domain position different from the second frequency domain position and/or the third frequency domain position, to increase a degree of differentiation between a frequency domain position of the first message carried in the M consecutive time units and a frequency domain position in another group of N consecutive time units, so that a good frequency hopping gain is obtained. That is, a specific implementation of resolving the foregoing problem 3 is provided.

Further, the N consecutive time units further include K consecutive time units that are non-consecutive to the M consecutive time units. For example, in a scenario in which there are a plurality of segments of M consecutive time units, such as the scenario c in FIG. 4-1, the scenario f in FIG. 4-2, the scenario g and the scenario h in FIG. 4-3, any two segments of consecutive time units may be considered as the M consecutive time units and the K consecutive time units in this embodiment. The K consecutive time units do not include the P unavailable time units. In step S102, the method may further include: sending the first message in the joint transmission manner in the K consecutive time units at the first frequency domain position, the second frequency domain position, the third frequency domain position, or a fourth frequency domain position, where the fourth frequency domain position is different from the first frequency domain position.

Optionally, the fourth frequency domain position may be different from at least one of the second frequency domain position and the third frequency domain position.

Specifically, in the N consecutive time units, there may be K consecutive time units that are different from the P unavailable time units and that are non-consecutive to the M consecutive time units, and the first message is sent by using a plurality of possible frequency domain positions in the K consecutive time units and the M consecutive time units, to increase a degree of differentiation between frequency domain positions in different time units in the N consecutive time units, so that a good frequency hopping gain is obtained.

In step S102, in the process of sending the first message, a frequency hopping rule in the N consecutive time units and adjacent N time units may be determined in a plurality of manners. The following separately provides descriptions.

Manner 1 specifically includes the following content.

In a possible implementation, the first information includes the configuration information, and the configuration information includes at least one of the following (parameters): the value of N; the at least one demodulation reference signal DMRS pattern corresponding to the value of N; the value of M; the at least one demodulation reference signal DMRS pattern corresponding to the value of M; or the first frequency hopping parameter for sending the first message.

Optionally, the communication apparatus determines the first information through configuration in step S101. That is, the first information includes the configuration information indicating to implement the joint transmission manner in the N consecutive time units. Specifically, the communication apparatus may determine the first information through configuration, determine the at least one parameter based on the configuration information included in the first information, and subsequently send the first message in the M consecutive time units based on the at least one parameter.

Further, in the M consecutive time units, the first frequency hopping parameter for sending the first message is associated with the value of N or the value of M. Alternatively, the first frequency hopping parameter is for determining a frequency domain position at which the first message is sent in the joint transmission manner in the N consecutive time units; and/or the first frequency hopping parameter is for determining a frequency domain position at which the first message is sent in the joint transmission manner in the M consecutive time units. Specifically, in the M consecutive time units, the first frequency hopping parameter for sending the first message may be associated with the value of N or the value of M, and may be for determining a corresponding frequency domain position, so that the communication apparatus can send the first message based on the frequency domain position. In this way, the communication apparatus optimizes an information transmission process based on an actual channel status, to further improve communication efficiency.

In a possible implementation, before the communication apparatus sends the first message in the joint transmission manner in the M consecutive time units in step S102, the method may further include: determining a first index value, where the first index value is for determining a frequency domain position at which the first message is sent in the N consecutive time units; determining a second index value, where the first index value is for determining a frequency domain position at which the first message is sent in the M consecutive time units; and/or determining a third index value, where the first index value is for determining a frequency domain position at which the first message is sent in the K consecutive time units. Specifically, the communication apparatus may determine the first index value in a configuration or preconfiguration manner, to make the frequency domain position at which the first message is sent in the N consecutive time units clear. Similarly, the frequency domain position for sending the first message may alternatively be made clear by using the second index value and the third index value. That is, the frequency domain position at which the communication apparatus sends the first message in step S102 is limited, and subsequently, the receiving device of the first message also aligns, by using the index value, the frequency domain position at which the communication apparatus sends the first message, to improve the receive/transmit success rate of the first message.

In addition, before step S102, the method may further include: determining a fourth index value based on a target index value, where the fourth index value is for determining a frequency domain position in a time unit after the N consecutive time units, and the target index value includes the first index value or the second index value. Optionally, the fourth index value is for determining a frequency domain position in N consecutive time units adjacent to and after the N consecutive time units. Specifically, the frequency domain position in the N consecutive time units adjacent to and after the N consecutive time units may be determined by using the first index value and the second index value, that is, may be determined in different manners. Flexibility of solution implementation is provided, and a signal receive/transmit success rate in the adjacent N consecutive time units is also improved.

Optionally, there is an association relationship between the second index value and the third index value. To be specific, there is an association relationship between frequency hopping positions of any two segments of (K and M) consecutive time units in the N consecutive time units.

Optionally, a spacing between the second index value and the third index value may be at least one of the following: a value 0, a quantity of time units in unavailable time units between the M consecutive time units and the K consecutive time units or a quantity of time unit segments in the unavailable time units, a quantity of time units in available time units between the M consecutive time units and the K consecutive time units or a quantity of time unit segments in the available time units, a quantity of time units in first time units, and a quantity of time unit segments in the first time units. For example, in the scenario g in FIG. 4-3, if the M consecutive time units and the K consecutive time units are respectively the 1st segment M and the 2nd segment M in the scenario, a spacing between the M consecutive time units and the K consecutive time units is a quantity (2) of time units or a quantity (1) of segments in P in the middle. If the unavailable slots are not counted, a value is 0. In addition, in the scenario g, if the M consecutive time units and the K consecutive time units are respectively the 1st segment M and the 3rd segment M in the scenario, a spacing is a quantity (where 2+2+2=6) of time units or a quantity (where 1+1+1=3) of segments in two segments of P and the 2nd segment M. If the unavailable slots are not counted, a value is 0. In this case, the spacing is a quantity (2) of time units or a quantity (1) of segments in the 2nd segment M.

The spacing between the second index value and the third index value may be equal to a difference between the second index value and the third index value minus 1.

Optionally, a spacing between the first index value and the target index value may be at least one of the following: a value 0, a quantity of time units in the P unavailable time units or a quantity of time unit segments in the P unavailable time units, the quantity of time units in the first time units, and the quantity of time unit segments in the first time units, where the first time unit is a time unit in which the first message is not sent and that is in the M time units. The spacing between the first index value and the target index value may be specifically equal to a difference between the first index value and the target index value minus 1.

Optionally, when the first time unit and the P unavailable time units are consecutive in time domain, a value of the quantity of time unit segments in the P unavailable time units is 1 and a value of the quantity of time unit segments in the first time units is 0, or a value of the quantity of time unit segments in the P unavailable time units is 0 and a value of the quantity of time unit segments in the first time units is 1. For example, as shown in the scenario a, the scenario b, and the scenario c shown in FIG. 4-1, and the scenario d and the scenario e shown in FIG. 4-2, the first time unit is not included, and a value of the quantity of time units in the P unavailable time units or the quantity of time unit segments in the P unavailable time units is 1. As shown in the scenario f in FIG. 4-2 and the scenario g and the scenario h in FIG. 4-3, the quantity of time units in the P unavailable time units or the quantity of time unit segments in the P unavailable time units, the quantity of time units in the first time units, and the quantity of time unit segments in the first time units may be directly determined by sending the scenario shown in the figure (where for example, in the scenario h, the quantity of time units in the P unavailable time units is 4+2+4=10, and the quantity of time unit segments in the P unavailable time units is 3). If any segment of M consecutive time units before the P unavailable time units is not sent, in an example of the scenario g, the quantity of time units in the first time units is 4+2=6, and the quantity of time unit segments in the first time units is 2.

Manner 2 specifically includes the following content.

In a possible implementation,

a frequency hopping count of the N consecutive time units includes a frequency hopping count of the M consecutive time units; or
a frequency hopping count of the N consecutive time units includes a sum of a frequency hopping count of the M consecutive time units and a value of a first parameter, where the first parameter includes one or more of the following: a quantity of time units in the P unavailable time units or a quantity of time unit segments in the P unavailable time units, a quantity of time units in first time units, and a quantity of time unit segments in the first time units, where the first time unit is a time unit in which the first message is not sent and that is in the M time units.

Optionally, when the first time unit and the P unavailable time units are consecutive in time domain, a value of the quantity of time unit segments in the P unavailable time units is 1 and a value of the quantity of time unit segments in the first time units is 0, or a value of the quantity of time unit segments in the P unavailable time units is 0 and a value of the quantity of time unit segments in the first time units is 1.

Specifically, when the frequency hopping count of the N consecutive time units is determined, the frequency hopping count of the N consecutive time units may include only the frequency hopping count of the M consecutive time units other than the P unavailable time units, or may further include the first parameter. The first parameter may be implemented by using one or more of the foregoing items. The frequency hopping count of the N consecutive time units including the unavailable time unit is determined in a plurality of manners, to improve flexibility of solution implementation.

For example, frequency hopping used in step S102 is described below in detail based on different application cases with reference to formulas and example application scenarios.

Case 1: Generally (to be specific, when the communication device performs transmission in the N consecutive time units including no unavailable time unit), two or more frequency hopping positions may be supported. Herein, descriptions are provided by using an example in which only two frequency hopping positions are supported. A frequency hopping process includes the following formula:

$$RB'_{start} = \begin{cases} RB_{start} & n_h \bmod 2 = 0 \\ (RB_{start} + RB_{offset}) \bmod N_{BWP}^{size} & n_h \bmod 2 = 1 \end{cases}$$

$RB'_{start}$ is a number of a start RB of each hop, $RB_{start}$ is a number (a number of the 1st hop/a reference RB, configured or preconfigured) that is of a start RB and that is indicated by signaling, $RB_{offset}$ is a frequency hopping offset value (a quantity of offset RBs, configured or preconfigured), $N_{BWP}^{size}$ is a quantity of RBs included in a BWP, and $n_h$ is a number of a hop. In the plurality of groups of N consecutive time units, when joint channel estimation/joint sending is enabled, a plurality of possible frequency domain positions are used for every adjacent groups of N consecutive time units, so that each hop includes N time units.

In this embodiment, in step S102, when there are P unavailable time units in the N consecutive time units, the following describes, by using examples shown in FIG. 6-1 to FIG. 6-8, an internal frequency hopping setting of the N consecutive time units (where N=4 or N=5, and P=1).

In FIG. 6-1, FIG. 6-2, FIG. 6-7, and FIG. 6-8, a left side of a long vertical line indicates a frequency domain position at which an unavailable time unit occurs and that is in a current group of N consecutive time units, and a right side of the long vertical line indicates a frequency domain position of a next adjacent group of N consecutive time units. In FIG. 6-1 to FIG. 6-8, a dashed-line box indicates a frequency domain position at which no unavailable time unit occurs and that is in the current group of N consecutive time units, a non-blackened solid box indicates a frequency domain position of an available time unit in the current group of N consecutive time units, and a blackened solid box indicates the frequency domain position of the unavailable time unit in the current group of N consecutive time units.

Optionally, when there are P unavailable time units in the N consecutive time units, a frequency hopping granularity before and after the unavailable time unit may be each time unit or each segment of time units. For example, in static configured invalid cases shown in an upper left area and an upper right area in FIG. 6-3, and in dynamic configured invalid cases shown in an upper left area and a lower right area in FIG. 6-4, the frequency hopping granularity is each time unit. That is, adjacent time units have different frequency domain positions. In static configured invalid cases shown in a lower left area and a lower right area in FIG. 6-3, and in dynamic configured invalid cases shown in an upper right area and a lower left area in FIG. 6-4, the frequency hopping granularity is each segment of consecutive time units. That is, adjacent segments of consecutive time units have different frequency domain positions.

Case 2: The communication device still uses, in the N consecutive time units, the frequency domain position used when no unavailable time unit occurs in Case 1. That is, in the N slots, the formula in Case 1 is still used, and the previous $RB_{start}$ and $RB_{offset}$ are still used, and $n_h$ may be determined according to a rule in the solution of this application.

In this case, a number of the 1st hop in the N slots should follow numbers of a previous group of N slots. That is, if the previous group of N slots are at the 1st position, the 1st hop of the current group of N slots should be at the 2nd position. That is, a frequency domain position of the 1st hop of the current group of N slots is the same as a frequency domain position that is of the current group of N slots and that is used when no invalid slot exists. That is, internal frequency hopping of the current group of N slots and frequency hopping before the N slots are counted in a streamlined manner.

For example, in FIG. 6-1, in static configured invalid cases shown in a lower left area (where N=4) and a lower right area (where N=5), and in dynamic configured invalid cases shown in a lower left area (where N=4) and a lower right area (where N=5) shown in FIG. 6-2, in the current group of N consecutive time units, frequency hopping is performed before and after the unavailable time unit, and used frequency hopping positions are the same as two frequency hopping positions used for different adjacent groups of N consecutive time units.

Case 3: The communication device uses, in the N consecutive time units, frequency domain positions one of which is different from the two frequency domain positions used when no unavailable time unit occurs in Case 1. In this case, in the N time units, the formula in Case 1 is still used, where the previous $RB_{start}$ is still used, and $RB_{offset}$ needs to be configured or preconfigured by using additional signaling, and may be determined based on a BWP if preconfiguration is performed. A difference between this case and Case 1 is that $RB_{offset}$ is changed, and another rule is the same as that in Case 1.

Case 4: The communication device uses, in the N consecutive time units, frequency domain positions different from the two frequency domain positions used when no unavailable time unit occurs in Case 1. In the N slots, the following formulas are used:

$$RB'_{start} = \begin{cases} RB_{start} - RB_{offset} & n_h \bmod 2 = 0 \\ RB_{start} + RB_{offset} & n_h \bmod 2 = 1 \end{cases},$$

or

$$RB'_{start} = \begin{cases} (RB_{start} - RB_{offset}) \bmod N_{BWP}^{size} & n_h \bmod 2 = 0 \\ (RB_{start} + RB_{offset}) \bmod N_{BWP}^{size} & n_h \bmod 2 = 1 \end{cases}$$

$RB_{start}$ is a start RB of a frequency position (a position of a dashed-line slot in a schematic diagram) at which N preempted slots are originally located, and $RB_{offset}$ needs to be configured or preconfigured by using additional signaling, and may be determined based on a BWP if preconfiguration is performed (where that is, a dashed-line position is used as a center, and frequency hopping is symmetrical).

For example, in static configured invalid cases shown in an upper left area and an upper right area in FIG. 6-1, and in dynamic configured invalid cases shown in an upper left area and an upper right area in FIG. 6-2, in the current group of N consecutive time units, frequency hopping is performed before and after the unavailable time unit, and used frequency hopping positions are both different from two frequency hopping positions used for different adjacent groups of N consecutive time units.

Case 5: In another adjacent group of N consecutive time units after the N consecutive time units indicated in step S102, the communication device still uses an original formula and a configured parameter without being affected by frequency hopping in the N slots in the previous group, where the N slots including an unavailable slot and indicated in step S102 are still counted as one hop.

For example, in cases shown in an upper left area and an upper right area in FIG. 6-7, and in cases shown in an upper left area and an upper right area in FIG. 6-8, in the another adjacent group of N consecutive time units, the formula in Case 1 is still used for determining that frequency hopping positions of the N consecutive time units remain unchanged regardless of whether there is an unavailable time unit in the current group of N consecutive time units.

Case 6: In another adjacent group of N consecutive time units after the N consecutive time units indicated in step S102, the communication device still uses an original formula and a configured parameter when being affected by frequency hopping in the N slots in the previous group, where hops are counted in the N slots according to a rule in the invention solution.

For example, in cases shown in a lower left area and a lower right area in FIG. 6-7, and in cases shown in a lower left area and a lower right area in FIG. 6-8, in the another adjacent group of N consecutive time units, a frequency domain position of the last time unit in the current group of N consecutive time units is determined based on a case in which there is an unavailable time unit in the current group of N consecutive time units, and a frequency domain position of the another adjacent group of N consecutive time units is further determined based on the frequency domain position.

Optionally, when the frequency hopping count of the current group of N consecutive time units (where there are P unavailable time units) is calculated, a frequency hopping count of an available time unit and the possible first parameter (where the first parameter is for determining a frequency hopping count of the P unavailable time units) may be included. The first parameter includes one or more of the following: the quantity of time units in the P unavailable time units or the quantity of time unit segments in the P unavailable time units, the quantity of time units in the first time units, and the quantity of time unit segments in the first time units, where the first time unit is the time unit in which the first message is not sent and that is in the M time units.

For example, when the frequency hopping count of the N consecutive time units includes only the frequency hopping count of the available time unit, in cases shown in an upper left area and an upper right area in FIG. 6-5, and in cases shown in an upper left area and an upper right area in FIG. 6-6, a frequency hopping count of P consecutive time units is considered as 0.

When the frequency hopping count of the N consecutive time units includes the frequency hopping count of the available time unit and the first parameter, and a value of the first parameter is a quantity (that is, equal to 2) of time units in the P unavailable time units, in cases shown in a middle left area and a middle right area in FIG. 6-5, and in cases shown in a middle left area and a middle right area in FIG. 6-6, a frequency hopping count of P consecutive time units is considered as P.

When the frequency hopping count of the N consecutive time units includes the frequency hopping count of the available time unit and the first parameter, and a value of the first parameter is a quantity (that is, equal to 1) of time unit segments in the P unavailable time units, in cases shown in a lower left area and a lower right area in FIG. 6-5, and in cases shown in a lower left area and a lower right area in FIG. 6-6, a frequency hopping count of P consecutive time units is considered as 1.

Similarly, when the first parameter includes the quantity of time units in the first time units and the quantity of time unit segments in the first time units, refer to a scenario shown in FIG. 6-9. For a specific implementation process, refer to the foregoing calculation process. Details are not described herein again.

In a possible implementation, the method may further include: sending the first message in an independent transmission manner in a second time unit, where the second time unit is at least one of the N consecutive time units, the second time unit is different from the P time units, the first time unit is non-consecutive to the M consecutive time units, and the independent transmission manner is different from the joint transmission manner.

Optionally, second time units are non-consecutive in time domain.

Specifically, the communication apparatus sends the first message in the independent transmission manner different from the joint transmission manner in the second time unit that is different from the P unavailable time units and that is non-consecutive to the M consecutive time units, so that the receiving device performs channel estimation in the second time unit in a manner other than joint channel estimation, to improve use efficiency of the N consecutive time units in time domain, and improve communication efficiency.

In a possible implementation, a first repetition count of the first message indicating that the N consecutive time units are configured for sending in the joint transmission manner is 1. In this case, before the first message is sent in the joint transmission manner in the M consecutive time units, the method may further include: determining a second repetition count of the first message based on a comparison between a ratio of M to N and a first threshold, where the second repetition count is greater than or equal to 1.

Optionally, when the ratio of M to N is greater than the first threshold, it is determined that the second repetition count of the first message is greater than 1; when the ratio of M to N is less than the first threshold, it is determined that the second repetition count of the first message is equal to 1; or when the ratio of M to N is equal to the first threshold, it is determined that the second repetition count of the first message is greater than (or equal to) 1.

Optionally, the first repetition count may be a count of nominal repetitions (nominal repetitions), and the second repetition count may be a count of actual repetitions (actual repetitions).

Specifically, when the first repetition count of the first message indicating that the N consecutive time units are configured for sending in the joint transmission manner is 1, for example, when the N consecutive time units are configured for transmitting a transport block processing over multi-slot physical uplink shared channel (TB processing over multi-slot PUSCH), the communication apparatus may determine the second repetition count of the first message based on the comparison between the ratio of M to N and the first threshold. That is, the communication apparatus determines a repetition count of the first message based on a length of M actually available consecutive time units other than the P unavailable time units in the N consecutive time units in time domain. The information transmission process is optimized based on the actual channel status, to further improve communication efficiency.

In this embodiment, the communication apparatus first determines the first information indicating that the N consecutive time units are configured for sending the first message in the joint transmission manner. To be specific, the receiving device that receives the first message performs joint channel estimation in the N bundled consecutive time units to obtain the first message; and when there are P unavailable time units in the N consecutive time units indicated by the first information, the communication apparatus sends the first message in the joint transmission manner in the M consecutive time units different from the P unavailable time units. In this way, the first message can be transmitted in the M consecutive time units in the N consecutive time units, and the receiving device may perform joint channel estimation in the M consecutive time units, to implement communication in the plurality of bundled time units including the unavailable time unit, avoid communication interruption, and improve communication efficiency.

In a second implementation, implementation of step S 102 includes the following process.

A process of step S 102 may specifically include: When there are P unavailable time units in the N consecutive time units, the communication apparatus sends the first message in an independent transmission manner in a first time unit, where the first time unit is different from the P unavailable time units, the independent transmission manner is different from the joint transmission manner, and P is an integer greater than 0.

Similarly, the independent transmission manner is different from the joint transmission manner. To be specific, a transmission rule that may be indicated by the independent transmission manner is that any one of the following does not need to be met: The precoding matrices are consistent, the antenna ports are consistent, the power control parameters are consistent, the phases are consecutive, and both the 1$^{st}$ time unit and the last time unit include the demodulation reference signal DMRS.

It should be noted that the P unavailable time units may be determined due to a static configured invalid slot, dynamic configured invalid slot, or another manner. This is not specifically limited herein.

In a possible implementation, the first time unit is located after the P unavailable time units.

Optionally, the first time unit may alternatively be located before the P unavailable time units.

Specifically, to avoid transmission interruption in the N consecutive time units caused by the P unavailable time units, the first time unit for sending the first message may be located after the P unavailable time units in time domain.

Optionally, the communication apparatus may determine the P unavailable time units in a dynamic or static configured manner. For example, the P time units may become unavailable because other transmission preempts, due to preemption information (a need to send or receive other information), a channel that is of the communication apparatus and on which the first message is located. In addition, the preemption information may be determined by the communication apparatus in the P time units in the N consecutive time units and a time unit that is in the N consecutive time units and that is before the P time units. In this way, a specific implementation of the first time unit is provided, and the solution can be applicable to an application scenario of the P unavailable time units caused by preemption.

Optionally, the communication apparatus cancels sending of the first message in the first time unit located before the P unavailable time units in time domain.

In a possible implementation, before step S102, the method may further include: receiving or detecting third information in a time unit located before the first time unit, where the third information is for determining that a transmitting parameter is a first sending parameter. In this case, a process of sending the first message in the independent transmission manner in the first time unit may specifically include: sending the first message based on the first sending parameter in the independent transmission manner in the first time unit.

Optionally, the third information may be in a form of a signal. That is, receiving or detecting the third information may alternatively be represented by receiving or detecting the signal.

Specifically, when the first time unit is located after the P unavailable time units, the communication apparatus may send the first message in the first time unit by using the first sending parameter determined based on the received third information. The third information may be from the receiving device of the first message, so that the communication apparatus sends the first message based on an indication of the receiving device, to improve a receive success rate of the first message.

Optionally, there may be one or more pieces of third information. The communication apparatus may use, as a sending parameter in the first time unit, a first sending parameter determined based on third information that is received at the latest in time domain.

For an implementation process of the sending parameter, refer to the description content of the scenarios shown in FIG. 5-1 and FIG. 5-2 in the foregoing first implementation. Details are not described herein again.

In addition, a process in which the communication apparatus sends the first message in the independent transmission manner in the first time unit in step S 102 may specifically include: sending the first message in the independent transmission manner in the first time unit based on a configured grant. Specifically, if transmission is of the configured grant, namely, a configured grant type 1 (Configured Grant type 1, CG type 1), the communication apparatus can obtain the first information without indication of downlink control information DCI. Compared with a manner of determining, through the indication of the DCI, to send the first message in the independent transmission manner in the first time unit, this can reduce signaling overheads, and improve spectral efficiency.

Optionally, sending the first message in the independent transmission manner in the first time unit includes: sending the first message in the independent transmission manner in the first time unit based on a configured grant type 2 (CG type 2) or a dynamic grant (Dynamic Grant, DG). Specifically, when it is determined, in a CG type 2 or DG manner, to send the first message in the independent transmission manner in the first time unit, because in the CG type 2 or DG manner, the DCI may indicate that different time unit quantities correspond to one demodulation reference signal pattern (DMRS pattern), or may correspond to a plurality of DMRS patterns, and indicate a to-be-selected pattern in the DCI, a device that sends the DCI is used as the receiving device of the first message, so that the communication apparatus and the receiving device align a specific DMRS pattern for sending the first message, and a receive/transmit success rate of the first message is improved.

Optionally, the first information is carried in an RRC message.

Optionally, in a CG type 1 (without the DCI) transmission manner (that is, the indication of the DCI is not needed), the first information (RRC) indicates at least one of the following configurations:

If each time unit quantity (N or M) corresponds to one DMRS pattern, the first message is sent based on the corresponding DMRS pattern in N time units; or if there is an unavailable time unit, there are M consecutive available time units in N time units (M<N), and the first message is sent based on a quantity of time units included in the M consecutive available time units and a corresponding pattern indicated in the first information.

If each time unit quantity (N or M) corresponds to a plurality of DMRS patterns, one of the DMRS patterns may be defined as a default pattern (default pattern), and the first message is sent based on the corresponding default pattern in N time units; or if there is an unavailable time unit, there are M consecutive available time units in N time units (M<N), and the first message is sent based on a quantity of time units included in the M consecutive available time units and a corresponding default pattern indicated in the first information.

Optionally, in a CG type 2 transmission manner and a DG transmission manner (that is, through the indication of the DCI), the first information (RRC) indicates at least one of the several configurations.

If each time unit quantity (N or M) corresponds to one DMRS pattern, the first message is sent based on the corresponding DMRS pattern in N time units; or if there is an unavailable time unit, there are M consecutive available time units in N time units (M<N), and the first message is sent based on a quantity of time units included in the M consecutive available time units and a corresponding pattern indicated in the first information.

If each time unit quantity (N or M) corresponds to a plurality of DMRS patterns, and second information (the DCI) indicates one of the plurality of patterns, the first message is sent in N time units based on the corresponding pattern indicated by the DCI; or if there is an unavailable time unit, there are M consecutive available time units in N time units (M<N), and the first message is sent based on a quantity of time units included in the M consecutive available time units and a pattern that is indicated by the DCI in DMRS patterns that are indicated in the first information and that correspond to the quantity M of the consecutive time units.

In addition, before step S102, the method may further include: receiving the second information, where the second information indicates a first demodulation reference signal pattern, and the first demodulation reference signal pattern is one of the at least one demodulation reference signal pattern corresponding to the value of N. Sending the first message in the independent transmission manner in the first time unit includes: sending the first message in the independent transmission manner in the first time unit based on the second information. Specifically, in the first time unit, the communication apparatus sends the first message based on the DMRS pattern indicated by the second information. That is, a device that schedules the second information is used as the receiving device of the first message, so that the communication apparatus and the receiving device align a specific DMRS pattern for sending the first message, and the receive/transmit success rate of the first message is improved.

In a possible implementation, that the communication apparatus sends the first message in the independent transmission manner in the first time unit in step S102 includes: sending the first message in the independent transmission manner in the first time unit based on the first information obtained in step S101. Specifically, in M consecutive time units, the communication apparatus sends the first message based on a related transmitting parameter indicated by the first information. That is, a device that schedules the first information is used as the receiving device of the first message, so that the communication apparatus and the receiving device align a specific transmitting parameter for sending the first message, and the receive/transmit success rate of the first message is improved.

In a possible implementation, each of first time units includes a DMRS. Optionally, in step S102, the communication apparatus cancels sending of the first message in a time unit that is in first time units and that includes no DMRS.

Specifically, each of the first time units includes the DMRS for demodulating a carried signal, so that after receiving the first message in the first time unit, the receiving device performs demodulation by using a plurality of DMRSs included in all of the first time units, to obtain the first message. In this way, a specific implementation of carrying the DMRS in the first time unit is provided, and the receiving device can determine, based on the plurality of DMRSs, to perform channel estimation in the first time unit in a manner other than the joint channel estimation.

In a possible implementation, a part of the first time units include no DMRS. Specifically, the part of the first time units include no DMRS. That is, the communication apparatus uses a DMRS-less (DMRS-less) technology in the first time unit, to reduce time-domain density of DMRSs. In this way, a specific implementation of carrying a DMRS in the first time unit is provided, signaling overheads of the communication apparatus is reduced, and spectral efficiency is improved.

Optionally, for example, a time unit is a slot. The DMRS-less (DMRS-less) technology may indicate to reduce time-domain density of DMRSs in each slot, or place no DMRS in some slots but perform demodulation based on channel estimation of another slot in which a DMRS is placed. When channel estimation quality is ensured, DMRS overheads are reduced and spectral efficiency is improved by reducing a DMRS, so that a coverage capability of a system is improved.

In a possible implementation, the process of sending the first message in the independent transmission manner in the first time unit may specifically include: sending the first message in the independent transmission manner in a time unit that includes a DMRS and that is in the first time units. Optionally, in step S102, the communication apparatus cancels sending of the first message in a first time unit that includes no DMRS.

Specifically, when the part of the first time units include no DMRS, the communication apparatus sends the first message only in the time unit including the DMRS. In this way, the receiving device demodulates the first message by using the DMRS in each time unit in the time unit that includes the DMRS and that is in the first time units, to improve a success rate of performing data demodulation by the receiving end of the first message in the first time unit by using the DMRS.

In a possible implementation, the process of sending the first message in the independent transmission manner in the first time unit may specifically include: sending the first message in the independent transmission manner in the first time unit at a first frequency domain position, where the N consecutive time units are configured for sending the first message in the independent transmission manner at a second frequency domain position or a third frequency domain position, and the first frequency domain position is different from at least one of the second frequency domain position and the third frequency domain position.

Optionally, the first frequency domain position may indicate a carrier frequency value (for example, 2.4 gigahertz GHz or 6.0 GHz), or indicate a carrier frequency band (for example, 2.41 GHz to 2.42 GHz or 6.01 GHz to 6.03 GHz) of a bandwidth (for example, 10 megahertz MHz or 20 MHz), or the first frequency domain position may indicate an RB number or an RB index value. This is not limited herein.

Optionally, the second frequency domain position may include one or more frequency domain positions, or the third frequency domain position may include one or more frequency domain positions.

Specifically, the N consecutive time units are configured to send the first message in the joint transmission manner at a second frequency domain position or a third frequency domain position. That is, a plurality of groups of N consecutive time units are configured to perform data transmission by alternately using the second frequency domain position and the third frequency domain position for every adjacent groups of N consecutive time units, to obtain a frequency hopping gain. When there are P unavailable time units in the N consecutive time units, the communication apparatus may send the first message by using the first frequency domain position different from the second frequency domain position and/or the third frequency domain position, to increase a degree of differentiation between a frequency domain position of the first message carried in the first time unit and a frequency domain position in another group of N consecutive time units, so that a good frequency hopping gain is obtained.

Further, the N consecutive time units further include a second time unit different from the first time unit, the second time unit does not include the P unavailable time units, and the method further includes: sending the first message in the independent transmission manner in the second time unit at the first frequency domain position, the second frequency domain position, the third frequency domain position, or a fourth frequency domain position. Optionally, the fourth frequency domain position may be different from at least one of the second frequency domain position and the third frequency domain position.

Specifically, in the N consecutive time units, there may be a second time unit that is different from the P unavailable time units and that is different from the first time unit, and the first message is sent by using a plurality of possible frequency domain positions in the second time unit and the first time unit, to increase a degree of differentiation between frequency domain positions in different time units in the N consecutive time units, so that a good frequency hopping gain is obtained.

In step S102, in the process of sending the first message, a frequency hopping rule in the N consecutive time units and adjacent N time units may be determined in a plurality of manners. The following separately provides descriptions.

Manner 1 specifically includes the following content.

In a possible implementation, the first information includes the configuration information, and the configuration information includes at least one of the following: the value of N; the at least one demodulation reference signal pattern corresponding to the value of N; at least one demodulation reference signal pattern corresponding to a time unit quantity value of 1; or the first frequency hopping parameter for sending the first message.

Optionally, the communication apparatus determines the first information through configuration in step S101. That is, the first information includes the configuration information indicating to implement the joint transmission manner in the N consecutive time units. Specifically, the communication apparatus may determine the first information through configuration, determine the at least one parameter based on the configuration information included in the first information, and subsequently send the first message in the M consecutive time units based on the at least one parameter.

Further, the first frequency hopping parameter for sending the first message is associated with the value of N. Alternatively, the first frequency hopping parameter is for determining a frequency domain position at which the first message is sent in the joint transmission manner in the N consecutive time units and/or a frequency domain position at which the first message is sent in the independent transmission manner in the first time unit. Specifically, in the first time unit, the first frequency hopping parameter for sending the first message may be associated with the value of N, and may be for determining a corresponding frequency domain position, so that the communication apparatus can send the first message based on the frequency domain position. In this way, the communication apparatus optimizes an information transmission process based on an actual channel status, to further improve communication efficiency.

In a possible implementation, before the first message is sent in the independent transmission manner in the first time unit, the method further includes: determining a first index value, where the first index value is for determining a frequency domain position at which the first message is sent in the N consecutive time units; determining a second index value, where the first index value is for determining a frequency domain position at which the first message is sent in the first time unit; and/or determining a third index value, where the first index value is for determining a frequency domain position at which the first message is sent in the second time unit. Specifically, the communication apparatus may determine the first index value in a configuration or preconfiguration manner, to make the frequency domain position at which the first message is sent in the N consecutive time units clear. Similarly, the frequency domain position for sending the first message may alternatively be made clear by using the second index value and the third index value. That is, the frequency domain position at which the communication apparatus sends the first message is limited, and subsequently, the receiving device of the first message also aligns, by using the index value, the frequency domain position at which the communication apparatus sends the first message, to improve the receive/transmit success rate of the first message.

In addition, before step S102, the method may further include: determining a fourth index value based on a target index value, where the fourth index value is for determining a frequency domain position in a time unit after the N consecutive time units, and the target index value includes the first index value or the second index value. Optionally, the fourth index value is for determining a frequency domain position in N consecutive time units adjacent to and after the N consecutive time units. The frequency domain position in the N consecutive time units adjacent to and after the N consecutive time units may be determined by using the first index value and the second index value, that is, may be determined in different manners. Flexibility of solution implementation is provided, and a signal receive/transmit success rate in the adjacent N consecutive time units is also improved.

Manner 2 specifically includes the following content.

In a possible implementation,

a frequency hopping count of the N consecutive time units includes a frequency hopping count of the first time unit; or
a frequency hopping count of the N consecutive time units includes a sum of a frequency hopping count of the first time unit and a value of a first parameter, where the first parameter includes one or more of the following:
a quantity of time units in the P unavailable time units, a quantity of time unit segments in the P unavailable time units, a quantity of time units in third time units, and a quantity of time unit segments in the third time units, where the third time unit is a time unit that is in the N consecutive time units and that is different from the first time unit.

Optionally, when the third time unit and the P unavailable time units are consecutive in time domain, a value of the quantity of time unit segments in the P unavailable time units is 1 and a value of the quantity of time unit segments in the third time units is 0, or a value of the quantity of time unit segments in the P unavailable time units is 0 and a value of the quantity of time unit segments in the third time units is 1.

Specifically, when the frequency hopping count of the N consecutive time units is determined, the frequency hopping count of the N consecutive time units may include only the frequency hopping count of the first time unit other than the P unavailable time units, or may further include the first parameter. The first parameter may be implemented by using one or more of the foregoing items. The frequency hopping count of the N consecutive time units including the unavailable time unit is determined in a plurality of manners, to improve flexibility of solution implementation.

In a possible implementation, a frequency hopping granularity of the first time unit is each time unit. Optionally, a plurality of groups of N consecutive time units are configured as a frequency hopping granularity of every N consecutive time units. Specifically, in the N consecutive time units, the frequency hopping granularity of each time unit may be set in the first time unit other than the P unavailable time units, so that frequency hopping is performed for a plurality of times in different time units in the N consecutive time units, to obtain a good frequency hopping gain.

For a process of determining a frequency hopping count of a current group of N consecutive time units and a frequency hopping count of a next adjacent group of N consecutive time units, refer to related implementation in the foregoing first implementation. Details are not described herein again.

In a possible implementation, a first repetition count of the first message indicating that the N consecutive time units are configured for sending in the joint transmission manner is 1. Before the first message is sent in the independent transmission manner in the first time unit, the method may further include: determining a second repetition count of the first message based on a comparison between a ratio of M to N and a first threshold, where the second repetition count is greater than or equal to 1, and M is a quantity of time units in the N consecutive time units, different from the P unavailable time units, and consecutive in time domain.

Optionally, when the ratio of M to N is greater than the first threshold, it is determined that the second repetition count of the first message is greater than 1; when the ratio of M to N is less than the first threshold, it is determined that the second repetition count of the first message is equal to 1; or when the ratio of M to N is equal to the first threshold, it is determined that the second repetition count of the first message is greater than (or equal to) 1.

Optionally, the first repetition count may be a count of nominal repetitions (nominal repetitions), and the second repetition count may be a count of actual repetitions (actual repetitions).

Specifically, when the first repetition count of the first message indicating that the N consecutive time units are configured for sending in the joint transmission manner is 1, for example, when the N consecutive time units are configured to transmit a transport block processing over multi-slot physical uplink shared channel (TB processing over multi-slot PUSCH), the communication apparatus may determine the second repetition count of the first message based on the comparison between the ratio of M to N and the first threshold. That is, the communication apparatus determines a repetition count of the first message based on a length of M actually available consecutive time units other than the P unavailable time units in the N consecutive time units in time domain. The information transmission process is optimized based on the actual channel status, to further improve communication efficiency.

In this embodiment, the communication apparatus first determines the first information indicating that the N consecutive time units are configured for sending the first message in the joint transmission manner. To be specific, the receiving device that receives the first message performs joint channel estimation in the N bundled consecutive time units to obtain the first message; and when there are P unavailable time units in the N consecutive time units indicated by the first information, the communication apparatus sends the first message in the independent transmission manner different from the joint transmission manner in the first time unit different from the P unavailable time units. In this way, the first message can be transmitted in the first time unit in the N consecutive time units, and the receiving device may perform channel estimation in the first time unit in the manner other than the joint channel estimation, to implement communication in a plurality of bundled time units including an unavailable time unit, avoid communication interruption, and improve communication efficiency.

Refer to FIG. 7. A communication method provided in an embodiment of this application includes the following steps.

S201: A terminal device receives first information.

S202: The terminal device determines N consecutive time units based on the first information.

Specifically, as a communication apparatus, the terminal device first receives the first information in step S201, where the first information includes uplink-downlink slot configuration information. Then, the communication apparatus determines the N consecutive time units based on the first information, where the N consecutive time units are configured for sending a first message in a joint transmission manner, N is an integer greater than 1, and the joint transmission manner meets at least one of the following: Precoding matrices are consistent, antenna ports are consistent, power control parameters are consistent, phases are consecutive, and both the 1st time unit and the last time unit include a demodulation reference signal DMRS.

Based on the foregoing technical solution, when performing communication in time division duplex (time division duplex, TDD) mode, the communication apparatus may determine, based on the first information including the uplink-downlink slot configuration information, the N consecutive time units configured to send the first message in the joint transmission manner, and subsequently may send the first message in the joint transmission manner in the N consecutive time units, so that a receiving end of the first message receives the first message in a joint channel estimation manner. Signaling overheads of configuring the first information in another manner can be reduced, and spectral efficiency can be improved.

In a possible implementation, a process of determining the N consecutive time units based on the first information specifically includes: determining, based on the first information, a quantity of time units for uplink transmission; and further determining the N consecutive time units based on the quantity of time units for uplink transmission. Specifically, a specific implementation of determining the N consecutive time units based on the uplink-downlink slot configuration information is provided, to improve solution feasibility.

In a possible implementation, the time unit for uplink transmission includes at least one of the following: an uplink time unit, a flexible time unit, or a special time unit. Optionally, it is determined, in a configuration or preconfiguration manner, that the flexible time unit is included in the time unit for uplink transmission. For example, the communication apparatus receives additional signaling to indicate whether a flexible slot is an uplink slot or a downlink slot. Alternatively, the communication apparatus indicates that the flexible slot is available for the uplink transmission, and the flexible slot is directly used during uplink transmission without signaling indication. A plurality of implementations of the time unit for uplink transmission are provided, to improve solution feasibility.

Optionally, there may be a plurality of values of N. To be specific, the value of N is equal to a sum of consecutive-slot quantities of at least one of the uplink time unit, the flexible time unit, and the special time unit.

Currently, in a communication network, to meet an increasingly high communication requirement between a terminal device (UE) and a network device (a base station), a plurality of different channels usually need to be for carrying various signals. It is inevitable that time domain resources that carry the different channels may overlap.

For example, uplink transmission from the terminal device to the network device is performed, and a plurality of channels for the uplink transmission include a PUSCH and a PUCCH. If the PUCCH and the PUSCH occupy a same resource in time domain, that is, time domain resources of the PUCCH and the PUSCH overlap, or in other words, the PUCCH and the PUSCH conflict in time domain, due to a factor such as a limited sending power of the terminal, the PUCCH and the PUSCH cannot be simultaneously sent, and there may be two processing manners: One is sending only one of the PUCCH and the PUSCH, and the other is multiplexing uplink control information UCI carried on the PUCCH onto the PUSCH.

To ensure coverage of cell edge UE, both the PUCCH and the PUSCH may be repeatedly sent, to improve communication quality of the edge UE. There are two types of PUSCH repetitions: a type A and a type B. For the type A, in K1 times of transmission configured by a higher layer, start symbols (symbols S) and quantities (L) of occupied symbols of the PUSCH in all slots are consistent. A main problem of the type A is that each slot needs to have L consecutive symbols starting from the symbol S, and a resource requirement is high. In addition, the type B is introduced to meet a low latency requirement of a service such as URLLC. The Type B does not require that a same start symbol and symbol length be occupied in each slot. Starting from the start symbol, K2 times of PUSCH (nominal repetitions, nominal) transmission are sent on a subsequent symbol. If a slot boundary or a symbol that cannot be used in an uplink is encountered in a sending process, this time of nominal transmission is divided into two times of actual transmission. Although this causes a change of a quantity of symbols in the two times of transmission obtained through division, an increase in a code rate, and a decrease in transmission reliability, however, resource utilization efficiency is improved, and a latency is reduced. Repeat transmission of the PUCCH is simpler than the repetitions on the PUSCH, and only a manner similar to the type A is considered for repetition.

In addition, the base station may obtain, by receiving a buffer status report BSR reported by the terminal, a quantity of bits of data to be sent by the terminal UE. However, a resource allocation manner based on BSR reporting cannot completely ensure that a resource scheduled by the base station can perfectly match the to-be-sent data of the UE. When the base station schedules the PUSCH, but the UE has no data to be sent in this case, if a capability of the UE permits in this case, the UE may skip this time of PUSCH transmission, and ignore a scheduling grant of the base station. However, in a scenario in which resources of the PUSCH and the PUCCH conflict, skipping scheduling and not sending the PUSCH need the base station to perform blind detection on the PUCCH and the PUSCH, to determine a channel that carries the PUSCH. Additional complexity is increased.

Currently, if the PUSCH and the PUCCH overlap (overlap), and the UCI needs to be multiplexed onto the PUSCH, the PUSCH cannot be skipped, and the higher layer needs to generate a padding MAC PDU for the PUSCH to carry the UCI. The padding MAC PDU is not true data, but is for carrying the UCI and is specially generated by a MAC layer.

However, in a case of the PUSCH repetition, because the PUSCH and the PUCCH may be different in different slots, when the UE receives a PUSCH grant that enables the repetition, whether the padding MAC PDU still needs to be generated and whether to maintain a same criterion in each PUSCH slot or each time of PUSCH transmission are problems that need to be resolved.

To resolve the foregoing technical problems, an embodiment of this application provides a communication method. Refer to FIG. 8, the method includes the following steps.

S301: A communication apparatus determines first indication information.

In this embodiment, the communication apparatus used as a transmitting device (or a receiving device) first determines the first indication information in step S301. The first indication information indicates to send N repetitions on a first channel on a first time domain resource, and N is an integer greater than 1.

Optionally, second information carried on a second channel is repeatedly transmitted in each time unit in a third time domain resource for one or more times.

Optionally, the first channel and the second channel have a same priority or different priorities.

Optionally, the first channel is a physical uplink shared channel PUSCH, and the second channel is a physical uplink control channel PUCCH.

Optionally, a subcarrier spacing of the first time domain resource is the same as or different from a subcarrier spacing of a second time domain resource.

Optionally, a channel type of the first channel is the same as or different from a channel type of the second channel.

Optionally, the first channel is for uplink transmission, sidelink transmission, and downlink transmission.

Optionally, the second channel is for uplink transmission, sidelink transmission, and downlink transmission.

Optionally, the first channel is the same as the second channel, or the first channel is different from the second channel.

Optionally, the communication apparatus determines the first time domain resource and the second time domain resource in a configuration or preconfiguration manner.

Optionally, the first channel is a legitimate first channel. To be specific, the first time domain resource for sending the first channel is not occupied by another configuration or channel.

Optionally, the communication apparatus determines the first indication information in a configuration or preconfiguration manner.

Optionally, the N repetitions on the first channel include a MAC protocol data unit (MAC PDU) repeated for N times, and the MAC PDU may be a padding MAC PDU (Padding MAC PDU). For example, the communication apparatus is configured to send a message on the first time domain resource on the first channel. However, when the communication apparatus determines that no data needs to be sent, the communication apparatus may send the padding MAC PDU.

In this way, the first channel and the second channel may be obtained through configuration in the plurality of different manners above, to improve flexibility of solution implementation.

S302: Send M repetitions on the first channel on the first time domain resource when the second time domain resource and the third time domain resource overlap in time domain.

In this embodiment, when determining, in step S302, that the second time domain resource and the third time domain resource overlap in time domain, the communication apparatus used as a sending end sends the M repetitions on the first channel on the first time domain resource, where the second time domain resource is a time domain resource occupied by the M repetitions on the first channel, the third time domain resource is a time domain resource occupied by one or more second channels, and M is an integer greater than or equal to 1 and less than or equal to N. Accordingly, when determining, in step S302, that the second time domain resource and the third time domain resource overlap in time domain, the communication apparatus used as the receiving device receives the M repetitions on the first channel on the first time domain resource.

In a possible implementation, when the second time domain resource and the third time domain resource do not overlap in time domain, the communication apparatus cancels sending of the first channel in step S302.

Optionally, that sending of the first channel is canceled indicates that sending of at least one repetition on the first channel is canceled, that sending of the N repetitions on the first channel is canceled, or that sending of information or a signal carried on the first channel is canceled.

Based on the foregoing technical solution, when determining that the second time domain resource and the third time domain resource do not overlap, that is, when determining that any time unit in the time domain resource occupied by the M repetitions on the first channel and any time unit in the time domain resource occupied by the one or more second channels do not overlap, the communication apparatus cancels sending of the first channel, to reduce communication complexity and reduce signaling overheads.

In a possible implementation, in step S302, the sending M repetitions on the first channel on the first time domain resource includes: sending the M repetitions on the first channel on the second time domain resource.

In a possible implementation, in step S302, the method further includes: sending N-M repetitions on the first channel on a fourth time domain resource, where the fourth time domain resource is in the first time domain resource, and is different from the second time domain resource.

Based on the foregoing technical solution, on the fourth time domain resource different from the second time domain resource, the communication apparatus may alternatively send another repetition on the first channel, so that a receiving device of the first channel receives and processes the first information on the third time domain resource.

In a possible implementation, in step S302, the M repetitions on the first channel are sent on the first time domain resource when at least one of the following conditions is met: A time domain resource on which any one of the N repetitions is located and the third time domain resource overlap; a time domain resource on which the 1st repetition in the N repetitions is located and the third time domain resource overlap; or a time domain resource on which a repetition whose redundancy version RV value is 0 and that is in the N repetitions is located and the third time domain resource overlap.

Based on the foregoing technical solution, while a plurality of different conditions for the communication apparatus to determine to send the M repetitions on the first channel on the first time domain resource are provided, this helps reduce complexity of a determining process and improve communication efficiency.

In a possible implementation, before step S302, the method may further include: determining second indication information, where the second indication information indicates a repetition type on the first channel. In this case, in step S302, the sending M repetitions carried on the first channel on the first time domain resource includes: sending, on the first time domain resource based on the repetition type, the M repetitions carried on the first channel.

Optionally, the communication apparatus determines the second indication information in a configuration or preconfiguration manner.

Optionally, the repetition type is a type A (Type A) or a type B (Type B).

Based on the foregoing technical solution, the communication apparatus sends the M repetitions on the first channel based on the repetition type indicated by the second indication information, so that a specific implementation of sending the first information is provided, and a receiving device of the M repetitions on the first channel may alternatively receive the M repetitions on the first channel based on the repetition type indicated by the second indication information. In this way, the communication apparatus and the receiving device align the repetition type of the first information, and a receive/transmit success rate of the first information is improved.

In this embodiment, when the communication apparatus determines that the second time domain resource and the third time domain resource overlap, that is, when the communication apparatus determines that there is at least one overlapping time unit in the time domain resource occupied by the M repetitions on the first channel and the time domain resource occupied by the one or more second channels, the communication apparatus sends the M repetitions on the first time domain resource for sending the N repetitions on the first channel. When time domain resources of a plurality of channels overlap, at least a part of the N repetitions carried on the first channel are sent. This avoids higher communication complexity caused by blind detection performed by a receiving device of the N repetitions on the first channel in the overlapping time unit because the receiving device does not receive the N repetitions, and improves communication efficiency.

The following describes the communication method provided in this embodiment by using an example in which uplink transmission from a terminal device (namely, the communication apparatus used as the transmitting end) to a network device (namely, the communication apparatus used as a receiving end) is performed, a plurality of channels for the uplink transmission include a PUSCH and a PUCCH (namely, the first channel and the second channel), and a MAC PDU sent on the PUSCH is a padding MAC PDU.

## Embodiment 1

A terminal needs to determine whether there is a conflict with PUCCH transmission in any slot for repeated sending or any time of actual transmission. If resources overlap, all PUSCH transmission cannot be discarded. A MAC layer of the terminal needs to generate a MAC PDU, and send a PUSCH or all actual PUSCH transmission in a slot in which the PUSCH is located.

In a scenario (a PUSCH repetition type A, a PUCCH and the PUSCH have a same priority) shown in FIG. 9-1, in a type-A repetition manner, a dynamic grant physical uplink shared channel DG PUSCH is repeatedly transmitted in a slot n to a slot n+3 for four times in total. If there is a conflict with two different PUCCHs in the slot n+1 and the slot n+2 respectively, none of the four times of PUSCH transmission in the slot n to the slot n+3 can be discarded, the MAC layer needs to generate the MAC PDU, only a PUSCH for carrying the MAC PDU is sent in the slot n and the slot n+3, a PUSCH for carrying the MAC PDU and UCI from PUCCH_1 is sent in the slot n+1, and a PUSCH for carrying the MAC PDU and the UCI from PUCCH _2 is sent in the slot n+2. In a scenario shown in FIG. 9-2 (a PUSCH repetition type B, a PUCCH and the PUSCH have a same priority), in a type-B repetition manner, actual transmission is performed for six times in total. At least one time of actual transmission and the PUCCH transmission overlap in time domain. In this case, all the PUSCH transmission is not skipped, and the MAC layer needs to generate the MAC PDU.

The dynamic grant (DG) PUSCH is also applicable to a configured grant (configured grant) PUSCH. When the terminal has no data to be sent at this moment, the MAC PDU is a padding MAC PDU for padding PUSCH transmission.

In a scenario (a PUSCH repetition type A, a PUCCH and the PUSCH have different priorities) shown in FIG. 10-1 and a scenario (a PUSCH repetition type A, a PUCCH and the PUSCH have different priorities) shown in FIG. 10-2, when the PUSCH and the PUCCH have different physical layer priorities, the foregoing method is still applicable. If UCI needs to be multiplexed onto the PUSCH in any slot or any time of actual transmission, PUSCHs in all PUSCH slots or all actual PUSCH transmission should be sent. However, whether the PUSCHs in all the PUSCH slots or all the actual PUSCH transmission can be sent depends on a comparison between a priority in each slot or actual PUSCH transmission and a priority of the PUCCH. If the priority of the PUSCH in the slot or the actual PUSCH transmission is lower than the priority of the PUCCH, the PUSCH in the slot or overlapping the high-priority PUCCH is not sent. If the priority of the PUSCH is higher, the PUSCH continues to be sent. If the priorities are the same, the UCI may be multiplexed onto the PUSCH.

## Embodiment 2

In a scenario (where a type A PUSCH repetition and PUCCH repetition overlap in time domain) shown in FIG. 11-1 and a scenario (where a type B PUSCH repetition and PUCCH repetition sending overlap in time domain) shown in FIG. 11-2, when a PUCCH repetition is also enabled, a MAC layer still needs to generate a MAC PDU. In a slot in which a PUSCH and a PUCCH overlap, the PUSCH is discarded and not transmitted. In a slot in which the PUSCH does not conflict with the PUCCH, the PUSCH is not skipped, and is still sent. As shown in the figure, for a type A repetition, PUSCHs in slots N+1 and N+2 are discarded, a PUSCH is still sent in a remaining slot, and UCI is sent on the PUCCH. For a type B repetition, actual transmission 4 in the slot N+1 and actual transmission 6 overlap a repeatedly transmitted PUCCH in time domain. In this case, the two times of PUSCH transmission are skipped, and the UCI is sent on the PUCCH.

A dynamic grant (DG) PUSCH is also applicable to a configured grant (configured grant) PUSCH. When a terminal has no data to be sent at this moment, the MAC PDU is a padding MAC PDU for padding PUSCH transmission.

A beneficial effect of the foregoing method is that the UE does not need to distinguish, at a physical layer, whether the PDU obtained from the MAC is a padding MAC PDU, and no additional processing rule needs to be added, and implementation complexity is reduced.

**Embodiment 3**

When a PUSCH repetition is enabled, if a PUSCH and a PUCCH overlap in time domain in this case, only whether overlapping occurs needs to be determined in the 1st slot for transmission or the 1st time of actual transmission, and then whether a MAC PDU needs to be generated is determined. When the PUSCH and the PUCCH overlap in time domain in the 1st PUSCH transmission slot or the 1st time of actual PUSCH transmission, if a terminal has no data to be sent in this case, MAC needs to generate the MAC PDU, all PUSCHs are sent, and UCI carried on the PUCCH is multiplexed, in a slot and transmission in which the PUSCH and the PUCCH overlap, onto the PUSCH for sending. If the PUSCH and the PUCCH do not overlap in a configured PUSCH transmission slot or the 1st time of actual PUSCH transmission, the MAC PDU does not need to be generated in this case, and all PUSCHs are skipped, even if the PUSCH the PUCCH overlap in a PUSCH slot other than the 1st PUSCH slot or actual PUSCH transmission other than the 1st time of actual PUSCH transmission.

In a scenario (where a type A PUSCH repetition and the PUCCH overlap in time domain in the 1st PUSCH slot) shown in FIG. 12-1 and a scenario (where a type A PUSCH repetition and the PUCCH do not overlap in time domain in the 1st PUSCH slot) shown in FIG. 12-2, For PUSCH type-A and type-B repetitions, if the PUCCH and PUSCH overlap in a slot N, the MAC layer needs to generate the MAC PDU, the UCI and the MAC PDU are sent in the slot N and actual transmission 1, and only the MAC PDU is transmitted in a remaining PUSCH. In the slot N, if no PUCCH and the PUSCH overlap, the MAC PDU does not need to be generated in this case, and all PUSCH transmission is skipped, and only the UCI is sent on the PUCCH.

In a scenario shown in FIG. 12-3 (where a PUSCH repetition type A and the PUCCH overlap in time domain in the 1st PUSCH slot, and have different priorities), it is similar to Embodiment 1 that, when the PUSCH and the PUCCH have different physical layer priorities, if the PUSCH and the PUCCH overlap in time domain in the 1st PUSCH transmission slot or the 1st time of actual PUSCH transmission and the PUCCH transmission overlap in time domain, the MAC layer needs to generate the MAC PDU, and determine, based on a priority, to send the PUSCH or the PUCCH when each slot or each time of actual PUSCH transmission in which the PUSCH and the PUCCH overlap conflict with the PUCCH, and still send the PUSCH in a slot or actual transmission in which the PUSCH and the PUCCH do not overlap. As shown in the figure, the PUCCH is sent in the slot N because the PUSCH has a low priority, the PUSCH is still sent in a remaining slot, and the PUSCH carries the MAC PDU.

A dynamic grant (DG) PUSCH is also applicable to a configured grant (configured grant) PUSCH. When the terminal has no data to be sent at this moment, the MAC PDU is a padding MAC PDU for padding PUSCH transmission.

An advantage of the foregoing manner is that the terminal needs to determine, only once in the 1st PUSCH slot and the 1st time of actual PUSCH transmission, whether the padding MAC PDU needs to be generated, and implementation complexity is reduced.

**Embodiment 4**

When a terminal has no data to be sent, and enables a PUSCH repetition, the UE needs to determine, in each PUSCH transmission slot or each time of actual PUSCH transmission, whether a PUSCH and a PUCCH overlap. If the PUSCH and the PUCCH overlap, a MAC layer needs to generate a MAC PDU, transmission of the overlapping PUSCH or actual transmission of the overlapping PUSCH cannot be skipped, and UCI needs to be multiplexed onto the PUSCH for transmission. If the PUSCH and the PUCCH do not overlap, the transmission of the overlapping PUSCH does not need to be sent.

In a scenario (a PUSCH repetition type A, the PUCCH and the PUSCH have a same priority) shown in FIG. 12-4, the PUSCH is repeatedly sent in a slot N to a slot N+3, and the PUSCH and PUCCH overlap in time domain in the slot N+1 and the slot N+2. In this case, the MAC layer needs to generate the MAC PDU, and the PUSCH is sent in the slot N+1 and the slot N+2, and is not sent in the slot N and the slot N+3.

Similarly, in a scenario (a PUSCH repetition type B, and the PUCCH and the PUSCH have a same priority) shown in FIG. 12-5, when the PUSCH is repeated in a type-B manner, only actual PUSCH transmission in which the PUSCH and the PUCCH overlap is sent, and the UCI is multiplexed onto corresponding actual PUSCH transmission.

A dynamic grant (DG) PUSCH is also applicable to a configured grant (configured grant) PUSCH. When the terminal has no data to be sent at this moment, the MAC PDU is a padding MAC PDU for padding PUSCH transmission.

It should be noted that, when the MAC PDU is a padding MAC PDU in this case, the PDU may carry an identifier indicating that the PDU is a MAC PDU. Specifically, a flag bit may be added to a header of the MAC PDU. When the flag bit is "0", the PDU is displayed as a normal PDU. When the flag bit is " 1", the PDU is a padding MAC PDU.

Likewise, when physical layer priorities of the PUSCH and the PUCCH are different, only a channel with a high priority is sent in the manner in Embodiment 1. After a PUCCH repetition is enabled, the manner in Embodiment 2 may continue to be used. In the PUSCH slot or the actual PUSCH transmission in which overlapping occurs, only the PUCCH is sent, and the PUSCH is not sent. Details are not described herein again.

**Embodiment 5**

For repeat transmission of a PUSCH, different data redundancy versions (RVs) may be used for each time of PUSCH transmission. In this case, if any PUSCH whose RV is equal to 0 overlaps a PUCCH in time domain, processing may be performed in a manner similar to that in Embodiment 1. Details are not described herein again.

**Embodiment 6**

For repeat transmission of a PUSCH, different data redundancy versions (RVs) may be used for each time of PUSCH transmission. In this case, if the 1st PUSCH whose RV is equal to 0 overlaps a PUCCH in time domain, processing may be performed in a manner similar to that in Embodiment 3. Details are not described herein again.

The foregoing describes embodiments of this application from a perspective of the method. The following describes the communication apparatus in embodiments of this application from a perspective of specific apparatus implementation.

Refer to FIG. 13. An embodiment of this application provides a communication apparatus. The communication apparatus 1300 may implement a function of the transmitting device in the foregoing method embodiments, and therefore can also achieve beneficial effects of the foregoing method embodiments.

The communication apparatus includes a processing unit 1301 and a transceiver unit 1302.

In a possible implementation solution,

the processing unit 1301 is configured to determine first information, where the first information indicates that N consecutive time units are configured for sending a first message in a joint transmission manner, and N is an integer greater than 1.

The transceiver unit 1302 is configured to: when there are P unavailable time units in the N consecutive time units, send the first message in the joint transmission manner in M consecutive time units, where the M consecutive time units are a part of the N consecutive time units, the M consecutive time units do not include the P unavailable time units, M is an integer greater than 1, and P is an integer greater than 0.

In a possible implementation, the first information includes configuration information, and the configuration information includes at least one of the following:

a value of N;
at least one demodulation reference signal pattern corresponding to a value of N;
a value of M;
at least one demodulation reference signal pattern corresponding to a value of M; or
a first frequency hopping parameter for sending the first message.

In a possible implementation, the first frequency hopping parameter of the first message is associated with the value of N or the value of M.

In a possible implementation, the first frequency hopping parameter is for determining:

a frequency domain position at which the first message is sent in the joint transmission manner in the N consecutive time units; and/or
a frequency domain position at which the first message is sent in the joint transmission manner in the M consecutive time units.

In a possible implementation, the transceiver unit 1302 is specifically configured to:

send the first message in the joint transmission manner in the M consecutive time units based on a configured grant.

In a possible implementation, the transceiver unit 1302 is further configured to:

receive second information, where the second information indicates a first demodulation reference signal pattern, and the first demodulation reference signal pattern is one of the at least one demodulation reference signal pattern corresponding to the value of N or one of the at least one demodulation reference signal pattern corresponding to the value of M.

The transceiver unit 1302 is specifically configured to:

send the first message in the joint transmission manner in the M consecutive time units based on the second information.

In a possible implementation, the transceiver unit 1302 is specifically configured to:

send the first message in the joint transmission manner in the M consecutive time units based on the first information.

In a possible implementation, the M consecutive time units are located after the P unavailable time units.

In a possible implementation, the transceiver unit 1302 is further configured to:

receive or detect third information in a time unit located before the M consecutive time units, where the third information is for determining that a transmitting parameter is a first sending parameter.

The transceiver unit 1302 is specifically configured to:

send the first message based on the first sending parameter in the joint transmission manner in the M consecutive time units.

In a possible implementation, each of the M consecutive time units includes a DMRS.

In a possible implementation, a part of the M consecutive time units include no DMRS.

In a possible implementation, both the 1st time unit and the last time unit in the M consecutive time units include a DMRS.

In a possible implementation, the transceiver unit 1302 is specifically configured to:

send the first message in the joint transmission manner in the M consecutive time units at a first frequency domain position.

In a possible implementation, the N consecutive time units are configured for sending the first message in the joint transmission manner at a second frequency domain position or a third frequency domain position, and the first frequency domain position is different from at least one of the second frequency domain position and the third frequency domain position.

In a possible implementation, the N consecutive time units further include K consecutive time units that are non-consecutive to the M consecutive time units, the K consecutive time units do not include the P unavailable time units, and the transceiver unit 1302 is further configured to:

send the first message in the joint transmission manner in the K consecutive time units at the first frequency domain position, the second frequency domain position, the third frequency domain position, or a fourth frequency domain position, where the fourth frequency domain position is different from the first frequency domain position.

In a possible implementation, the processing unit 1301 is further configured to:

determine a first index value, where the first index value is for determining a frequency domain position at which the first message is sent in the N consecutive time units;

determine a second index value, where the first index value is for determining a frequency domain position at which the first message is sent in the M consecutive time units; and/or

determine a third index value, where the first index value is for determining a frequency domain position at which the first message is sent in the K consecutive time units.

In a possible implementation, the processing unit 1301 is further configured to:

determine a fourth index value based on a target index value, where the fourth index value is for determining a frequency domain position in a time unit after the N consecutive time units, and the target index value includes the first index value or the second index value.

In a possible implementation, the transceiver unit 1302 is further configured to:

send the first message in an independent transmission manner in a first time unit, where the first time unit is at least one of the N consecutive time units, the first time unit is different from the P time units, the second time unit is non-consecutive to the M consecutive time units, and the independent transmission manner is different from the joint transmission manner.

In a possible implementation, a first repetition count of the first message indicating that the N consecutive time units are configured for sending in the joint transmission manner is 1.

The processing unit 1301 is further configured to:

determine a second repetition count of the first message based on a comparison between a ratio of M to N and a first threshold, where the second repetition count is greater than or equal to 1.

In a possible implementation, the first message includes uplink information, sidelink information, or downlink information.

In another possible implementation solution,

the processing unit 1301 is configured to determine first information, where the first information indicates that N consecutive time units are configured for sending a first message in a joint transmission manner, and N is an integer greater than 1.

The transceiver unit 1302 is configured to: when there are P unavailable time units in the N consecutive time units, send the first message in an independent transmission manner in a first time unit, where the first time unit is different from the P unavailable time units, the independent transmission manner is different from the joint transmission manner, and P is an integer greater than 0.

In a possible implementation, the first information includes configuration information, and the configuration information includes at least one of the following:

a value of N;

at least one demodulation reference signal pattern corresponding to a value of N; or

a first frequency hopping parameter for sending the first message.

In a possible implementation, the first frequency hopping parameter of the first message is associated with the value of N.

In a possible implementation, the first frequency hopping parameter is for determining:

a frequency domain position at which the first message is sent in the joint transmission manner in the N consecutive time units; and/or
a frequency domain position at which the first message is sent in the independent transmission manner in the first time unit.

In a possible implementation, the transceiver unit 1302 is specifically configured to:
send the first message in the independent transmission manner in the first time unit based on a configured grant.

In a possible implementation, the transceiver unit 1302 is further configured to:
receive second information, where the second information indicates a first demodulation reference signal pattern, and the first demodulation reference signal pattern is one of the at least one demodulation reference signal pattern corresponding to the value of N.

The transceiver unit 1302 is specifically configured to:
send the first message in the independent transmission manner in the first time unit based on the second information.

In a possible implementation, the transceiver unit 1302 is specifically configured to:
send the first message in the independent transmission manner in the first time unit based on the first information.

In a possible implementation, the first time unit is located after the P unavailable time units.

In a possible implementation, the transceiver unit 1302 is further configured to:
receive or detect third information in a time unit located before the first time unit, where the third information is for determining that a transmitting parameter is a first sending parameter.

The transceiver unit 1302 is specifically configured to:
send the first message based on the first sending parameter in the independent transmission manner in the first time unit.

In a possible implementation, each of first time units includes a DMRS.

In a possible implementation, a part of the first time units include no DMRS.

In a possible implementation, the transceiver unit 1302 is specifically configured to:
send the first message in the independent transmission manner in a time unit that includes a DMRS and that is in the first time units.

In a possible implementation, the transceiver unit 1302 is specifically configured to:
send the first message in the independent transmission manner in the first time unit at a first frequency domain position, where the N consecutive time units are configured for sending the first message in the independent transmission manner at a second frequency domain position or a third frequency domain position, and the first frequency domain position is different from at least one of the second frequency domain position and the third frequency domain position.

In a possible implementation, the N consecutive time units further include a second time unit different from the first time unit, the second time unit does not include the P unavailable time units, and the apparatus further includes:
sending the first message in the independent transmission manner in the second time unit at the first frequency domain position, the second frequency domain position, the third frequency domain position, or a fourth frequency domain position.

In a possible implementation, the processing unit 1301 is further configured to:

determine a first index value, where the first index value is for determining a frequency domain position at which the first message is sent in the N consecutive time units;
determine a second index value, where the first index value is for determining a frequency domain position at which the first message is sent in the first time unit; and/or
determine a third index value, where the first index value is for determining a frequency domain position at which the first message is sent in the second time unit.

In a possible implementation, the processing unit 1301 is further configured to:
determine a fourth index value based on a target index value, where the fourth index value is for determining a frequency domain position in a time unit after the N consecutive time units, and the target index value includes the first index value or the second index value.

In a possible implementation,
a frequency hopping granularity of the first time unit is each time unit.

In a possible implementation, a first repetition count of the first message indicating that the N consecutive time units are configured for sending in the joint transmission manner is 1.

The processing unit 1301 is further configured to:
determine a second repetition count of the first message based on a comparison between a ratio of M to N and a first threshold, where M is a quantity of time units in the N consecutive time units, different from the P unavailable time units, and consecutive in time domain, and the second repetition count is greater than or equal to 1.

In a possible implementation, the first message includes uplink information, sidelink information, or downlink information.

In another possible implementation solution,
the transceiver unit 1302 is configured to receive first information, where the first information includes uplink-downlink slot configuration information.

The processing unit 1301 is configured to determine N consecutive time units based on the first information, where the N consecutive time units are configured for sending a first message in a joint transmission manner, N is an integer greater than 1, and the joint transmission manner meets at least one of the following: Precoding matrices are consistent, antenna ports are consistent, power control parameters are consistent, phases are consecutive, and both the 1st time unit and the last time unit include a demodulation reference signal DMRS.

In a possible implementation, the processing unit 1301 is specifically configured to:

determine, based on the first information, a quantity of time units for uplink transmission; and
determine the N consecutive time units based on the quantity of time units for uplink transmission.

In a possible implementation,
the time unit for uplink transmission includes at least one of the following: an uplink time unit, a flexible time unit, or a special time unit.

In a possible implementation, the processing unit 1301 is specifically configured to:
determine, in a configuration or preconfiguration manner, that the flexible time unit is included in the time unit for uplink transmission.

In another possible implementation solution,
the processing unit 1301 is configured to determine whether there is an overlapping partial time domain resource in a first time domain resource and a second time domain resource, where the first time domain resource is for transmitting first information carried on a first channel, and the second time domain resource is for carrying a second channel.

The transceiver unit 1302 is configured to: when the processing unit determines that there is an overlapping partial time domain resource in the first time domain resource and the second time domain resource, send, on the overlapping partial time domain resource, a part or all of the first information carried on the first channel.

Optionally, second information carried on the second channel is repeatedly transmitted in each time unit in the second time domain resource for one or more times.

Optionally, the first channel and the second channel have a same priority or different priorities.

Optionally, the first channel is a physical uplink shared channel PUSCH, and the second channel is a physical uplink control channel PUCCH.

Optionally, a subcarrier spacing of the first time domain resource is the same as or different from a subcarrier spacing of the second time domain resource.

Optionally, a channel type of the first channel is the same as or different from a channel type of the second channel.

Optionally, the first channel is for uplink transmission, sidelink transmission, and downlink transmission.

Optionally, the second channel is for uplink transmission, sidelink transmission, and downlink transmission.

Optionally, the communication apparatus determines the first time domain resource and the second time domain resource in a configuration or preconfiguration manner.

Optionally, the first information includes a MAC protocol data unit (MAC PDU), and the MAC PDU may be a padding MAC PDU (Padding MAC PDU).

In a possible implementation,
the processing unit 1301 is further configured to: when determining that there is no overlapping partial time domain resource in the first time domain resource and the second time domain resource, cancel sending the first information carried on the first channel.

In a possible implementation,
the transceiver unit 1302 is specifically configured to send, on a third time domain resource, the first information carried on the first channel, where the third time domain resource is located in the first time domain resource, and is different from the overlapping partial time domain resource.

In a possible implementation, a repetition of the first information carried on the first channel is a first repetition, and the processing unit 1301 is specifically configured to:

determine whether a time domain resource on which the first repetition is located and the second time domain resource overlap; and

if yes, determine that there is an overlapping partial time domain resource in the first time domain resource and the second time domain resource; or

if no, determine that there is no overlapping partial time domain resource in the first time domain resource and the second time domain resource.

In a possible implementation, a repetition of the first information carried on the first channel is a first repetition, and the processing unit 1301 is specifically configured to:

determine whether the 1st time unit of a time domain resource on which the first repetition is located and the second time domain resource overlap; and

if yes, determine that there is an overlapping partial time domain resource in the first time domain resource and the second time domain resource; or

if no, determine that there is no overlapping partial time domain resource in the first time domain resource and the second time domain resource.

In a possible implementation, a repetition of the first information carried on the first channel is a first repetition, and the processing unit 1301 is specifically configured to:

determine whether a time unit whose redundancy version value is 0 and that is in a time domain resource on which the first repetition is located and the second time domain resource overlap; and

if yes, determine that there is an overlapping partial time domain resource in the first time domain resource and the second time domain resource; or

if no, determine that there is no overlapping partial time domain resource in the first time domain resource and the second time domain resource.

In a possible implementation, the processing unit 1301 is further configured to:
determine first indication information, where the first indication information indicates a repetition type of the first information carried on the first channel.

The transceiver unit 1302 is specifically configured to:
send, on the overlapping partial time domain resource based on the repetition type, the part or all of the first information carried on the first channel.

In another possible implementation solution,
the processing unit 1301 is configured to determine first indication information, where the first indication information indicates to send N repetitions on a first channel on a first time domain resource, and N is an integer greater than 1.

The transceiver unit 1302 is configured to send M repetitions on the first channel on the first time domain resource when a second time domain resource and a third time domain resource overlap in time domain, where the second time domain resource is a time domain resource occupied by the M repetitions on the first channel, the third time domain resource is a time domain resource occupied by one or more second channels, and M is an integer greater than or equal to 1 and less than or equal to N.

Optionally, second information carried on the second channel is repeatedly transmitted in each time unit in the third time domain resource for one or more times.

Optionally, the first channel and the second channel have a same priority or different priorities.

Optionally, the first channel is a physical uplink shared channel PUSCH, and the second channel is a physical uplink control channel PUCCH.

Optionally, a subcarrier spacing of the first time domain resource is the same as or different from a subcarrier spacing of the second time domain resource.

Optionally, a channel type of the first channel is the same as or different from a channel type of the second channel.

Optionally, the first channel is for uplink transmission, sidelink transmission, and downlink transmission.

Optionally, the second channel is for uplink transmission, sidelink transmission, and downlink transmission.

Optionally, the first channel is the same as the second channel, or the first channel is different from the second channel.

Optionally, the communication apparatus determines the first indication information in a configuration or preconfiguration manner.

Optionally, the communication apparatus determines the first time domain resource and the second time domain resource in a configuration or preconfiguration manner.

Optionally, the first channel is a legitimate first channel. To be specific, the first time domain resource for sending the first channel is not occupied by another configuration or channel.

Optionally, the N repetitions on the first channel include a MAC protocol data unit (MAC PDU) repeated for N times, and the MAC PDU may be a padding MAC PDU (Padding MAC PDU).

In a possible implementation, the processing unit 1301 is specifically configured to:

cancel sending of the first channel when the second time domain resource and the third time domain resource do not overlap in time domain.

Optionally, that sending of the first channel is canceled indicates that sending of at least one repetition on the first channel is canceled, that sending of the N repetitions on the first channel is canceled, or that sending of information or a signal carried on the first channel is canceled.

In a possible implementation, the transceiver unit 1302 is specifically configured to:

send the M repetitions on the first channel on the second time domain resource.

In a possible implementation, the transceiver unit is further configured to:

send N-M repetitions on the first channel on a fourth time domain resource, where the fourth time domain resource is in the first time domain resource, and is different from the second time domain resource.

In a possible implementation, the transceiver unit 1302 sends the M repetitions on the first channel on the first time domain resource when at least one of the following conditions is met:

A time domain resource on which any one of the N repetitions is located and the third time domain resource overlap;

a time domain resource on which the 1st repetition in the N repetitions is located and the third time domain resource overlap; or
a time domain resource on which a repetition whose redundancy version RV value is 0 and that is in the N repetitions is located and the third time domain resource overlap.

It should be noted that, for content such as an information execution process of the units in the communication apparatus 1300, refer to the descriptions in the foregoing method embodiments of this application. Details are not described herein again.

Refer to FIG. 14. An embodiment of this application provides a communication apparatus. The communication apparatus 1400 may implement a function of the receiving device in the foregoing method embodiments, and therefore can also achieve beneficial effects of the foregoing method embodiments.

The communication apparatus includes a processing unit 1401 and a transceiver unit 1402.

In a possible implementation solution,

the processing unit 1401 is configured to determine first information, where the first information indicates that N consecutive time units are configured to receive a first message in a joint transmission manner, and N is an integer greater than 1.

The transceiver unit 1402 is configured to: when there are P unavailable time units in the N consecutive time units, receive the first message in the joint transmission manner in M consecutive time units, where the M consecutive time units are a part of the N consecutive time units, the M consecutive time units do not include the P unavailable time units, M is an integer greater than 1, and P is an integer greater than 0.

In a possible implementation, the first information includes configuration information, and the configuration information includes at least one of the following:

a value of N;
at least one demodulation reference signal pattern corresponding to a value of N;
a value of M;
at least one demodulation reference signal pattern corresponding to a value of M; or
a first frequency hopping parameter for sending the first message.

In a possible implementation, the first frequency hopping parameter of the first message is associated with the value of N or the value of M.

In a possible implementation, the first frequency hopping parameter is for determining:

a frequency domain position at which the first message is sent in the joint transmission manner in the N consecutive time units; and/or
a frequency domain position at which the first message is sent in the joint transmission manner in the M consecutive time units.

In a possible implementation, the transceiver unit 1402 is specifically configured to:

receive the first message in the joint transmission manner in the M consecutive time units based on a configured grant.

In a possible implementation, the transceiver unit 1402 is further configured to:

send second information, where the second information indicates a first demodulation reference signal pattern, and the first demodulation reference signal pattern is one of the at least one demodulation reference signal pattern corresponding to the value of N or one of the at least one demodulation reference signal pattern corresponding to the value of M.

The transceiver unit 1402 is specifically configured to:

receive the first message in the joint transmission manner in the M consecutive time units based on the second information.

In a possible implementation, the transceiver unit 1402 is specifically configured to:

receive the first message in the joint transmission manner in the M consecutive time units based on the first information.

In a possible implementation, the M consecutive time units are located after the P unavailable time units.

In a possible implementation, the transceiver unit 1402 is further configured to:

send third information in a time unit located before the M consecutive time units, where the third information is for determining that a receiving parameter is a first receiving parameter.

The transceiver unit 1402 is specifically configured to:

receive the first message based on the first receiving parameter in the joint transmission manner in the M consecutive time units.

In a possible implementation, each of the M consecutive time units includes a DMRS.

In a possible implementation, a part of the M consecutive time units include no DMRS.

In a possible implementation, both the 1st time unit and the last time unit in the M consecutive time units include a DMRS.

In a possible implementation, the transceiver unit 1402 is specifically configured to:

receive the first message in the joint transmission manner in the M consecutive time units at a first frequency domain position.

In a possible implementation, the N consecutive time units are configured to receive the first message in the joint transmission manner at a second frequency domain position or a third frequency domain position, and the first frequency domain position is different from at least one of the second frequency domain position and the third frequency domain position.

In a possible implementation, the N consecutive time units further include K consecutive time units that are non-consecutive to the M consecutive time units, the K consecutive time units do not include the P unavailable time units, and the transceiver unit is further configured to:

receive the first message in the joint transmission manner in the K consecutive time units at the first frequency domain position, the second frequency domain position, the third frequency domain position, or a fourth frequency domain position, where the fourth frequency domain position is different from the first frequency domain position.

In a possible implementation, the processing unit 1401 is further configured to:

determine a first index value, where the first index value is for determining a frequency domain position at which the first message is sent in the N consecutive time units;

determine a second index value, where the first index value is for determining a frequency domain position at which the first message is sent in the M consecutive time units; and/or

determine a third index value, where the first index value is for determining a frequency domain position at which the first message is sent in the K consecutive time units.

In a possible implementation, the processing unit 1401 is further configured to:

determine a fourth index value based on a target index value, where the fourth index value is for determining a frequency domain position in a time unit after the N consecutive time units, and the target index value includes the first index value or the second index value.

In a possible implementation, the transceiver unit 1402 is further configured to:

receive the first message in an independent transmission manner in a second time unit, where the second time unit is at least one of the N consecutive time units, the second time unit is different from the P time units, the second time unit is non-consecutive to the M consecutive time units, and the independent transmission manner is different from the joint transmission manner.

In a possible implementation, a first repetition count of the first message indicating that the N consecutive time units are configured for sending in the joint transmission manner is 1.

The processing unit 1401 is further configured to:

determine a second repetition count of the first message based on a comparison between a ratio of M to N and a first threshold, where the second repetition count is greater than or equal to 1.

In a possible implementation, the first message includes uplink information, sidelink information, or downlink information.

In another possible implementation solution,

the processing unit 1401 is configured to determine first information, where the first information indicates that N consecutive time units are configured to receive a first message in a joint transmission manner, and N is an integer greater than 1.

The transceiver unit 1402 is configured to: when there are P unavailable time units in the N consecutive time units, receive the first message in an independent transmission manner in a first time unit, where the first time unit is different from the P unavailable time units, the independent transmission manner is different from the joint transmission manner, and P is an integer greater than 0.

In a possible implementation, the first information includes configuration information, and the configuration information includes at least one of the following:

a value of N;
at least one demodulation reference signal pattern corresponding to a value of N; or
a first frequency hopping parameter for sending the first message.

In a possible implementation, the first frequency hopping parameter of the first message is associated with the value of N.

In a possible implementation, the first frequency hopping parameter is for determining:

a frequency domain position at which the first message is sent in the joint transmission manner in the N consecutive time units; and/or
a frequency domain position at which the first message is sent in the independent transmission manner in the first time unit.

In a possible implementation, the transceiver unit 1402 is specifically configured to:
receive the first message in the independent transmission manner in the first time unit based on a configured grant.

In a possible implementation, the transceiver unit 1402 is further configured to:
send second information, where the second information indicates a first demodulation reference signal pattern, and the first demodulation reference signal pattern is one of the at least one demodulation reference signal pattern corresponding to the value of N.

The transceiver unit 1402 is specifically configured to:
receive the first message in the independent transmission manner in the first time unit based on the second information.

In a possible implementation, the transceiver unit 1402 is specifically configured to:
receive the first message in the independent transmission manner in the first time unit based on the first information.

In a possible implementation, the first time unit is located after the P unavailable time units.

In a possible implementation, the transceiver unit 1402 is further configured to:
receive or detect third information in a time unit located before the first time unit, where the third information is for determining that a receiving parameter is a first receiving parameter.

The transceiver unit 1402 is specifically configured to:
receive the first message based on the first receiving parameter in the independent transmission manner in the first time unit.

In a possible implementation, each of first time units includes a DMRS.

In a possible implementation, a part of the first time units include no DMRS.

In a possible implementation, the transceiver unit 1402 is specifically configured to:
receive the first message in the independent transmission manner in a time unit that includes a DMRS and that is in the first time units.

In a possible implementation, the transceiver unit 1402 is specifically configured to:
receive the first message in the independent transmission manner in the first time unit at a first frequency domain position, where the N consecutive time units are configured to receive the first message in the joint transmission manner at a second frequency domain position or a third frequency domain position, and the first frequency domain position is different from at least one of the second frequency domain position and the third frequency domain position.

In a possible implementation, the N consecutive time units further include a second time unit different from the first time unit, the second time unit does not include the P unavailable time units, and the transceiver unit is further configured to:
receive the first message in the independent transmission manner in the second time unit at the first frequency domain position, the second frequency domain position, the third frequency domain position, or a fourth frequency domain position.

In a possible implementation, the processing unit 1401 is further configured to:

determine a first index value, where the first index value is for determining a frequency domain position at which the first message is sent in the N consecutive time units;

determine a second index value, where the first index value is for determining a frequency domain position at which the first message is sent in the first time unit; and/or

determine a third index value, where the first index value is for determining a frequency domain position at which the first message is sent in the second time unit.

In a possible implementation, the processing unit 1401 is further configured to:

determine a fourth index value based on a target index value, where the fourth index value is for determining a frequency domain position in a time unit after the N consecutive time units, and the target index value includes the first index value or the second index value.

In a possible implementation,

a frequency hopping granularity of the first time unit is each time unit.

In a possible implementation, a first repetition count of the first message indicating that the N consecutive time units are configured to receive in the joint transmission manner is 1. Before the receiving the first message in an independent transmission manner in a first time unit, the processing unit 1401 is further configured to:

determine a second repetition count of the first message based on a comparison between a ratio of M to N and a first threshold, where M is a quantity of time units in the N consecutive time units, different from the P unavailable time units, and consecutive in time domain, and the second repetition count is greater than or equal to 1.

In another possible implementation solution,

the processing unit 1401 is configured to determine whether there is an overlapping partial time domain resource in a first time domain resource and a second time domain resource, where the first time domain resource is for transmitting first information carried on a first channel, and the second time domain resource is for carrying a second channel.

The transceiver unit 1402 is configured to: when the processing unit determines that there is an overlapping partial time domain resource in the first time domain resource and the second time domain resource, receive, on the overlapping partial time domain resource, a part or all of the first information carried on the first channel.

Optionally, second information carried on the second channel is repeatedly transmitted in each time unit in the second time domain resource for one or more times.

Optionally, the first channel and the second channel have a same priority or different priorities.

Optionally, the first channel is a physical uplink shared channel PUSCH, and the second channel is a physical uplink control channel PUCCH.

Optionally, a subcarrier spacing of the first time domain resource is the same as or different from a subcarrier spacing of the second time domain resource.

Optionally, a channel type of the first channel is the same as or different from a channel type of the second channel.

Optionally, the first channel is for uplink transmission, sidelink transmission, and downlink transmission.

Optionally, the second channel is for uplink transmission, sidelink transmission, and downlink transmission.

Optionally, the communication apparatus determines the first time domain resource and the second time domain resource in a configuration or preconfiguration manner.

Optionally, the first information includes a MAC protocol data unit (MAC PDU), and the MAC PDU may be a padding MAC PDU (Padding MAC PDU).

In a possible implementation,

the processing unit 1401 is further configured to: when determining that there is no overlapping partial time domain resource in the first time domain resource and the second time domain resource, cancel receiving the first information carried on the first channel.

In a possible implementation,

the transceiver unit 1402 is specifically configured to receive, on a third time domain resource, the first information carried on the first channel, where the third time domain resource is located in the first time domain resource, and is different from the overlapping partial time domain resource.

In a possible implementation, a repetition of the first information carried on the first channel is a first repetition, and the processing unit 1401 is specifically configured to:

determine whether a time domain resource on which the first repetition is located and the second time domain resource overlap; and

if yes, determine that there is an overlapping partial time domain resource in the first time domain resource and the second time domain resource; or

if no, determine that there is no overlapping partial time domain resource in the first time domain resource and the second time domain resource.

In a possible implementation, a repetition of the first information carried on the first channel is a first repetition, and the processing unit 1401 is specifically configured to:

determine whether the 1st time unit of a time domain resource on which the first repetition is located and the second time domain resource overlap; and

if yes, determine that there is an overlapping partial time domain resource in the first time domain resource and the second time domain resource; or

if no, determine that there is no overlapping partial time domain resource in the first time domain resource and the second time domain resource.

In a possible implementation, a repetition of the first information carried on the first channel is a first repetition, and the processing unit 1401 is specifically configured to:

determine whether a time unit whose redundancy version value is 0 and that is in a time domain resource on which the first repetition is located and the second time domain resource overlap; and

if yes, determine that there is an overlapping partial time domain resource in the first time domain resource and the second time domain resource; or

if no, determine that there is no overlapping partial time domain resource in the first time domain resource and the second time domain resource.

In a possible implementation, the processing unit 1401 is further configured to:
determine first indication information, where the first indication information indicates a repetition type of the first information carried on the first channel.

The transceiver unit 1402 is specifically configured to:
receive, on the overlapping partial time domain resource based on the repetition type, the part or all of the first information carried on the first channel.

In another possible implementation solution,
the processing unit 1401 is configured to determine first indication information, where the first indication information indicates to send N repetitions on a first channel on a first time domain resource, and N is an integer greater than 1.

The transceiver unit 1402 is configured to receive M repetitions on the first channel on the first time domain resource when a second time domain resource and a third time domain resource overlap in time domain, where the second time domain resource is a time domain resource occupied by the M repetitions on the first channel, the third time domain resource is a time domain resource occupied by one or more second channels, and M is an integer greater than or equal to 1 and less than or equal to N.

Optionally, second information carried on the second channel is repeatedly transmitted in each time unit in the third time domain resource for one or more times.

Optionally, the first channel and the second channel have a same priority or different priorities.

Optionally, the first channel is a physical uplink shared channel PUSCH, and the second channel is a physical uplink control channel PUCCH.

Optionally, a subcarrier spacing of the first time domain resource is the same as or different from a subcarrier spacing of the second time domain resource.

Optionally, a channel type of the first channel is the same as or different from a channel type of the second channel.

Optionally, the first channel is for uplink transmission, sidelink transmission, and downlink transmission.

Optionally, the second channel is for uplink transmission, sidelink transmission, and downlink transmission.

Optionally, the first channel is the same as the second channel, or the first channel is different from the second channel.

Optionally, the communication apparatus determines the first time domain resource and the second time domain resource in a configuration or preconfiguration manner.

Optionally, the first channel is a legitimate first channel. To be specific, the first time domain resource for receiving the first channel is not occupied by another configuration or channel.

Optionally, the N repetitions on the first channel include a MAC protocol data unit (MAC PDU) repeated for N times, and the MAC PDU may be a padding MAC PDU (Padding MAC PDU).

In a possible implementation, the processing unit 1401 is further configured to:
cancel receiving of the first channel when the second time domain resource and the third time domain resource do not overlap in time domain.

Optionally, that receiving of the first channel is canceled indicates that receiving of at least one repetition on the first channel is canceled, that receiving of the N repetitions on the first channel is canceled, or that receiving of information or a signal carried on the first channel is canceled.

In a possible implementation, the transceiver unit 1402 is specifically configured to:
receive the M repetitions on the first channel on the second time domain resource.

In a possible implementation, the transceiver unit 1402 is further configured to:
receive N-M repetitions on the first channel on a fourth time domain resource, where the fourth time domain resource is in the first time domain resource, and is different from the second time domain resource.

In a possible implementation, the transceiver unit 1402 receives the M repetitions on the first channel on the first time domain resource when at least one of the following conditions is met:

A time domain resource on which any one of the N repetitions is located and the third time domain resource overlap;

a time domain resource on which the 1st repetition in the N repetitions is located and the third time domain resource overlap; or

a time domain resource on which a repetition whose redundancy version RV value is 0 and that is in the N repetitions is located and the third time domain resource overlap.

It should be noted that, for content such as an information execution process of the units in the communication apparatus 1400, refer to the descriptions in the foregoing method embodiments of this application. Details are not described herein again.

FIG. 15 shows the communication apparatus in the foregoing embodiments according to an embodiment of this application. The communication apparatus may be specifically the transmitting device or the receiving device in the foregoing embodiments (when the communication apparatus is implemented by using a terminal device or a component of the terminal device). In a possible schematic diagram of a logical structure of the communication apparatus 1500, the communication apparatus 1500 may include but is not limited to at least one processor 1501 and a communication port 1502. Further optionally, the apparatus may further include at least one of a memory 1503 and a bus 1504. In this embodiment of this application, the at least one processor 1501 is configured to perform control processing on an action of the communication apparatus 1500.

In addition, the processor 1501 may be a central processing unit, a general purpose processor, a digital signal processor, an application-specific integrated circuit, a field programmable gate array or another programmable logic device, a transistor logic device, a hardware component, or any combination thereof. The processor 1501 may implement or execute various example logical blocks, modules, and circuits described with reference to content disclosed in this application. Alternatively, the processor may be a combination of processors implementing a computing function, for example, a combination of one or more microprocessors or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be noted that the communication apparatus shown in FIG. 15 may be specifically configured to implement the steps implemented by the transmitting device in the foregoing corresponding method embodiments, and implement the technical effects corresponding to the transmitting device. For all specific implementations of the communication apparatus shown in FIG. 15, refer to the descriptions in the foregoing method embodiments. Details are not described one by one herein again.

FIG. 16 is a schematic diagram of a structure of the communication apparatus in the foregoing embodiments according to an embodiment of this application. The communication apparatus may be specifically the transmitting device or the receiving device in the foregoing embodiments (when the communication apparatus is implemented by using a network device or a component of the network device). For the structure of the communication apparatus, refer to the structure shown in FIG. 16.

The communication apparatus includes at least one processor 1611 and at least one network interface 1614. Further optionally, the communication apparatus further includes at least one memory 1612, at least one transceiver 1613, and one or more antennas 1615. The processor 1611, the memory 1612, the transceiver 1613, and the network interface 1614 are connected to each other, for example, through a bus. In this embodiment of this application, the connection may include various types of interfaces, transmission lines, buses, or the like. This is not limited in this embodiment. The antenna 1615 is connected to the transceiver 1613. The network interface 1614 is configured to enable the communication apparatus to communicate with another communication device through a communication link. For example, the network interface 1614 may include a network interface between the communication apparatus and a core network device, for example, an S1 interface. The network interface may include a network interface between the communication apparatus and another communication apparatus (for example, another network device or core network device), for example, an X2 or Xn interface.

The processor 1611 is mainly configured to: process a communication protocol and communication data, control an entire communication apparatus, execute a software program, and process data of the software program. For example, the processor 1611 is configured to support the communication apparatus in performing the action in embodiments. The communication apparatus may include a baseband processor and a central processing unit. The baseband processor is mainly configured to process the communication protocol and the communication data. The central processing unit is mainly configured to: control an entire communication apparatus, execute the software program, and process the data of the software program. Functions of the baseband processor and the central processing unit may be integrated into the processor 1611 in FIG. 16. A person skilled in the art may understand that the baseband processor and the central processing unit each may be an independent processor, and are interconnected by using a technology such as a bus. A person skilled in the art may understand that the communication apparatus may include a plurality of baseband processors to adapt to different network standards, the communication apparatus may include a plurality of central processing units to enhance processing capabilities of the communication apparatus, and components of the communication apparatus may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be embedded in the processor, or may be stored in the memory in a form of the software program. The processor executes the software program to implement a baseband processing function.

The memory is mainly configured to store the software program and the data. The memory 1612 may exist independently, and is connected to the processor 1611. Optionally, the memory 1612 may be integrated with the processor 1611, for example, integrated into one chip. The memory 1612 can store program code for executing the technical solutions in embodiments of this application, and the processor 1611 controls the execution. Various types of executed computer program code may also be considered as drivers of the processor 1611.

FIG. 16 shows only one memory and one processor. In an actual terminal device, there may be a plurality of processors and a plurality of memories. The memory may also be referred to as a storage medium, a storage device, or the like. The memory may be a storage element located on a same chip as the processor, namely, an on-chip storage element, or may be an independent storage element. This is not limited in this embodiment of this application.

The transceiver 1613 may be configured to support receiving or sending of a radio frequency signal between the communication apparatus and a terminal, and the transceiver 1613 may be connected to the antenna 1615. The transceiver 1613 includes a transmitter Tx and a receiver Rx. Specifically, the one or more antennas 1615 may receive a radio frequency signal. The receiver Rx in the transceiver 1613 is configured to: receive the radio frequency signal from the antenna, convert the radio frequency signal into a digital baseband signal or a digital intermediate frequency signal, and provide the digital baseband signal or the digital intermediate frequency signal for the processor 1611, so that the processor 1611 further processes the digital baseband signal or the digital intermediate frequency signal, for example, performs demodulation processing and decoding processing. In addition, the transmitter Tx in transceiver 1613 is further configured to: receive a modulated digital baseband signal or digital intermediate frequency signal from the processor 1611, convert the modulated digital baseband signal or digital intermediate frequency signal into a radio frequency signal, and send the radio frequency signal through the one or more antennas 1615. Specifically, the receiver Rx may selectively perform one or more levels of frequency down-mixing processing and analog-to-digital conversion processing on the radio frequency signal to obtain the digital baseband signal or the digital intermediate frequency signal. A sequence of the frequency down-mixing processing and the analog-to-digital conversion processing is adjustable. The transmitter Tx may selectively perform one or more levels of frequency up-mixing processing and digital-to-analog conversion processing on the modulated digital baseband signal or digital intermediate frequency signal to obtain the radio frequency signal. A sequence of the frequency up-mixing processing and the digital-to-analog conversion processing is adjustable. The digital baseband signal and the digital intermediate frequency signal may be collectively referred to as a digital signal.

The transceiver may also be referred to as a transceiver unit, a transceiver apparatus, or the like. Optionally, a component that is configured to implement a receiving function and that is in the transceiver unit may be considered as a receiving unit, and a component that is configured to implement a sending function and that is in the transceiver unit may be considered as a sending unit. That is, the transceiver unit includes the receiving unit and the sending unit. The receiving unit may also be referred to as a receiver, an input port, a receiving circuit, or the like. The sending unit may be referred to as a transmitter, a transmitting circuit, or the like.

It should be noted that the communication apparatus shown in FIG. 16 may be specifically configured to implement the steps implemented by the network device in the foregoing method embodiments, and implement the technical effects corresponding to the network device. For all specific implementations of the communication apparatus shown in FIG. 16, refer to the descriptions in the foregoing method embodiments. Details are not described one by one herein again.

An embodiment of this application further provides a computer-readable storage medium that stores one or more computer-executable instructions. When the computer-executable instructions are executed by a processor, the processor performs the method in the possible implementations of the communication apparatus (when the communication apparatus is implemented by using a terminal device) in the foregoing embodiments.

An embodiment of this application further provides a computer-readable storage medium that stores one or more computer-executable instructions. When the computer-executable instructions are executed by a processor, the processor performs the method in the possible implementations of the communication apparatus (when the communication apparatus is implemented by using a network device) in the foregoing embodiments.

An embodiment of this application further provides a computer program product (which is also referred to as a computer program) that stores one or more computers. When the computer program product is executed by a processor, the processor performs the method in the possible implementations of the foregoing communication apparatus (when the communication apparatus is implemented by using a terminal device).

An embodiment of this application further provides a computer program product that stores one or more computers. When the computer program product is executed by a processor, the processor performs the method in the possible implementations of the foregoing communication apparatus (when the communication apparatus is implemented by using a network device).

An embodiment of this application further provides a chip system. The chip system includes at least one processor, configured to support a terminal device in implementing the function in the possible implementations of the foregoing communication apparatus (when the communication apparatus is implemented by using the terminal device). Optionally, the chip system further includes an interface circuit. The interface circuit provides program instructions and/or data for the at least one processor. In a possible design, the chip system may further include a memory. The memory is configured to store program instructions and data that are necessary for the terminal device. The chip system may include a chip, or may include the chip and another discrete component.

An embodiment of this application further provides a chip system. The chip system includes at least one processor, configured to support a network device in implementing the function in the possible implementations of the foregoing communication apparatus (when the communication apparatus is implemented by using the network device). Optionally, the chip system further includes an interface circuit. The interface circuit provides program instructions and/or data for the at least one processor. In a possible design, the chip system may further include a memory. The memory is configured to store program instructions and data that are necessary for the network device. The chip system may include a chip, or may include the chip and another discrete component. The network device may be specifically the network device in the foregoing method embodiments.

An embodiment of this application further provides a communication system. A network system architecture includes the communication apparatus (including a terminal device and a network device) in any one of the foregoing embodiments.

In the several embodiments provided in this application, it should be understood that the disclosed system, apparatus, and method may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected based on an actual requirement to achieve the objectives of the solutions in embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions in this application essentially, the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods in embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

**Claims**

1. A communication method, comprising:

   determining first information, wherein the first information indicates that N consecutive time units are configured for sending a first message in a joint transmission manner, and N is an integer greater than 1; and
   sending the first message in the joint transmission manner in M consecutive time units, wherein there are P unavailable time units in the N consecutive time units, the M consecutive time units are a part of the N consecutive time units, the M consecutive time units do not comprise the P unavailable time units, M is an integer greater than 1, and P is an integer greater than 0.

2. The method according to claim 1, wherein the first information comprises configuration information, and the configuration information comprises at least one of the following:

   a value of N;
   at least one demodulation reference signal pattern corresponding to a value of N;
   a value of M;
   at least one demodulation reference signal pattern corresponding to a value of M; or
   a first frequency hopping parameter for sending the first message.

3. The method according to claim 1 or 2, wherein the sending the first message in the joint transmission manner in M consecutive time units comprises:
   sending the first message in the joint transmission manner in the M consecutive time units based on a configured grant.

4. The method according to any one of claims 1 to 3, wherein the method further comprises:

   receiving second information, wherein the second information indicates a first demodulation reference signal pattern, and the first demodulation reference signal pattern is one of the at least one demodulation reference signal pattern corresponding to the value of N or one of the at least one demodulation reference signal pattern corresponding to the value of M; and
   the sending the first message in the joint transmission manner in M consecutive time units comprises:
   sending the first message in the joint transmission manner in the M consecutive time units based on the second information.

5. The method according to any one of claims 1 to 4, wherein the sending the first message in the joint transmission manner in M consecutive time units comprises:
   sending the first message in the joint transmission manner in the M consecutive time units based on the first information.

6. The method according to any one of claims 1 to 5, wherein the M consecutive time units are located after the P unavailable time units.

7. The method according to claim 6, wherein the method further comprises:

   receiving or detecting third information in a time unit located before the M consecutive time units, wherein the third information is for determining that a transmitting parameter is a first sending parameter; and
   the sending the first message in the joint transmission manner in M consecutive time units comprises:
   sending the first message based on the first sending parameter in the joint transmission manner in the M consecutive time units.

8. The method according to any one of claims 1 to 7, wherein each of the M consecutive time units comprises a DMRS.

9. The method according to any one of claims 1 to 8, wherein a part of the M consecutive time units comprise no DMRS.

10. The method according to claim 9, wherein both the 1st time unit and the last time unit in the M consecutive time units comprise a DMRS.

11. The method according to any one of claims 1 to 10, wherein the sending the first message in the joint transmission manner in M consecutive time units comprises:
sending the first message in the joint transmission manner in the M consecutive time units at a first frequency domain position.

12. The method according to claim 11, wherein the N consecutive time units are configured for sending the first message in the joint transmission manner at a second frequency domain position or a third frequency domain position, and the first frequency domain position is different from at least one of the second frequency domain position and the third frequency domain position.

13. The method according to claim 12, wherein the N consecutive time units further comprise K consecutive time units that are non-consecutive to the M consecutive time units, the K consecutive time units do not comprise the P unavailable time units, and the method further comprises:
sending the first message in the joint transmission manner in the K consecutive time units at the first frequency domain position, the second frequency domain position, the third frequency domain position, or a fourth frequency domain position, wherein the fourth frequency domain position is different from the first frequency domain position.

14. The method according to claim 13, wherein before the sending the first message in the joint transmission manner in M consecutive time units, the method further comprises:

determining a first index value, wherein the first index value is for determining a frequency domain position at which the first message is sent in the N consecutive time units;
determining a second index value, wherein the first index value is for determining a frequency domain position at which the first message is sent in the M consecutive time units; and/or
determining a third index value, wherein the first index value is for determining a frequency domain position at which the first message is sent in the K consecutive time units.

15. The method according to claim 14, wherein the method further comprises:
determining a fourth index value based on a target index value, wherein the fourth index value is for determining a frequency domain position in a time unit after the N consecutive time units, and the target index value comprises the first index value or the second index value.

16. The method according to any one of claims 1 to 15, wherein the method further comprises:
sending the first message in an independent transmission manner in a first time unit, wherein the first time unit is at least one of the N consecutive time units, the first time unit is different from the P time units, the second time unit is non-consecutive to the M consecutive time units, and the independent transmission manner is different from the joint transmission manner.

17. The method according to any one of claims 1 to 16, wherein a first repetition count of the first message indicating that the N consecutive time units are configured for sending in the joint transmission manner is 1; and
before the sending the first message in the joint transmission manner in M consecutive time units, the method comprises:
determining a second repetition count of the first message based on a comparison between a ratio of M to N and a first threshold, wherein the second repetition count is greater than or equal to 1.

18. The method according to any one of claims 1 to 17, wherein the first message comprises uplink information, sidelink information, or downlink information.

19. A communication method, comprising:

determining first information, wherein the first information indicates that N consecutive time units are configured to receive a first message in a joint transmission manner, and N is an integer greater than 1; and
receiving the first message in the joint transmission manner in M consecutive time units, wherein there are P unavailable time units in the N consecutive time units, the M consecutive time units are a part of the N consecutive time units, the M consecutive time units do not comprise the P unavailable time units, M is an integer greater than 1, and P is an integer greater than 0.

20. A communication method, comprising:

determining first information, wherein the first information indicates that N consecutive time units are configured for sending a first message in a joint transmission manner, and N is an integer greater than 1; and
sending the first message in an independent transmission manner in a first time unit, wherein there are P unavailable time units in the N consecutive time units, the first time unit is different from the P unavailable time units, the independent transmission manner is different from the joint transmission manner, and P is an integer greater than 0.

21. A communication method, comprising:

determining first information, wherein the first information indicates that N consecutive time units are configured to receive a first message in a joint transmission manner, and N is an integer greater than 1; and
receiving the first message in an independent transmission manner in a first time unit, wherein there are P unavailable time units in the N consecutive time units, the first time unit is different from the P unavailable time units, the independent transmission manner is different from the joint transmission manner, and P is an integer greater than 0.

22. A communication apparatus, comprising a processing unit and a transceiver unit, wherein

the processing unit is configured to determine first information, wherein the first information indicates that N consecutive time units are configured for sending a first message in a joint transmission manner, and N is an integer greater than 1; and
the transceiver unit is configured to send the first message in the joint transmission manner in M consecutive time units, wherein there are P unavailable time units in the N consecutive time units, the M consecutive time units are a part of the N consecutive time units, the M consecutive time units do not comprise the P unavailable time units, M is an integer greater than 1, and P is an integer greater than 0.

23. A communication apparatus, comprising a processing unit and a transceiver unit, wherein

the processing unit is configured to determine first information, wherein the first information indicates that N consecutive time units are configured to receive a first message in a joint transmission manner, and N is an integer greater than 1; and
the transceiver unit is configured to receive the first message in the joint transmission manner in M consecutive time units, wherein there are P unavailable time units in the N consecutive time units, the M consecutive time units are a part of the N consecutive time units, the M consecutive time units do not comprise the P unavailable time units, M is an integer greater than 1, and P is an integer greater than 0.

24. A communication apparatus, comprising a processing unit and a transceiver unit, wherein

the processing unit is configured to determine first information, wherein the first information indicates that N consecutive time units are configured for sending a first message in a joint transmission manner, and N is an integer greater than 1; and
the transceiver unit is configured to send the first message in an independent transmission manner in a first time unit, wherein there are P unavailable time units in the N consecutive time units, the first time unit is different from the P unavailable time units, the independent transmission manner is different from the joint transmission manner, and P is an integer greater than 0.

25. A communication apparatus, comprising a processing unit and a transceiver unit, wherein

the processing unit is configured to determine first information, wherein the first information indicates that N consecutive time units are configured to receive a first message in a joint transmission manner, and N is an integer greater than 1; and
the transceiver unit is configured to receive the first message in an independent transmission manner in a first time unit, wherein there are P unavailable time units in the N consecutive time units, the first time unit is different from the P unavailable time units, the independent transmission manner is different from the joint transmission manner, and P is an integer greater than 0.

26. A communication apparatus, comprising at least one processor and an interface circuit, wherein

the interface circuit is configured to provide a program or instructions for the at least one processor; and
the at least one processor is configured to execute the program or the instructions, to enable the communication apparatus to implement the method according to any one of claims 1 to 18.

27. A communication apparatus, comprising at least one processor and an interface circuit, wherein

the interface circuit is configured to provide a program or instructions for the at least one processor; and
the at least one processor is configured to execute the program or the instructions, to enable the communication apparatus to implement the method according to claim 19.

28. A communication apparatus, comprising at least one processor and an interface circuit, wherein

the interface circuit is configured to provide a program or instructions for the at least one processor; and
the at least one processor is configured to execute the program or the instructions, to enable the communication apparatus to implement the method according to claim 20.

29. A communication apparatus, comprising at least one processor and an interface circuit, wherein

the interface circuit is configured to provide a program or instructions for the at least one processor; and
the at least one processor is configured to execute the program or the instructions, to enable the communication apparatus to implement the method according to claim 21.

30. A computer-readable storage medium, wherein the computer-readable storage medium stores instructions; and when the instructions are executed by a computer, the method according to any one of claims 1 to 18, the method according to claim 19, the method according to claim 20, or the method according to claim 21 is implemented.

Slot          ▮ PUSCH

FIG. 1

FIG. 2

Transmitting device

Receiving device

S101: Determine first information

S102: Send target information based on the first information

FIG. 3

Scenario a

P

M

1  2  3  4  5  6  7  8  9  .  .  .  N–1  N

Scenario b

M

P

1  2  3  4  5  6  7  8  9  .  .  .  N–1  N

Scenario c

M

P

M

1  2  3  .  .  .  .  .  .  .  .  N–1  N

Unavailable time unit

Available time unit

FIG. 4-1

P       M

Scenario d

1    2    3     .    .    .    .    .    .    .    .    N–1    N

M       P

Scenario e

1    2    3     .    .    .    .    .    .    .    .    N–1    N

M      P      M

Scenario f

1    2    3     .    .    .    .    .    .    .    .    N–1    N

Unavailable time unit

Available time unit

FIG. 4-2

FIG. 4-3

FIG. 5-1

FIG. 5-2

FIG. 6-1

Processing time

Preemption message

Processing time

Preemption message

Processing time

Preemption message

Processing time

Preemption message

FIG. 6-2

FIG. 6-3

FIG. 6-4

FIG. 6-5

FIG. 6-6

FIG. 6-7

Processing
time

Preemption
message

Processing
time

Preemption
message

Processing
time

Preemption
message

Processing
time

Preemption
message

FIG. 6-8

P        P        M        P        P                    P

First time units

1      2      3      .      .      .      .      .      .      .      .      .      N–1      N

Unavailable time unit

Available time unit

FIG. 6-9

```
┌──────────┐                              ┌──────────┐
│ Terminal │                              │ Network  │
│  device  │                              │  device  │
└────┬─────┘                              └────┬─────┘
     │                                         │
     │        S201: Receive first information  │
     │◄────────────────────────────────────────│
     │                                         │
┌────┴──────────────────────────────────┐      │
│ S202: Determine N consecutive time     │      │
│ units based on the first information   │      │
└────┬──────────────────────────────────┘      │
     │                                         │
```

FIG. 7

```
        ┌──────────────┐                  ┌──────────────┐
        │ Transmitting │                  │  Receiving   │
        │    device    │                  │    device    │
        └──────┬───────┘                  └──────┬───────┘
               │                                 │
┌──────────────┴──────────────┐                  │
│ S301: Determine first        │                  │
│ indication information       │                  │
└──────────────┬──────────────┘                  │
               │                                 │
               │  S302: Send M repetitions on a first
               │  channel on a first time domain
               │  resource when a second time domain ──►
               │  resource and a third time domain
               │  resource overlap in time domain
               │                                 │
```

FIG. 8

| Slot N | Slot N+1 | Slot N+2 | Slot N+3 |
|--------|----------|----------|----------|
| PUSCH | PUSCH | PUSCH | PUSCH |
|  | PUCCH_1 carries UCI_1 | PUCCH_2 carries UCI_2 |  |

No data is generated, and the PUSCH and PUCCH overlap in time domain in any slot in the slots N to N+3

| Slot N | Slot N+1 | Slot N+2 | Slot N+3 |
|--------|----------|----------|----------|
| The PUSCH carries a MAC PDU | The PUSCH carries a MAC PDU and UCI_1 | The PUSCH carries a MAC PDU and UCI_2 | The PUSCH carries a MAC PDU |

FIG. 9-1

Slot N | Slot N+1 | Slot N+2

| PUSCH | PUSCH | PUSCH | PUSCH | PUSCH | PUSCH |

Actual transmission 1 | Actual transmission 2 | Actual transmission 3 | Actual transmission 4 | Actual transmission 5 | Actual transmission 6

PUCCH_1 carries UCI_1

PUCCH_2 carries UCI_2

No data is generated, and at least one time of actual PUSCH transmission and the PUCCH overlap in time domain

Slot N | Slot N+1 | Slot N+2

| The PUSCH carries a MAC PDU | The PUSCH carries a MAC PDU | The PUSCH carries a MAC PDU and UCI_1 | The PUSCH carries a MAC PDU | | The PUSCH carries a MAC PDU and UCI_2 |

The PUSCH carries a MAC PDU

FIG. 9-2

| Slot N | Slot N+1 | Slot N+2 | Slot N+3 |
|---|---|---|---|
| A PUSCH has a low priority | A PUSCH has a low priority | A PUSCH has a low priority | A PUSCH has a low priority |
| | PUCCH_1 carries UCI_1, and has a high priority | PUCCH_2 carries UCI_2, and has a low priority | |

No data is generated, and the PUSCH and PUCCH overlap in time domain in any slot in the slots N to N+3

| Slot N | Slot N+1 | Slot N+2 | Slot N+3 |
|---|---|---|---|
| The PUSCH carries a MAC PDU | | The PUSCH carries a MAC PDU and UCI_2 | The PUSCH carries a MAC PDU |
| | PUCCH_1 carries UCI_1 | | |

FIG. 10-1

Slot N | Slot N+1 | Slot N+2

A PUSCH has a low priority — Actual transmission 1

A PUSCH has a low priority — Actual transmission 2

A PUSCH has a low priority — Actual transmission 3

A PUSCH has a low priority — Actual transmission 4

A PUSCH has a low priority — Actual transmission 5

A PUSCH has a low priority — Actual transmission 6

PUCCH_1 carries UCI_1, and has a high priority

PUCCH_2 carries UCI_2, and has a low priority

No data is generated, and at least one time of actual PUSCH transmission and the PUCCH overlap in time domain

The PUSCH carries a MAC PDU

The PUSCH carries a MAC PDU

PUCCH_1 carries UCI_1

The PUSCH carries a MAC PDU and UCI_2

The PUSCH carries a MAC PDU

FIG. 10-2

| Slot N | Slot N+1 | Slot N+2 | Slot N+3 |
|--------|----------|----------|----------|
| PUSCH | PUSCH | PUSCH | PUSCH |
|  | PUCCH | PUCCH |  |

No data is generated, and the
PUSCH and PUCCH overlap in
time domain in any slot in the
slots N+1 and N+2

| Slot N | Slot N+1 | Slot N+2 | Slot N+3 |
|--------|----------|----------|----------|
| The PUSCH carries a padding MAC PDU |  |  | The PUSCH carries a padding MAC PDU |
|  | PUCCH | PUCCH |  |

FIG. 11-1

| Slot N | | Slot N+1 | | Slot N+2 | |
|---|---|---|---|---|---|
| PUSCH | PUSCH | PUSCH | PUSCH | PUSCH | PUSCH |
| Actual transmission 1 | Actual transmission 2 | Actual transmission 3 | Actual transmission 4 | Actual transmission 5 | Actual transmission 6 |

No data is generated, and the actual PUSCH transmission 4 and the actual PUSCH transmission 6 respectively overlap the repeated PUCCHs in time domain

| Slot N | | Slot N+1 | | Slot N+2 | |
|---|---|---|---|---|---|
| The PUSCH carries a padding MAC PDU | The PUSCH carries a padding MAC PDU | The PUSCH carries a padding MAC PDU | | | |

The PUSCH carries a padding MAC PDU

FIG. 11-2

| Slot N | Slot N+1 | Slot N+2 | Slot N+3 |
|--------|----------|----------|----------|
| PUSCH | PUSCH | PUSCH | PUSCH |
| PUCCH | | | |

No data is generated, and the PUSCH and PUCCH overlap in time domain in the 1$^{st}$ slot (the slot N) in which the PUSCH is repeatedly sent

| Slot N | Slot N+1 | Slot N+2 | Slot N+3 |
|--------|----------|----------|----------|
| The PUSCH carries a padding MAC PDU and UCI | The PUSCH carries a padding MAC PDU | The PUSCH carries a padding MAC PDU | The PUSCH carries a padding MAC PDU |

FIG. 12-1

| Slot N | Slot N+1 | Slot N+2 | Slot N+3 |
|--------|----------|----------|----------|
| PUSCH | PUSCH | PUSCH | PUSCH |
| | PUCCH | | |

No data is generated, and the PUSCH and PUCCH do not overlap in time domain in the 1$^{st}$ slot (the slot N) in which the PUSCH is repeatedly sent

| Slot N | Slot N+1 | Slot N+2 | Slot N+3 |
|--------|----------|----------|----------|
| | PUCCH | | |

FIG. 12-2

| Slot N | Slot N+1 | Slot N+2 | Slot N+3 |
|---|---|---|---|
| A PUSCH has a low priority | A PUSCH has a low priority | A PUSCH has a low priority | A PUSCH has a low priority |
| A PUCCH has a high priority | | | |

No data is generated, and the PUSCH and PUCCH overlap in time domain in the 1$^{st}$ slot (the slot N) in which the PUSCH is repeatedly sent

| Slot N | Slot N+1 | Slot N+2 | Slot N+3 |
|---|---|---|---|
| | The PUSCH carries a padding MAC PDU | The PUSCH carries a padding MAC PDU | The PUSCH carries a padding MAC PDU |
| PUCCH | | | |

FIG. 12-3

| Slot N | Slot N+1 | Slot N+2 | Slot N+3 |
|---|---|---|---|
| PUSCH | PUSCH | PUSCH | PUSCH |
| | PUCCH_1 carries UCI_1 | PUCCH_2 carries UCI_2 | |

No data is generated, and the PUSCH and PUCCH overlap in time domain in any slot in the slots N+1 and N+2

| Slot N | Slot N+1 | Slot N+2 | Slot N+3 |
|---|---|---|---|
| | The PUSCH carries a padding MAC PDU and UCI_1 | The PUSCH carries a padding MAC PDU and UCI_2 | |

FIG. 12-4

Slot N — PUSCH — Actual transmission 1

Slot N — PUSCH — Actual transmission 2

Slot N+1 — PUSCH — Actual transmission 3

Slot N+1 — PUSCH — Actual transmission 4

Slot N+2 — PUS CH — Actual transmission 5

Slot N+2 — PUSCH — Actual transmission 6

PUCCH_1 carries UCI_1

PUCCH_2 carries UCI_2

No data is generated, and the actual PUSCH transmission 3 and the actual PUSCH transmission 6 overlap the PUCCHs in time domain

Slot N — The PUSCH carries a padding MAC PDU and UCI_1

Slot N+1

Slot N+2 — The PUSCH carries a padding MAC PDU and UCI_2

FIG. 12-5

1300

Communication apparatus

1301

Processing
unit

1302

Transceiver
unit

FIG. 13

1400

Communication apparatus

1401

Processing
unit

1402

Transceiver
unit

FIG. 14

1500

Communication apparatus

1502

Communication
port

1501

Processor

1504

1503

Memory

FIG. 15

FIG. 16

## INTERNATIONAL SEARCH REPORT

| | |
|---|---|
| International application No. | |
| | **PCT/CN2021/072326** |

**A. CLASSIFICATION OF SUBJECT MATTER**

H04W 72/04(2009.01)i; H04W 28/16(2009.01)i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNKI, CNPAT, EPODOC, WPI, 3GPP: 连续, 绑定, 捆绑, 时间, 传输时间间隔, 联合传输, 独立传输, 可用, 不可用, 解调参考信号, joint, bundling, continous, time, TTI, joint transmission, independent transmission, available, unavailable, DMRS

**C. DOCUMENTS CONSIDERED TO BE RELEVANT**

| Category* | Citation of document, with indication, where appropriate, of the relevant passages | Relevant to claim No. |
|---|---|---|
| X | CN 110139242 A (TELECOMMUNICATIONS SCIENCE AND TECHNOLOGY RESEARCH INSTITUTE CO., LTD.) 16 August 2019 (2019-08-16) description, paragraphs [0146]-[0215] and [0244]-[0247] | 1-30 |
| A | CN 109474990 A (HUAWEI TECHNOLOGIES CO., LTD.) 15 March 2019 (2019-03-15) entire document | 1-30 |
| A | CN 103428775 A (ZTE CORPORATION) 04 December 2013 (2013-12-04) entire document | 1-30 |
| A | US 2019373607 A1 (QUALCOMM INC.) 05 December 2019 (2019-12-05) entire document | 1-30 |
| A | CN 112153740 A (HUAWEI TECHNOLOGIES CO., LTD.) 29 December 2020 (2020-12-29) entire document | 1-30 |
| A | LG ELECTRONICS. "UL control related techniques for LTE URLLC" *3GPP TSG RAN WG1 Meeting #92 R1-1802182*, 02 March 2018 (2018-03-02), entire document | 1-30 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 October 2021** | **26 October 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/072326**

| Patent document cited in search report | | | Publication date (day/month/year) | Patent family member(s) | | | Publication date (day/month/year) |
|---|---|---|---|---|---|---|---|
| CN | 110139242 | A | 16 August 2019 | WO | 2019154274 | A1 | 15 August 2019 |
| CN | 109474990 | A | 15 March 2019 | WO | 2019047937 | A1 | 14 March 2019 |
| | | | | EP | 3672340 | A1 | 24 June 2020 |
| | | | | US | 2020213035 | A1 | 02 July 2020 |
| CN | 103428775 | A | 04 December 2013 | None | | | |
| US | 2019373607 | A1 | 05 December 2019 | EP | 3804190 | A1 | 14 April 2021 |
| | | | | US | 2021168797 | A1 | 03 June 2021 |
| | | | | CN | 112514295 | A | 16 March 2021 |
| | | | | WO | 2019236366 | A1 | 12 December 2019 |
| CN | 112153740 | A | 29 December 2020 | None | | | |

Form PCT/ISA/210 (patent family annex) (January 2015)